(19) Europäisches Patentamt
European Patent Office
Office européen des brevets

(11) EP 1 771 067 B1

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(21) Anmeldenummer: **05776440.9**

(22) Anmeldetag: **18.07.2005**

(51) Int Cl.:
***A01N 35/06*** (2006.01) ***A01N 43/08*** (2006.01)
***A01N 43/10*** (2006.01) ***A01N 43/16*** (2006.01)
***A01N 43/36*** (2006.01) ***A01N 43/38*** (2006.01)
***A01P 7/02*** (2006.01) ***A01P 7/04*** (2006.01)
***A01N 25/32*** (2006.01)

(86) Internationale Anmeldenummer:
**PCT/EP2005/007794**

(87) Internationale Veröffentlichungsnummer:
**WO 2006/008111 (26.01.2006 Gazette 2006/04)**

(54) **SELEKTIVE INSEKTIZIDE AUF BASIS VON SUBSTITUIERTEN, CYCLISCHEN KETOENOLEN UND SAFENERN**

SELECTIVE INSECTICIDES BASED ON SUBSTITUTED, CYCLIC KETO-ENOLS AND SAFENERS

INSECTICIDES SELECTIFS A BASE DE CETO-ENOLS CYCLIQUES SUBSTITUES ET DE PHYTOPROTECTEURS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.07.2004 DE 102004035133**

(43) Veröffentlichungstag der Anmeldung:
**11.04.2007 Patentblatt 2007/15**

(73) Patentinhaber: **BAYER CROPSCIENCE AG**
**40789 Monheim (DE)**

(72) Erfinder:
- **FISCHER, Reiner**
  **40789 Monheim (DE)**
- **RECKMANN, Udo**
  **50823 Köln (DE)**
- **ROSINGER, Christopher, Hugh**
  **65719 Hofheim am Taunus (DE)**
- **SANWALD, Erich**
  **24159 Kiel (DE)**
- **ARNOLD, Christian**
  **40764 Langenfeld (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**WO-A-01/17972**
**WO-A-95/07897**
**WO-A-99/16744**
**WO-A-99/43649**
**WO-A-03/013249**
**WO-A-03/062244**
**WO-A-2004/065366**
**WO-A-2004/080962**
**WO-A-2004/111042**
**WO-A-2005/044791**
**WO-A-2005/044796**
**WO-A-2005/048710**
**WO-A-2005/049569**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 771 067 B1

## Beschreibung

Die Erfindung betrifft die Verwendung selektiver insektizid und/oder akarizid wirksamer Wirkstoffkombinationen, die substituierte, cyclische Ketoenole einerseits und zumindest eine die Kulturpflanzen-Verträglichkeit verbessernde Verbindung andererseits enthalten zur selektiven Insekten- und/oder Spinnmilbenbekämpfung in verschiedenen Nutzpflanzenkulturen.

Von 3-Acyl-pyrrolidin-2,4-dionen sind pharmazeutische Eigenschaften vorbeschrieben (S. Suzuki et al. Chem. Pharm. Bull. 15 1120 (1967)). Weiterhin wurden N-Phenylpyrrolidin-2,4-dione von R. Schmierer und H. Mildenberger (Liebigs Ann. Chem. 1985, 1095) synthetisiert. Eine biologische Wirksamkeit dieser Verbindungen wurde nicht beschrieben.

In EP-A-0 262 399 und GB-A-2 266 888 werden ähnlich strukturierte Verbindungen (3-Arylpyrrolidin-2,4-dione) offenbart, von denen jedoch keine herbizide, insektizide oder akarizide Wirkung bekannt geworden ist. Bekannt mit herbizider, insektizider oder akarizider Wirkung sind unsubstituierte, bicyclische 3-Aryl-pyrrolidin-2,4-dion-Derivate (EP-A-355 599, EP-A-415 211 und JP 12-053 670) sowie substituierte monocyclische 3-Aryl-pyrrolidin-2,4-dion-Derivate (EP-A-377 893 und EP-A-442 077).

Weiterhin bekannt sind polycyclische 3-Arylpyrrolidin-2,4-dion-Derivate (EP-A-442 073) sowie 1H-Arylpyrrolidin-dion-Derivate (EP-A-456 063, EP-A-521 334, EP-A-596 298, EP-A-613 884, EP-A-613 885, WO 94/01 997, WO 95/26 954, WO 95/20 572, EP-A-0 668 267, WO 96/25 395, WO 96/35 664, WO 97/01 535, WO 97/02 243, WO 97/36 868, WO 97/43275, WO 98/05638, WO 98/06721, WO 98/25928, WO 99/16748, WO 99/24437, WO 99/43649, WO 99/48869 und WO 99/55673, WO 01/17972, WO 01/23354, WO 01/74770, WO 03/062244, WO 04/007448, WO 04/024688, WO 04/080962, WO 04/065366, WO 04/111042, DE-A-10351646, DE-A-10354628, DE-A-10354629, DE-A-10351647).

Es ist bekannt, dass bestimmte substituierte $\Delta^3$-Dihydrofuran-2-on-Derivate herbizide Eigenschaften besitzen (vgl. DE-A-4 014 420). Die Synthese der als Ausgangsverbindungen verwendeten Tetronsäurederivate (wie z.B. 3-(2-Methyl-phenyl)-4-hydroxy-5-(4-fluorphenyl)-$\Delta^3$-dihydrofuranon-(2)) ist ebenfalls in DE-A-4 014 42,0 beschrieben. Ähnlich strukturierte Verbindungen ohne Angabe einer insektiziden und/oder akariziden Wirksamkeit sind aus der Publikation Campbell et al., J. Chem. Soc., Perkin Trans. 1, 1985, (8) 1567-76 bekannt. Weiterhin sind 3-Aryl-$\Delta^3$-dihydrofuranon-Derivate mit herbiziden, akariziden und insektiziden Eigenschaften aus EP-A-528 156, EP-A-0 647 637, WO 95/26 345, WO 96/20 196, WO 96/25 395, WO 96/35 664, WO 97/01 535, WO 97/02 243, WO 97/36 868, WO 98/05638, WO 98/25928, WO 99/16748, WO 99/43649, WO 99/48869, WO 99/55673, WO 01/23354, WO 01/74770, WO 03/062244, WO 04/024688 und WO 04/080962 bekannt. Auch 3-Aryl-$\Delta^3$-dihydrothiophen-on-Derivate sind bekannt (WO 95/26 345, 96/25 395, WO 97/01 535, WO 97/02 243, WO 97/36 868, WO 98/05638, WO 98/25928, WO 99/16748, WO 99/43649, WO 99/48869, WO 99/55673, WO 01/17972, WO 01/23354, WO 01/74770, WO 03/062244, WO 04/080962, WO 04/111042).

Bestimmte, im Phenylring unsubstituierte Phenyl-pyron-Derivate sind bereits bekannt geworden (vgl. A.M. Chirazi, T. Kappe und E. Ziegler, Arch. Pharm. 309, 558 (1976) und K.-H. Boltze und K. Heidenbluth, Chem. Ber. 91, 2849), wobei für diese Verbindungen eine mögliche Verwendbarkeit als Schädlingsbekämpfungsmittel nicht angegeben wird. Im Phenylring substituierte Phenylpyron-Derivate mit herbiziden, akariziden und insektiziden Eigenschaften sind in EP-A-588 137, WO 96/25 395, WO 96/35 664, WO 97/01 535, WO 97/02 243, WO 97/16 436, WO 97/19 941, WO 97/36 868, WO 98/05638, WO 99/43649, WO 99/48869, WO 99/55673, WO 01/17972, WO 01/74770, WO 03/062244, WO 04/080962, WO 04/111042 beschrieben.

Bestimmte, im Phenylring unsubstituierte 5-Phenyl-1,3-thiazin-Derivate sind bereits bekannt geworden (vgl. E. Ziegler und E. Steiner, Monatsh. 95, 147 (1964), R. Ketcham, T. Kappe und E. Ziegler, J. Heterocycl. Chem. 10, 223 (1973)), wobei für diese Verbindungen eine mögliche Anwendung als Schädlingsbekämpfungsmittel nicht angegeben wird. Im Phenylring substituierte 5-Phenyl-1,3-thiazin-Derivate mit herbizider, akarizider und insektizider Wirkung sind in WO 94/14 785, WO 96/23595, WO 96/35 664, WO 97/01 535, WO 97/02 243, WO 97/36 868, WO 98/05638, WO 99/43649, WO 99/48869, WO 99/55673, WO O1/17972, WO 01/74770, WO 03/062244, WO 04/080962, WO 04/111042 beschrieben.

Es ist bekannt, dass bestimmte substituierte 2-Arylcyclopentandione herbizide, insektizide und akarizide Eigenschaften besitzen (vgl. z.B. US-4 283 348; 4 338 122; 4 436 666; 4 526 723; 4 551 547; 4 632 698; WO 96/01 798; WO 96/03 366, WO 97/14 667 sowie WO 98/39281, WO 99/43649, WO 99/48869, WO 99/55673, WO 01/17972, WO 01/74770, WO 03/062244, WO 04/080962, WO 04/111042). Außerdem sind ähnlich substituierte Verbindungen bekannt; 3-Hydroxy-5,5-dimethyl-2-phenylcyclopent-2-en-1-on aus der Publikation Micklefield et al., Tetrahedron, (1992), 7519-26 sowie der Naturstoff Involutin (-)-cis-5-(3,4-dihydroxyphenyl)-3,4-dihydroxy-2-(4-hydroxyphenyl)-cyclopent-2-en-one aus der Publikation Edwards et al., J. Chem. Soc. S, (1967), 405-9. Eine insektizide oder akarizide Wirkung wird nicht beschrieben. Außerdem ist 2-(2,4,6-Trimethylphenyl)-1,3-indandion aus der Publikation J. Economic Entomology, 66, (1973), 584 und der Offenlegungsschrift DE-A 2 361 084 bekannt, mit Angabe von herbiziden und akariziden Wirkungen.

Es ist bekannt, dass bestimmte substituierte 2-Arylcyclohexandione herbizide, insektizide und akarizide Eigenschaften besitzen (US-4 175 135, 4 256 657, 4, 256 658, 4 256 659, 4 257 858, 4 283 348, 4 303 669, 4 351 666, 4 409 153, 4 436 666, 4 526 723, 4 613 617, 4 659 372, DE-A 2 813 341, sowie Wheeler, T.N., J. Org. Chem. 44, 4906 (1979)), WO 99/43649, WO 99/48869, WO 99/55673, WO 01/17972, WO 01/74770, WO 03/062244, WO 04/080962, WO 04/111042).

Es ist bekannt, dass bestimmte substituierte 4-Aryl-pyrazolidin-3,5-dione akarizide, insektizide und herbizide Eigenschaften besitzen (vgl. z.B. WO 92/16 510, EP-A-508 126, WO 96/11 574, WO 96/21 652, WO 99/47525, WO 01/17 351, WO 01/17 352, WO 01/17353, WO 01/17 972, WO 01/17 973, WO 03/028466, WO 03/062244, WO 04/080962.

Außerdem sind selektive Herbizide auf Basis von substituierten cyclischen Ketoenolen und Safenern beschrieben (WO 03/013249).

Die Verträglichkeit dieser Verbindungen insbesondere gegenüber monokotylen Kulturpflanzen ist jedoch nicht unter allen Bedingungen ganz zufriedenstellend.

Überraschenderweise wurde nun gefunden, dass bestimmte substituierte, cyclische Ketoenole bei gemeinsamer Anwendung mit den im weiteren beschriebenen, die Kulturpflanzen-Verträglichkeit verbessernden Verbindungen (Safenern/Antidots) ausgesprochen gut die Schädigung der Kulturpflanzen verhindern und besonders vorteilhaft als breit wirksame Kombinationspräparate zur selektiven Bekämpfung von Insekten auch in monokotylen Nutzpflanzenkulturen, wie z.B. in Getreide aber auch in Mais, Hirse und Reis, verwendet werden können.

Gegenstand der Erfindung ist die Verwendung selektiv insektizider und/oder akarizider Mittel enthaltend einen wirksamen Gehalt an einer Wirkstoffkombination umfassend als Komponenten

(a) mindestens ein substituiertes, cyclisches Ketoenol der Formel (I)

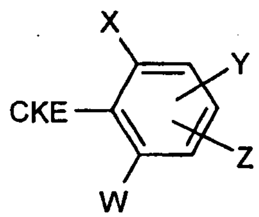

(I)

in welcher

X für Halogen, Alkyl, Alkenyl, Alkinyl, Alkoxy, Alkenyloxy, Alkylthio, Alkylsulfinyl, Alkylsulfonyl, Halogenalkyl, Halogenalkoxy, Halogenalkenyloxy, Nitro oder Cyano steht,

Z für Wasserstoff, Alkyl, Halogen, Alkenyl, Alkinyl, für jeweils gegebenenfalls substituiertes Aryl oder Hetaryl steht,

W und Y unabhängig voneinander für Wasserstoff, Halogen, Alkyl, Alkoxy, Alkenyloxy, Halogenalkyl, Halogenalkoxy, Halogenalkenyloxy, Nitro oder Cyano stehen,

CKE für eine der Gruppen

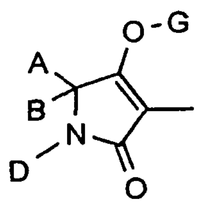

(1),

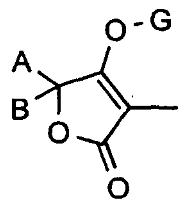

(2),

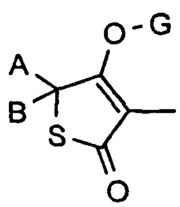

(3),

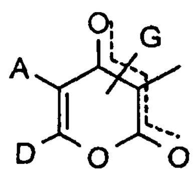

(4),

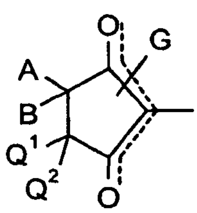 (5) oder 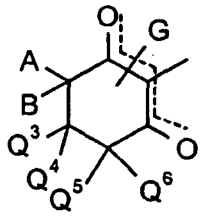 (6)

steht,

worin

A für Wasserstoff, jeweils gegebenenfalls durch Halogen substituiertes Alkyl, Alkenyl, Alkoxyalkyl, Alkylthioalkyl, gesättigtes oder ungesättigtes, gegebenenfalls substituiertes Cycloalkyl, in welchem gegebenenfalls mindestens ein Ringatom durch ein Heteroatom ersetzt ist, oder jeweils gegebenenfalls durch Halogen, Alkyl, Halogenalkyl, Alkoxy, Halogenalkoxy, Cyano oder Nitro substituiertes Aryl, Arylalkyl oder Hetaryl steht,

B für Wasserstoff, Alkyl oder Alkoxyalkyl steht, oder

A und B gemeinsam mit dem Kohlenstoffatom, an das sie gebunden sind, für einen gesättigten oder ungesättigten, gegebenenfalls mindestens ein Heteroatom enthaltenden unsubstituierten oder substituierten Cyclus stehen,

D für Wasserstoff oder einen gegebenenfalls substituierten Rest aus der Reihe Alkyl, Alkenyl, Alkinyl, Alkoxyalkyl, gesättigtes oder ungesättigtes Cycloalkyl, in welchem gegebenenfalls eines oder mehrere Ringglieder durch Heteroatome ersetzt sind, Arylalkyl, Aryl, Hetarylalkyl oder Hetaryl steht oder

A und D gemeinsam mit den Atomen an die sie gebunden sind für einen gesättigten oder ungesättigten und gegebenenfalls mindestens Heteroatom enthaltenden, im A,D-Teil unsubstituierten oder substituierten Cyclus stehen, oder

A und $Q^1$ gemeinsam für jeweils gegebenenfalls durch Hydroxy, jeweils gegebenenfalls substituiertes Alkyl, Alkoxy, Alkylthio, Cycloalkyl, Benzyloxy oder Aryl substituiertes Alkandiyl oder Alkendiyl stehen, oder

$Q^1$ für Wasserstoff oder Alkyl steht,

$Q^2$, $Q^4$, $Q^5$ und $Q^6$ unabhängig voneinander für Wasserstoff oder Alkyl stehen,

$Q^3$ für Wasserstoff, Alkyl, Alkoxyalkyl, Alkylthioalkyl, gegebenenfalls substituiertes Cycloalkyl (worin gegebenenfalls eine Methylengruppe durch Sauerstoff oder Schwefel ersetzt ist) oder gegebenenfalls substituiertes Phenyl steht, oder

$Q^3$ und $Q^4$ gemeinsam mit dem Kohlenstoffatom, an das sie gebunden sind, für einen gesättigten oder ungesättigten, gegebenenfalls ein Heteroatom enthaltenden unsubstituierten oder substituierten Cyclus stehen,

G für Wasserstoff (a) oder für eine der Gruppen

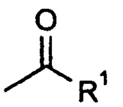 (b), 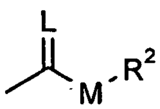 (c), 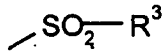 (d), 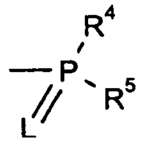 (e),

E(f) oder

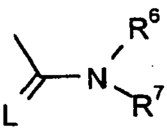 (g),

steht,

worin

E für ein Metallionäquivalent oder ein Ammoniumion steht,

L für Sauerstoff oder Schwefel steht,

M für Sauerstoff oder Schwefel steht,

$R^1$ für jeweils gegebenenfalls durch Halogen substituiertes Alkyl, Alkenyl, Alkoxyalkyl, Alkylthioalkyl,

Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,

$R^2$ für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,

$R^3$, $R^4$ und $R^5$ unabhängig voneinander für jeweils gegebenenfalls durch Halogen substituiertes Alkyl, Alkoxy, Alkylamino, Dialkylamino, Alkylthio, Alkenylthio, Cycloalkylthio und für jeweils gegebenenfalls substituiertes Phenyl, Benzyl, Phenoxy oder Phenylthio stehen,

$R^6$ und $R^7$ unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl stehen, oder gemeinsam mit dem N-Atom, an das sie gebunden sind, für einen gegebenenfalls durch Sauerstoff oder Schwefel unterbrochenen Cyclus stehen,

- einschließlich aller möglichen tautomeren Formen der Verbindungen der allgemeinen Formel (I) und der möglichen Salze bzw. Säure- oder Basen-Addukte der Verbindungen der allgemeinen Formel (I) und

(b) zumindest eine die Kulturpflanzen-Verträglichkeit verbessernde Verbindung aus der folgenden Gruppe von Verbindungen:

4-Dichloracetyl-1-oxa-4-aza-spiro[4.5]-decan (AD-67, MON-4660), 1-Dichloracetyl-hexahydro-3,3,8a-trimethylpyrrolo[1,2-a]-pyrimidin-6(2H)-on (Dicyclonon, BAS-145138), 4-Dichloracetyl-3,4-dihydro-3-methyl-2H-1,4-benzoxazin (Benoxacor), 5-Chlor-chinolin-8-oxy-essigsäure-(1-methyl-hexylester) (Cloquintocet-mexyl - vgl. auch verwandte Verbindungen in EP-A-86750, EP-A-94349, EP-A-191736, EP-A-492366), 3-(2-Chlor-benzyl)-1-(1-methyl-1-phenyl-ethyl)-harnstoff (Cumyluron), α-(Cyanomethoximino)-phenylacetonitril (Cyometrinil), 2,4-Dichlor-phenoxyessigsäure (2,4-D), 4-(2,4-Dichlor-phenoxy)-buttersäure (2,4-DB), 1-(1-Methyl-1-phenyl-ethyl)-3-(4-methyl-phenyl)-harnstoff (Daimuron, Dymron), 3,6-Dichlor-2-methoxy-benzoesäure (Dicamba), Piperidin-1-thiocarbonsäure-S-1-methyl-1-phenyl-ethylester (Dimepiperate), 2,2-Dichlor-N-(2-oxo-2-(2-propenylamino)-ethyl)-N-(2-propenyl) acetamid (DKA-24), 2,2-Dichlor-N,N-di-2-propenyl-acetamid (Dichlormid), 4,6-Dichlor-2-phenyl-pyrimidin (Fenclorim), 1-(2,4-Dichlorphenyly-5-trichlormethyl-1H-1,2,4-triazol-3-carbonsäure-ethylester (Fenchlorazole-ethyl - vgl. auch verwandte Verbindungen in EP-A-174562 und EP-A-346620), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl - vgl. auch verwandte Verbindungen in WO-A-95/07897), 1-(Ethoxycarbonyl)-ethyl-3,6-dichlor-2-methoxybenzoat (Lactidichlor), (4-Chlor-o-tolyloxy)-essigsäure (MCPA), 2-(4-Chlor-o-tolyloxy)-propionsäure (Mecoprop), Diethyl-1-(2,4-dichlor-phenyl)-4,5-dihydro-5-methyl-1H-pyrazol-3,5-dicarboxylat (Mefenpyr-diethyl - vgl. auch verwandte Verbindungen in WO-A-91/07874) 2-Dichlormethyl-2-methyl-1,3-dioxolan (MG-191), 2-Propenyl-1-oxa-4-azaspiro[4.5]decane-4-carbodithioate (MG-838), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyloxazolidin (R-29148), 4-(4-Chlor-o-tolyl)-buttersäure, 4-(4-Chlor-phenoxy)-buttersäure, Diphenylmethoxyessigsäure, Diphenylmethoxyessigsäure-methylester, Diphenylmethoxyessigsäure-ethylester, 1-(2-Chlor-phenyl)-5-phenyl-1H-pyrazol-3-carbonsäure-methylester, 1-(2,4-Dichlor-phenyl)-5-methyl-1H-pyrazol-3-carbonsäure-ethylester, 1-(2,4-Dichlor-phenyl)-5-isopropyl-1H-pyrazol-3-carbonsäure-ethylester, 1-(2,4-Dichlor-phenyl)-5-(1,1-dimethyl-ethyl)-1H-pyrazol-3-carbonsäure-ethylester, 1-(2,4-Dichlor-phenyl)-5-phenyl-1H-pyrazol-3-carbonsäure-ethylester (vgl. auch verwandte Verbindungen in EP-A-269806 und EP-A-333131), 5-(2,4-Dichlor-benzyl)-2-isoxazolin-3-carbonsäure-ethylester, 5-Phenyl-2-isoxazolin-3-carbonsäure-ethylester, 5-(4-Fluor-phenyl)-5-phenyl-2-isoxazolin-3-carbonsäure-ethylester (vgl. auch verwandte Verbindungen in WO-A-91/08202), 5-Chlor-chinolin-8-oxy-essigsäure-(1,3-dimethyl-but-1-yl)-ester, 5-Chlor-chinolin-8-oxy-essigsäure-4-allyloxy-butylester, 5-Chlor-chinolin-8-oxy-essigsäure-1-allyloxy-prop-2-yl-ester, 5-Chlor-chinoxalin-8-oxy-essigsäure-methylester, 5-Chlor-chinolin-8-oxy-essigsäure-ethylester, 5-Chlor-chinoxalin-8-oxy-essigsäure-allylester, 5-Chlor-chinolin-8-oxy-essigsäure-2-oxo-prop-1-ylester, 5-Chlor-chinolin-8-oxy-malonsäure-diethylester, 5-Chlor-chinoxalin-8-oxy-malonsäure-diallylester, 5-Chlor-chinolin-8-oxy-malonsäure-diethylester (vgl. auch verwandte Verbindungen in EP-A-582198), 4-Carboxy-chroman-4-yl-essigsäure (AC-304415, vgl. EP-A-613618), 4-Chlorphenoxy-essigsäure, 3,3'-Dimethyl-4-methoxy-benzophenon, 1-Brom-4-chlormethylsulfonyl- benzol, 1-[4-(N-2-Methoxybenzoylsulfamoyl)-phenyl]-3-methyl-harnstoff (alias N-(2-Methoxybenzoyl)-4-[(methylamino-carbonyl)-amino]-benzolsulfonamid), 1-[4-(N-2-Methoxybenzoylsulfamoyl)-phenyl]-3,3-dimethyl-harnstoff, 1-[4-(N-4,5-Dimethylbenzoylsulfamoyl)-phenyl]-3-methylharnstoff, 1-[4-(N-Naphthylsulfamoyl)-phenyl]-3,3-dimethyl-harnstoff, N-(2-Methoxy-5-methylbenzoyl)-4-(cyclopropylaminocarbonyl)-benzolsulfonamid,

und/oder eine der folgenden durch allgemeine Formeln definierten Verbindungen der allgemeinen Formel (IIa)

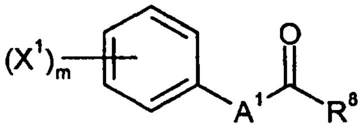

(IIa)

oder der allgemeinen Formel (IIb)

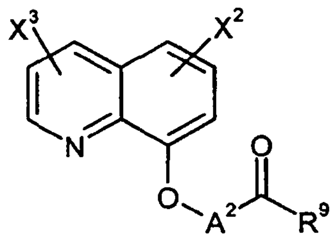

(IIb)

oder der Formel (IIc)

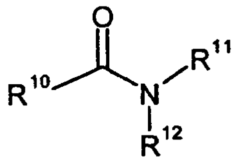

(IIc)

wobei

m für eine Zahl 0, 1, 2, 3, 4 oder 5 steht,

$A^1$ für eine der nachstehend skizzierten divalenten heterocyclischen Gruppierungen steht,

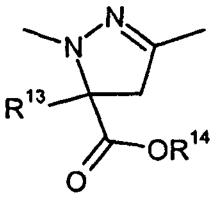
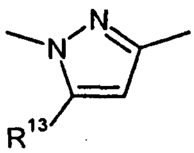
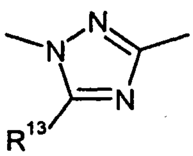
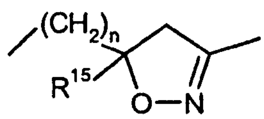

n für eine Zahl 0, 1, 2, 3, 4 oder 5 steht,

$A^2$ für gegebenenfalls durch $C_1$-$C_4$-Alkyl und/oder $C_1$-$C_4$-Alkoxy-carbonyl und/oder $C_1$-$C_4$-Alkenyloxycarbonyl substituiertes Alkandiyl mit 1 oder 2 Kohlenstoffatomen steht,

$R^8$ für Hydroxy, Mercapto, Amino, $C_1$-$C_6$-Alkoxy, $C_1$-$C_6$-Alkylthio, $C_1$-$C_6$-Alkylamino oder Di-($C_1$-$C_4$-alkyl)-amino steht,

$R^9$ für Hydroxy, Mercapto, Amino, $C_1$-$C_7$-Alkoxy, $C_1$-$C_6$-Alkenyloxy, $C_1$-$C_6$-Alkenyloxy- $C_1$-$C_6$-alkoxy, $C_1$-$C_6$-Alkylthio, $C_1$-$C_6$-Alkylamino oder Di-($C_1$-$C_4$-alkyl)-amino steht,

$R^{10}$ für jeweils gegebenenfalls durch Fluor, Chlor und/oder Brom substituiertes $C_1$-$C_4$-Alkyl steht,

$R^{11}$ für Wasserstoff, jeweils gegebenenfalls durch Fluor, Chlor und/oder Brom substituiertes $C_1$-$C_6$-Alkyl, $C_2$-$C_6$-Alkenyl oder $C_2$-$C_6$-Alkinyl, $C_1$-$C_4$-Alkoxy-$C_1$-$C_4$-alkyl, Dioxolanyl-$C_1$-$C_4$-alkyl, Furyl, Furyl-$C_1$-$C_4$-alkyl, Thienyl, Thiazolyl, Piperidinyl, oder gegebenenfalls durch Fluor, Chlor und/oder Brom oder $C_1$-$C_4$-Alkyl substituiertes Phenyl steht,

$R^{12}$ für Wasserstoff, jeweils gegebenenfalls durch Fluor, Chlor und/oder Brom substituiertes $C_1$-$C_6$-Alkyl, $C_2$-$C_6$-Alkenyl oder $C_2$-$C_6$-Alkinyl, $C_1$-$C_4$-Alkoxy-$C_1$-$C_4$-akyl, Dioxolanyl-$C_1$-$C_4$-alkyl, Furyl, Furyl-$C_1$-$C_4$-alkyl, Thienyl, Thiazolyl, Piperidinyl, oder gegebenenfalls durch Fluor, Chlor und/oder Brom oder $C_1$-$C_4$-Alkyl substituiertes Phenyl, oder $R^{11}$ und $R^{12}$ auch gemeinsam für jeweils gegebenenfalls durch $C_1$-$C_4$-Alkyl, Phenyl, Furyl, einen annellierten Benzolring oder durch zwei Substituenten, die gemeinsam mit dem C-Atom, an das sie gebunden sind, einen 5- oder 6-gliedrigen Carbocyclus bilden, substituiertes $C_3$-$C_6$-Alkandiyl oder $C_2$-$C_5$-Oxaalkandiyl steht,

$R^{13}$ für Wasserstoff, Cyano, Halogen, oder für jeweils gegebenenfalls durch Fluor, Chlor und/oder Brom substituiertes $C_1$-$C_4$-Alkyl, $C_3$-$C_6$-Cycloalkyl oder Phenyl steht,

$R^{14}$ für Wasserstoff, gegebenenfalls durch Hydroxy, Cyano, Halogen oder $C_1$-$C_4$-Alkoxy substituiertes $C_1$-$C_6$-Alkyl, $C_3$-$C_6$-Cycloalkyl oder Tri-($C_1$-$C_4$-alkyl)-silyl steht,

$R^{15}$ für Wasserstoff, Cyano, Halogen, oder für jeweils gegebenenfalls durch Fluor, Chlor und/oder Brom substituiertes $C_1$-$C_4$-Alkyl, $C_3$-$C_6$-Cycloalkyl oder Phenyl steht,

$X^1$ für Nitro, Cyano, Halogen, $C_1C_4$-Alkyl, $C_1$-$C_4$-Halogenalkyl, $C_1$-$C_4$-Alkoxy oder $C_1$-$C_4$-Halogenalkoxy steht,

$X^2$ für Wasserstoff, Cyano, Nitro, Halogen, $C_1$-$C_4$-Alkyl, $C_1$-$C_4$-Halogenalkyl, $C_1$-$C_4$-Alkoxy oder $C_1$-$C_4$-Halogenalkoxy steht,

$x^3$ für Wasserstoff, Cyano, Nitro, Halogen, $C_1$-$C_4$-Alkyl, $C_1$-$C_4$-Halogenalkyl, $C_1$-$C_4$-Alkoxy oder $C_1$-$C_4$-Halogenalkoxy steht,

und/oder die folgenden durch allgemeine Formeln definierten Verbindungen der allgemeinen Formel (IId)

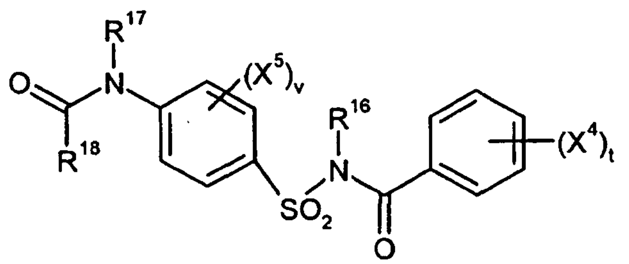

(IId)

oder der allgemeinen Formel (IIe)

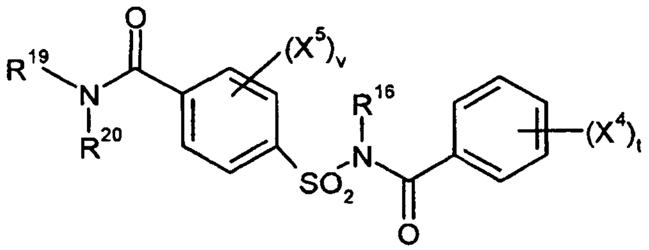

(IIe)

wobei

t für eine Zahl 0, 1, 2, 3, 4 oder 5 steht,

v für eine Zahl 0, 1, 2, 3, 4 oder 5 steht,

$R^{16}$ für Wasserstoff oder $C_1$-$C_4$-Alkyl steht,

$R^{17}$ für Wasserstoff oder $C_1$-$C_4$-Alkyl steht,

$R^{18}$ für Wasserstoff, jeweils gegebenenfalls durch Cyano, Halogen oder $C_1$-$C_4$-Alkoxy substituiertes $C_1$-$C_6$-Alkyl, $C_1$-$C_6$-Alkoxy, $C_1$-$C_6$-Alkylthio, $C_1$-$C_6$-Alkylamino oder Di-($C_1$-$C_4$-alkyl)-amino, oder jeweils gegebenenfalls durch Cyano, Halogen oder $C_1$-$C_4$-Alkyl substituiertes $C_3$-$C_6$-Cycloalkyl, $C_3$-$C_6$-Cycloalkyloxy, $C_3$-$C_6$-Cycloalkylthio oder $C_3$-$C_6$-Cycloalkylamino steht,

$R^{19}$ für Wasserstoff, gegebenenfalls durch Cyano, Hydroxy, Halogen oder $C_1$-$C_4$-Alkoxy substituiertes $C_1$-$C_6$-Alkyl, jeweils gegebenenfalls durch Cyano oder Halogen substituiertes $C_3$-$C_6$-Alkenyl oder $C_3$-$C_6$-Alkinyl, oder gegebenenfalls durch Cyano, Halogen oder $C_1$-$C_4$-Alkyl substituiertes $C_3$-$C_6$-Cycloalkyl steht,

$R^{20}$ für Wasserstoff, gegebenenfalls durch Cyano, Hydroxy, Halogen oder $C_1$-$C_4$-Alkoxy substituiertes $C_1$-$C_6$-Alkyl, jeweils gegebenenfalls durch Cyano oder Halogen substituiertes $C_3$-$C_6$-Alkenyl oder $C_3$-$C_6$-Alkinyl, gegebenenfalls durch Cyano, Halogen oder $C_1$-$C_4$-Alkyl substituiertes $C_3$-$C_6$-Cycloalkyl, oder gegebenenfalls durch Nitro, Cyano, Halogen, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl steht, oder zusammen mit $R^{19}$ für jeweils gegebenenfalls durch $C_1$-$C_4$-Alkyl substituiertes $C_2$-$C_6$-Alkandiyl oder $C_2$-$C_5$-Oxaalkandiyl steht,

$X^4$ für Nitro, Cyano, Carboxy, Carbamoyl, Formyl, Sulfamoyl, Hydroxy, Amino, Halogen, $C_1$-$C_4$-Alkyl, $C_1$-$C_4$-Halogenalkyl, $C_1$-$C_4$-Alkoxy oder $C_1$-$C_4$-Halogenalkoxy steht, und

$x^5$ für Nitro, Cyano, Carboxy, Carbamoyl, Formyl, Sulfamoyl, Hydroxy, Amino, Halogen, $C_1$-$C_4$-Alkyl, $C_1$-$C_4$-Halogenalkyl, $C_1$-$C_4$-Alkoxy oder $C_1$-$C_4$-Halogenalkoxy steht,

zur Bekämpfung von Insekten und/oder Spinnentieren.

In den Definitionen sind die Kohlenwasserstoffketten, wie in Alkyl oder Alkandiyl - auch in Verbindung mit Heteroatomen, wie in Alkoxy - jeweils geradkettig oder verzweigt

Die Verbindungen der Formel (I) können, auch in Abhängigkeit von der Art der Substituenten, als geometrische und/oder optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische, sowie deren Verwendung und sie enthaltende Mittel sind Gegenstand der vorliegenden Erfindung. Im folgenden wird der Einfachheit halber jedoch stets von Verbindungen der Formel (I) gesprochen, obwohl sowohl die reinen Verbindungen als gegebenenfalls auch Gemische mit unterschiedlichen Anteilen an isomeren Verbindungen gemeint sind.

Unter Einbeziehung der Bedeutungen (1) bis (6) der Gruppe CKE ergeben sich folgende hauptsächliche Strukturen (I-1) bis (I-6):

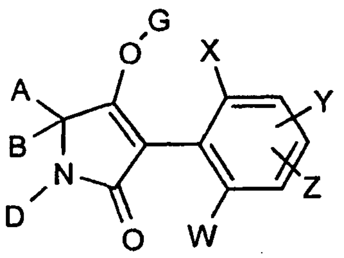 (I-1), 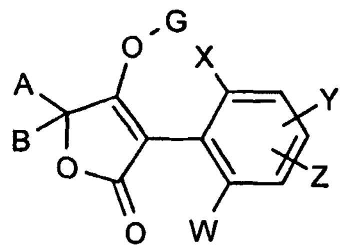 (I-2),

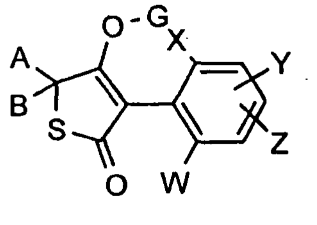 (I-3), 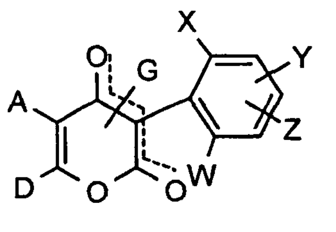 (I-4),

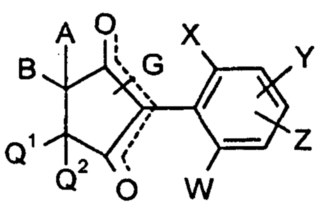 (I-5) oder 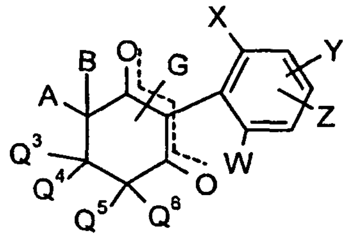 (I-6),

worin
A, B, D, G, $Q^1$, $Q^2$, $Q^3$, $Q^4$, $Q^5$, $Q^6$, W, X, Y und Z die oben angegebene Bedeutung haben.

Unter Einbeziehung der verschiedenen Bedeutungen (a), (b), (c), (d), (e), (f) und (g) der Gruppe G ergeben sich folgende hauptsächliche Strukturen (I-1-a) bis (I-1-g), wenn CKE für die Gruppe (1) steht,

**(I-1-a):**

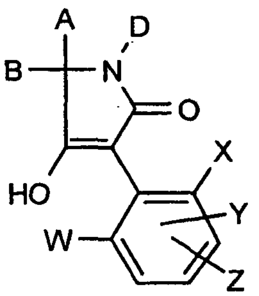

**(I-1-b):**

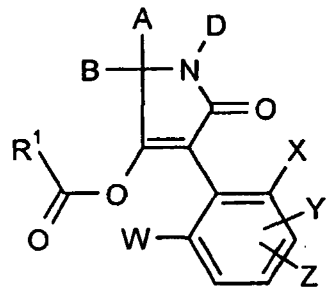

**(I-1-c):**

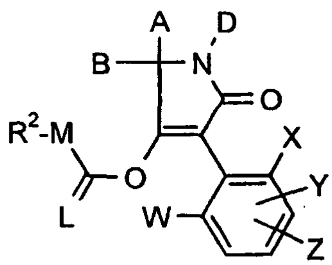

**(I-1-d):**

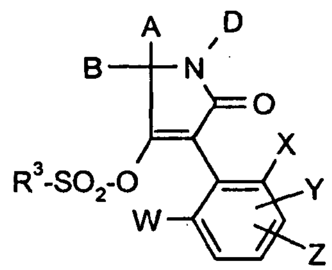

**(I-1-e):**

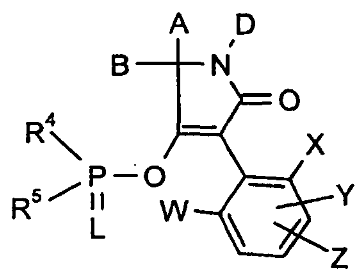

**(I-1-f):**

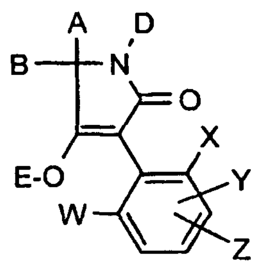

(I-1-g):

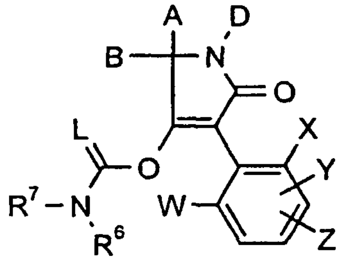

worin
A, B, D, E, L, M, W, X, Y, Z, $R^1$, $R^2$, $R^3$, $R^4$, $R^5$, $R^6$ und $R^7$ die oben angegebenen Bedeutungen besitzen.

Unter Einbeziehung der verschiedenen Bedeutungen (a), (b), (c), (d), (e), (f) und (g) der Gruppe G ergeben sich folgende hauptsächliche Strukturen (I-2-a) bis (I-2-g), wenn CKE für die Gruppe (2) steht,

(I-2-a):

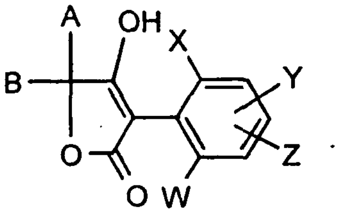

(I-2-b):

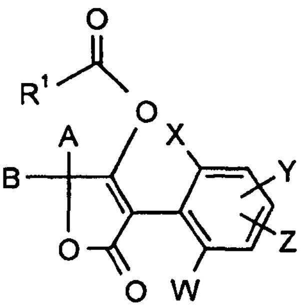

(I-2-c):

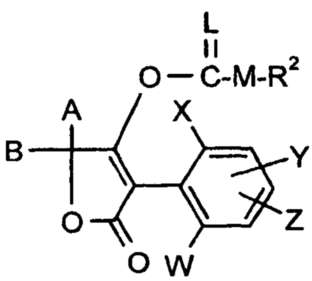

(I-2-d):

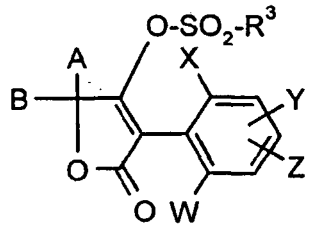

(I-2-e):

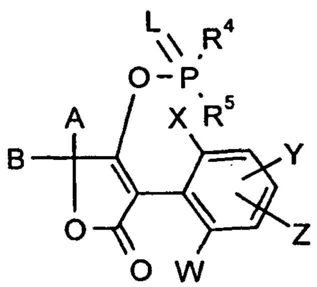

(I-2-f):

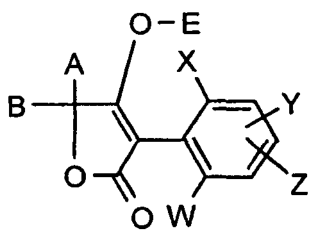

(I-2-g):

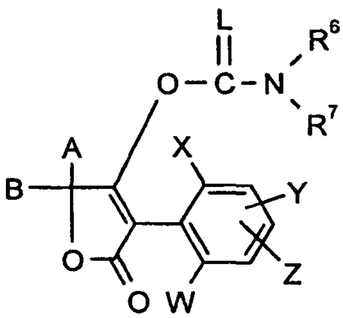

worin

A, B, E, L, M, W, X, Y, Z, $R^1$, $R^2$, $R^3$, $R^4$, $R^5$, $R^6$ und $R^7$ die oben angegebene Bedeutung haben.

Unter Einbeziehung der verschiedenen Bedeutungen (a), (b), (c), (d), (e), (f) und (g) der Gruppe G ergeben sich folgende hauptsächliche Strukturen (I-3-a) bis (I-3-g), wenn CKE für die Gruppe (3) steht,

(I-3-a):

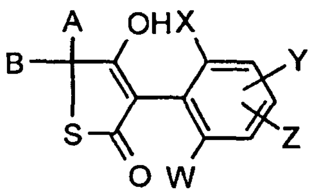

(I-3-b):

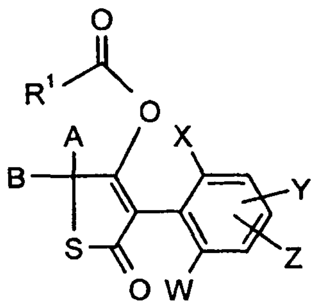

(I-3-c):

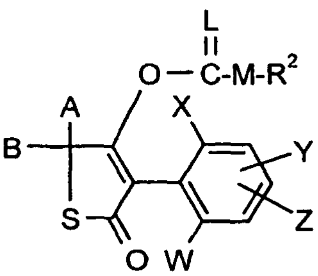

(I-3-d):

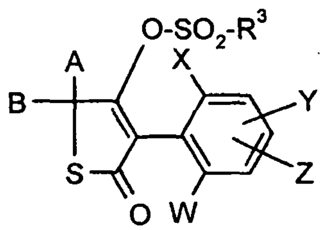

(I-3-e):

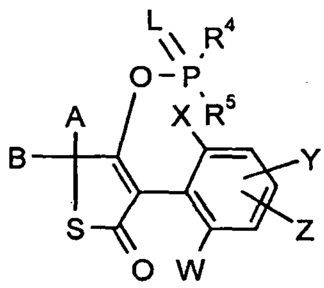

(I-3-f):

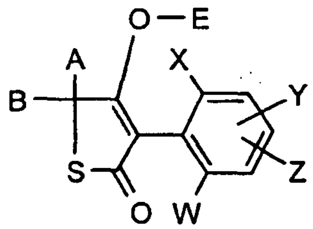

(I-3-g):

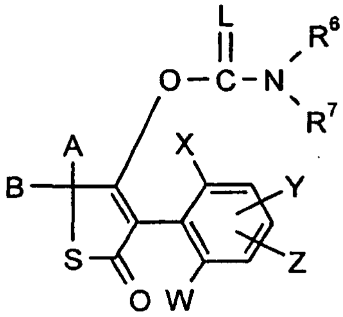

worin

A, B, E, L, M, W, X, Y, Z, $R^1$, $R^2$, $R^3$, $R^4$, $R^5$, $R^6$ und $R^7$ die oben angegebenen Bedeutung besitzen.

Die Verbindungen der Formel (I-4) können in Abhängigkeit von der Stellung des Substituenten G in den zwei isomeren Formen der Formeln (I-4-A) und (I-4-B) vorliegen,

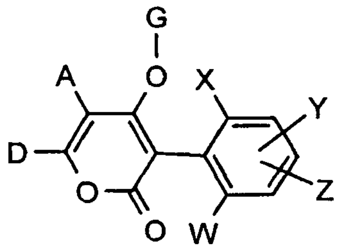

(I-4-A)

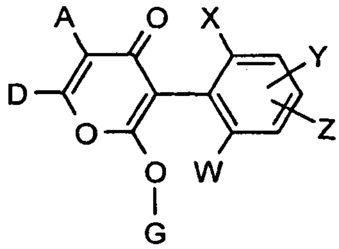

(I-4-B)

was durch die gestrichelte Linie in der Formel (I-4) zum Ausdruck gebracht werden soll.

Die Verbindungen der Formeln (I-4-A) und (I-4-B) können sowohl als Gemische als auch in Form ihrer reinen Isomeren vorliegen. Gemische der Verbindungen der Formeln (I-4-A) und (I-4-B) lassen sich gegebenenfalls in an sich bekannter Weise durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächliche Strukturen (I-4-a) bis (I-4-g), wenn CKE für die Gruppe (4) steht,

(I-4-a):

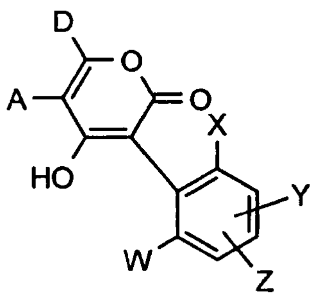

(I-4-b):

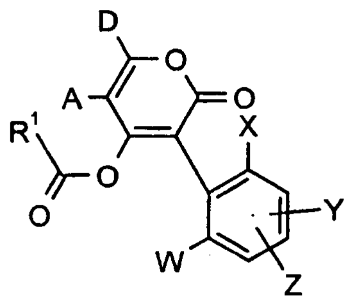

(I-4-c):

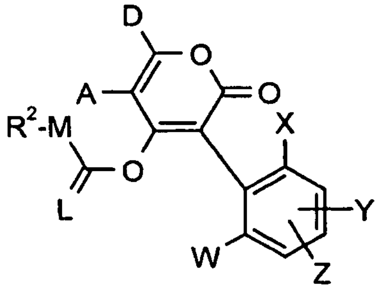

(I-4-d):

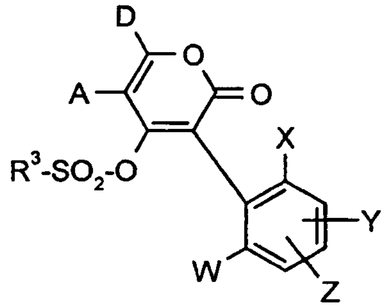

(I-4-e):

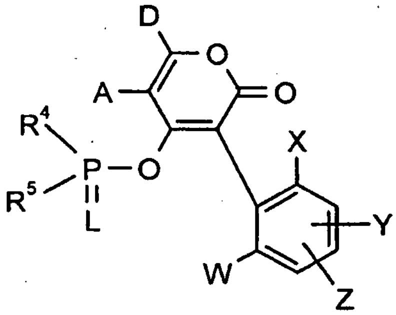

(I-4-f):

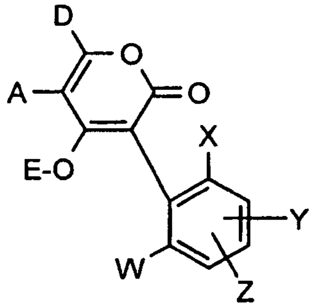

(I-4-g):

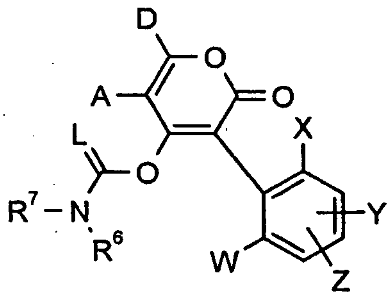

worin

A, D, E, L, M, W, X, Y, Z, $R^1$, $R^2$, $R^3$, $R^4$, $R^5$, $R^6$ und $R^7$ die oben angegebenen Bedeutungen besitzen.

Die Verbindungen der Formel (I-5) können in Abhängigkeit von der Stellung des Substituenten G in den zwei isomeren Formen der Formeln (I-5-A) und (I-5-B) vorliegen,

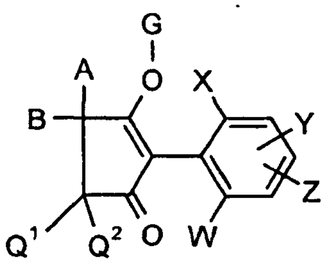

(I-5-A)

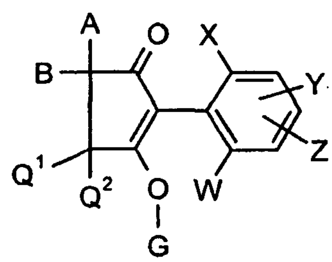

(I-5-B)

was durch die gestrichelte Linie in der Formel (I-5) zum Ausdruck gebracht werden soll.

Die Verbindungen der Formeln (I-5-A) und (I-5-B) können sowohl als Gemische als auch in Form ihrer reinen Isomeren vorliegen. Gemische der Verbindungen der Formeln (I-5-A) und (I-5-B) lassen sich gegebenenfalls durch physikalische Methoden trennen, beispielsweise durch chromatographische Methoden.

Aus Gründen der besseren Übersichtlichkeit wird im folgenden jeweils nur eines der möglichen Isomeren aufgerührt Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächlichen Strukturen (I-5-a) bis (I-5-g):

(I-5-a):

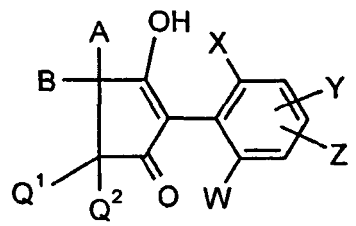

(I-5-b):

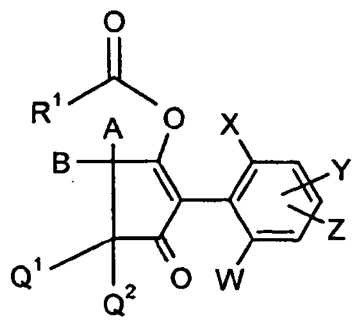

(I-5-c):

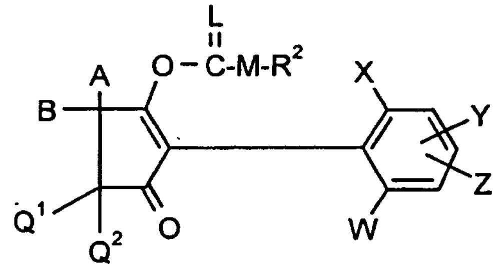

(I-5-d):

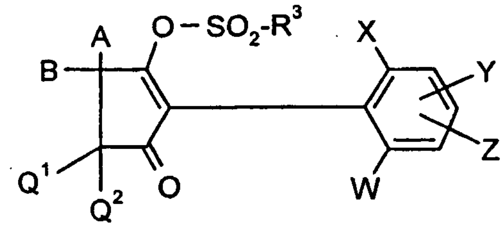

(I-5-e):

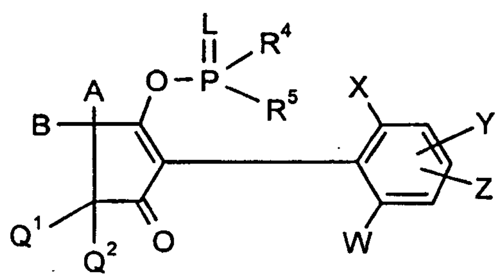

(I-5-f):

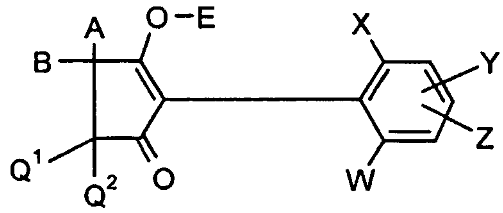

(I-5-g):

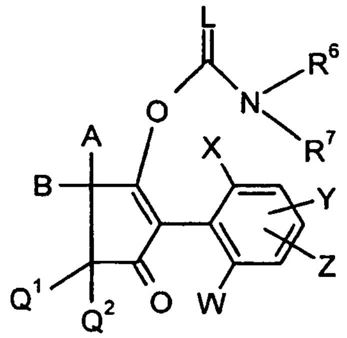

worin

A, B, $Q^1$ $Q^2$, E, L, M, W, X, Y, Z, $R^1$, $R^2$, $R^3$, $R^4$, $R^5$, $R^6$ und $R^7$ die oben angegebenen Bedeutungen besitzen.

Die Verbindungen der Formel (I-6) können in Abhängigkeit von der Stellung des Substituenten G in den zwei isomeren Formen der Formeln (I-6-A) bzw. (I-6-B) vorliegen, was durch die gestrichelte Linie in der Formel (1-6) zum Ausdruck gebracht werden soll:

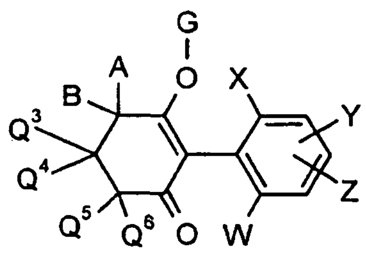

(I-6-A)

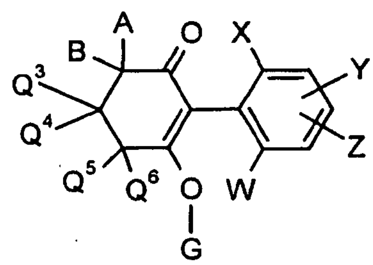

(I-6-B)

Die Verbindungen der Formeln (I-6-A) bzw. (I-6-B) können sowohl als Gemische als auch in Form ihrer reinen Isomeren vorliegen. Gemische der Verbindungen der Formeln (I-6-A) und (I-6-B) lassen sich gegebenenfalls durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt ein, dass die betreffende Verbindung gegebenenfalls als Isomerengemisch oder in der jeweils anderen isomeren Form vorliegen kann.

Unter Einbeziehung der verschiedenen Bedeutungen (a), (b), (c), (d), (e), (f) und (g) der Gruppe G ergeben sich folgende hauptsächlichen Strukturen (I-6-a) bis (I-6-g):

(I-6-a):

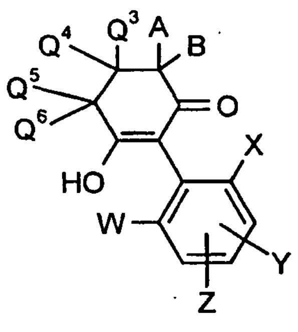

(I-6-b):

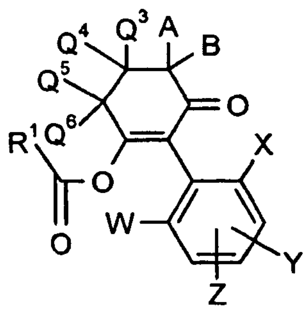

(I-6-c):

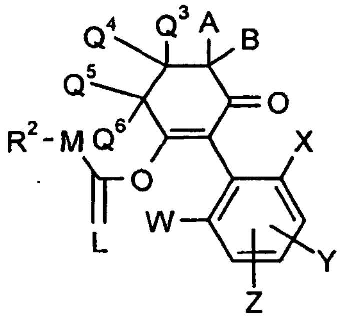

(I-6-d):

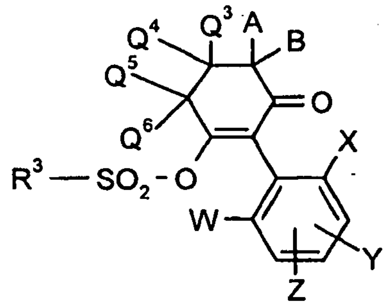

(I-6-e):

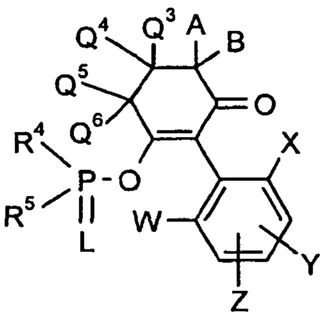

(I-6-f):

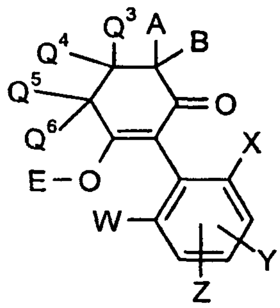

(I-6-g):

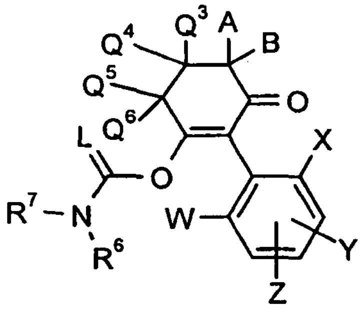

worin
A, B, E, L, M, $Q^3$, $Q^4$, $Q^5$, $Q^6$, W, X, Y, Z, $R^1$, $R^2$, $R^3$, $R^4$, $R^5$, $R^6$ und $R^7$ die oben angegebenen Bedeutungen besitzen.

Die substituierten, cyclischen Ketoenole der akariziden und/oder insektiziden Mittel sind durch die Formel (I) allgemein definiert. Bevorzugte Substituenten bzw. Bereiche der in der oben und nachstehend erwähnten Formeln aufgeführten Reste werden im folgenden erläutert:

X steht bevorzugt für Halogen, $C_1$-$C_6$-Alkyl, $C_2$-$C_6$-Alkenyl, $C_2$-$C_6$-Alkinyl, $C_1$-$C_6$-Halogenalkyl, $C_1$-$C_6$-Alkoxy, $C_3$-$C_6$-Alkenyloxy, $C_1$-$C_6$-Halogenalkoxy, $C_3$-$C_6$-Halogenalkenyloxy, Nitro oder Cyano,

Z steht bevorzugt für Wasserstoff, Halogen, $C_1$-$C_6$-Alkyl, $C_2$-$C_6$-Alkenyl, $C_2$-$C_6$-Alkinyl oder für einen der Reste

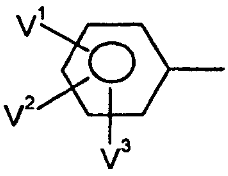,
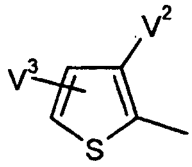,

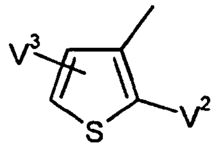

worin

| | |
|---|---|
| $V^1$ | für Wasserstoff, Halogen, $C_1$-$C_{12}$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_4$-Halogenalkyl, $C_1$-$C_4$-Halogenalkoxy, Nitro oder Cyano steht, |
| $V^2$ und $V^3$ | unabhängig voneinander für Wasserstoff, Halogen, $C_1$-$C_6$-Alkyl, $C_1$-$C_6$-Alkoxy, $C_1$-$C_4$-Halogenalkyl oder $C_1$-$C_4$-Halogenalkoxy stehen, |
| W und Y | stehen bevorzugt unabhängig voneinander für Wasserstoff, Halogen, $C_1$-$C_6$-Alkyl, $C_1$-$C_6$-Halogenalkyl, $C_1$-$C_6$-Alkoxy, $C_1$-$C_6$-Halogenalkoxy, Nitro oder Cyano, |
| CKE | steht bevorzugt für eine der Gruppen |

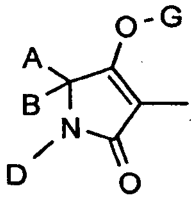 (1), 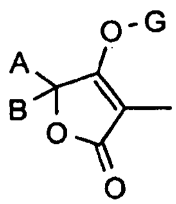 (2),

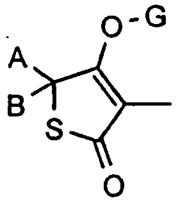 (3), 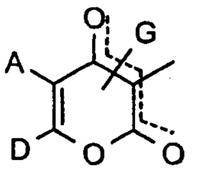 (4),

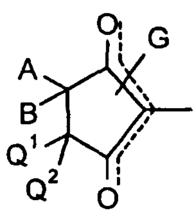 (5) oder 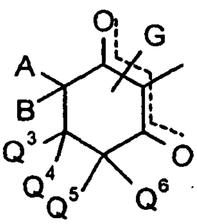 (6),

| | |
|---|---|
| A | steht bevorzugt für Wasserstoff oder jeweils gegebenenfalls durch Halogen substituiertes $C_1$-$C_{12}$-Alkyl, $C_3$-$C_8$-Alkenyl, $C_1$-$C_{10}$-Alkoxy-$C_1$-$C_8$-alkyl, $C_1$-$C_{10}$-Alkylthio-$C_1$-$C_6$-alkyl, gegebenenfalls durch Halogen, $C_1$-$C_6$-Alkyl oder $C_1$-$C_6$-Alkoxy substituiertes $C_3$-$C_8$-Cycloalkyl, in welchem gegebenenfalls ein oder zwei nicht direkt benachbarte Ringglieder durch Sauerstoff und/oder Schwefel ersetzt sind oder für jeweils gegebenenfalls durch Halogen, $C_1$-$C_6$-Alkyl, $C_1$-$C_6$-Halogenalkyl, $C_1$-$C_6$-Alkoxy, $C_1$-$C_6$-Halogenalkoxy, Cyano oder Nitro substituiertes Phenyl oder Phenyl-$C_1$-$C_6$-alkyl, |

B steht bevorzugt für Wasserstoff, $C_1$-$C_{12}$-Alkyl oder $C_1$-$C_8$-Alkoxy-$C_1$-$C_6$-alkyl, oder

A, B und das Kohlenstoffatom an das sie gebunden sind, stehen bevorzugt für gesättigtes $C_3$-$C_{10}$-Cycloalkyl oder ungesättigtes $C_8$-$C_{10}$-Cycloalkyl, worin gegebenenfalls ein Ringglied durch Sauerstoff oder Schwefel ersetzt ist und welche gegebenenfalls einfach oder zweifach durch $C_1$-$C_8$-Alkyl, $C_3$-$C_{10}$-Cycloalkyl, $C_1$-$C_8$-Halogenalkyl, $C_1$-$C_8$-Alkoxy, $C_1$-$C_8$-Alkylthio, Halogen oder Phenyl substituiert sind, oder

A, B und das Kohlenstoffatom, an das sie gebunden sind, stehen bevorzugt für $C_5$-$C_6$-Cycloalkyl, welches durch eine gegebenenfalls ein oder zwei nicht direkt benachbarte Sauerstoff- und/oder Schwefelatome enthaltende gegebenenfalls durch $C_1$-$C_4$-Alkyl substituierte Alkylendiyl-, oder durch eine Alkylendioxyl- oder durch eine Alkylendithioyl-Gruppe substituiert ist, die mit dem Kohlenstoffatom, an das sie gebunden ist, einen weiteren fünf- bis achtgliedrigen Ring bildet, oder

A, B und das Kohlenstoffatom, an das sie gebunden sind, stehen bevorzugt für $C_3$-$C_8$-Cycloalkyl oder $C_5$-$C_8$-Cycloalkenyl, in welchen zwei Substituenten gemeinsam mit den Kohlenstoffatomen, an die sie gebunden sind, für jeweils gegebenenfalls durch $C_1$-$C_6$-Alkyl, $C_1$-$C_6$-Alkoxy oder Halogen substituiertes $C_2$-$C_6$-Alkandiyl, $C_2$-$C_6$-Alkendiyl oder $C_4$-$C_6$-Alkandiendiyl stehen, worin gegebenenfalls eine Methylengruppe durch Sauerstoff oder Schwefel ersetzt ist,

D steht bevorzugt für Wasserstoff, jeweils gegebenenfalls durch Halogen substituiertes $C_1$-$C_{12}$-Alkyl, $C_3$-$C_8$-Alkenyl, $C_3$-$C_8$-Alkinyl, $C_1$-$C_{10}$-Alkoxy-$C_2$-$C_8$-alkyl, gegebenenfalls durch Halogen, $C_1$-$C_4$-Alkyl, $C_1$-$C_4$-Alkoxy oder $C_1$-$C_4$-Halogenalkyl substituiertes $C_3$-$C_8$-Cycloalkyl, in welchem gegebenenfalls ein Ringglied durch Sauerstoff oder Schwefel ersetzt ist oder jeweils gegebenenfalls durch Halogen, $C_1$-$C_6$-Alkyl, $C_1$-$C_6$-Halogenalkyl, $C_1$-$C_6$-Alkoxy, $C_1$-$C_6$-Halogenalkoxy, Cyano oder Nitro substituiertes Phenyl oder Phenyl-$C_1$-$C_6$-alkyl, oder

A und D stehen gemeinsam bevorzugt für jeweils gegebenenfalls substituiertes $C_3$-$C_6$-Alkandiyl oder $C_3$-$C_6$-Alkendiyl, worin gegebenenfalls eine Methylengruppe durch eine Carbonylgruppe, Sauerstoff oder Schwefel ersetzt ist und
wobei als Substituenten jeweils in Frage kommen:
Halogen, Hydroxy, Mercapto oder jeweils gegebenenfalls durch Halogen substituiertes $C_1$-$C_{10}$-Alkyl oder $C_1$-$C_6$-Alkoxy, oder eine weitere $C_3$-$C_6$-Alkandiylgruppierung, $C_3$-$C_6$-Alkendylgruppierung oder eine Butadienylgruppierung, die gegebenenfalls durch $C_1$-$C_6$-Alkyl substituiert ist oder in der gegebenenfalls zwei benachbarte Substituenten mit den Kohlenstoffatomen, an die sie gebunden sind, einen weiteren gesättigten oder ungesättigten Cyclus mit 5 oder 6 Ringatomen bilden (im Fall der Verbindung der Formel (I-1) stehen A und D dann gemeinsam mit den Atomen, an die sie gebunden sind beispielsweise für die weiter unten genannten Gruppen AD-1 bis AD-10), der Sauerstoff oder Schwefel enthalten kann,

A und $Q^1$ stehen gemeinsam bevorzugt für jeweils gegebenenfalls einfach oder zweifach, gleich oder verschieden durch Halogen, durch jeweils gegebenenfalls einfach bis dreifach, gleich oder verschieden durch Halogen substituiertes $C_1$-$C_{10}$-Alkyl, $C_1$-$C_6$-Alkoxy, $C_1$-$C_6$-Alkylthio, $C_3$-$C_7$-Cycloalkyl oder durch jeweils gegebenenfalls einfach bis dreifach, gleich oder verschieden durch Halogen, $C_1$-$C_6$-Alkyl oder $C_1$-$C_6$-Alkoxy substituiertes Benzyloxy oder Phenyl substituiertes $C_3$-$C_6$-Alkandiyl oder $C_4$-$C_6$-Alkendiyl, welches außerdem durch eine $C_1$-$C_2$-Alkandiylgruppe oder durch ein Sauerstoffatom überbrückt ist oder

$Q^1$ steht bevorzugt für Wasserstoff oder $C_1$-$C_4$-Alkyl,

$Q^2$, $Q^4$, $Q^5$ und $Q^6$ stehen unabhängig voneinander bevorzugt für Wasserstoff oder $C_1$-$C_4$-Alkyl,

$Q^3$ steht bevorzugt für Wasserstoff, $C_1$-$C_6$-Alkyl, $C_1$-$C_6$-Alkoxy-$C_1$-$C_2$-alkyl, $C_1$-$C_6$-Alkylthio-$C_1$-$C_2$-alkyl, gegebenenfalls durch Halogen, $C_1$-$C_4$-Alkyl oder $C_1$-$C_4$-Alkoxy substituiertes $C_3$-$C_8$-Cycloalkyl, worin gegebenenfalls eine Methylengruppe durch Sauerstoff oder Schwefel ersetzt ist oder für gegebenenfalls durch Halogen, $C_1$-$C_4$-Alkyl, $C_1$-$C_4$-Alkoxy, $C_1$-$C_2$-Halogenalkyl, $C_1$-$C_2$-Halogenalkoxy, Cyano oder Nitro substituiertes Phenyl oder

$Q^3$ und $Q^4$ stehen bevorzugt gemeinsam mit dem Kohlenstoffatom, an das sie gebunden sind, für einen gegebenenfalls durch $C_1$-$C_4$-Alkyl, $C_1$-$C_4$-Alkoxy oder $C_1$-$C_2$-Halogenalkyl substituierten $C_3$-$C_7$-Ring, in welchem gegebenenfalls ein Ringglied durch Sauerstoff oder Schwefel ersetzt ist,

G steht bevorzugt für Wasserstoff (a) oder für eine der Gruppen

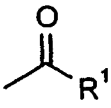 (b), 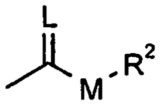 (c), 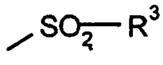 (d), 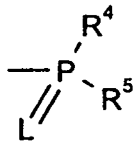 (e),

E (f) oder

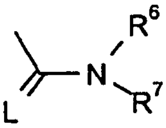

(g), insbesondere für (a), (b), (c) oder (g) in welchen
E für ein Metallionäquivalent oder ein Ammoniumion steht,
L für Sauerstoff oder Schwefel steht und
M für Sauerstoff oder Schwefel steht.

$R^1$ steht bevorzugt für jeweils gegebenenfalls durch Halogen substituiertes $C_1$-$C_{20}$-Alkyl, $C_2$-$C_{20}$-Alkenyl, $C_1$-$C_8$-Alkoxy-$C_1$-$C_8$-alkyl, $C_1$-$C_8$-Alkylthio-$C_1$-$C_8$-alkyl, Poly-$C_1$-$C_8$-alkoxy-$C_1$-$C_8$-alkyl oder gegebenenfalls durch Halogen, $C_1$-$C_6$-Alkyl oder $C_1$-$C_6$-Alkoxy substituiertes $C_3$-$C_8$-Cycloalkyl, in welchem gegebenenfalls ein oder mehrere (bevorzugt nicht mehr als zwei) nicht direkt benachbarte Ringglieder durch Sauerstoff und/oder Schwefel ersetzt sind,
für gegebenenfalls durch Halogen, Cyano, Nitro, $C_1$-$C_6$-Alkyl, $C_1$-$C_6$-Alkoxy, $C_1$-$C_6$-Halogenalkyl, $C_1$-$C_6$-Halogenalkoxy, $C_1$-$C_6$-Alkylthio oder $C_1$-$C_6$-Alkylsulfonyl substituiertes Phenyl,
für gegebenenfalls durch Halogen, Nitro, Cyano, $C_1$-$C_6$-Alkyl, $C_1$-$C_6$-Alkoxy, $C_1$-$C_6$-Halogenalkyl oder $C_1$-$C_6$-Halogenalkoxy substituiertes Phenyl-$C_1$-$C_6$-akyl,
für gegebenenfalls durch Halogen oder $C_1$-$C_6$-Alkyl substituiertes 5- oder 6-gliedriges Hetaryl (beispielsweise Pyrazolyl, Thiazolyl, Pyridyl, Pyrimidyl, Furanyl oder Thienyl), für gegebenenfalls durch Halogen oder $C_1$-$C_6$-Alkyl substituiertes Phenoxy-$C_1$-$C_6$-alkyl oder
für gegebenenfalls durch Halogen, Amino oder $C_1$-$C_6$-Alkyl substituiertes 5- oder 6-gliedriges Hetaryloxy-$C_1$-$C_6$-alkyl (beispielsweise Pyridyloxy-$C_1$-$C_6$-alkyl, Pyrimidyloxy-$C_1$-$C_6$-alkyl oder Thiazoloxy-$C_1$-$C_6$-alkyl),

$R^2$ steht bevorzugt für jeweils gegebenenfalls durch Halogen substituiertes $C_1C_{20}$-Alkyl, $C_2$-$C_{20}$-Alkenyl, $C_1$-$C_8$-Alkoxy-$C_2$-$C_8$-alkyl, Poly-$C_1$-$C_8$-alkoxy-$C_2$-$C_8$-alkyl,
für gegebenenfalls durch Halogen, $C_1$-$C_6$-Alkyl oder $C_1$-$C_6$-Alkoxy substituiertes $C_3$-$C_8$-Cycloalkyl oder
für jeweils gegebenenfalls durch Halogen, Cyano, Nitro, $C_1$-$C_6$-Alkyl, $C_1$-$C_6$-Alkoxy, $C_1$-$C_6$-Halogenalkyl oder $C_1$-$C_6$-Halogenalkoxy substituiertes Phenyl oder Benzyl,

$R^3$ steht bevorzugt für gegebenenfalls durch Halogen substituiertes $C_1$-$C_8$-Alkyl oder für jeweils gegebenenfalls durch Halogen, $C_1$-$C_6$-Alkyl, $C_1$-$C_6$-Alkoxy, $C_1$-$C_4$-Halogenalkyl, $C_1$-$C_4$-Halogenalkoxy, Cyano oder Nitro substituiertes Phenyl oder Benryl,

$R^4$ und $R^5$ stehen bevorzugt unabhängig voneinander für jeweils gegebenenfalls durch Halogen substituiertes $C_1$-$C_8$-Alkyl, $C_1$-$C_8$-Alkoxy, $C_1$-$C_8$-Alkylamino, Di-($C_1$-$C_8$-alkyl)amino, $C_1$-$C_8$-Alkylthio, $C_2$-$C_8$-Alkenylthio, $C_3$-$C_7$-Cycloalkylthio oder für jeweils gegebenenfalls durch Halogen, Nitro, Cyano, $C_1$-$C_4$-Alkoxy, $C_1$-$C_4$-Halogenalkoxy, $C_1$-$C_4$-Alkylthio, $C_1$-$C_4$-Halogenalkylthio, $C_1$-$C_4$-Alkyl oder $C_1$-$C_4$-Halogenalkyl substituiertes Phenyl, Phenoxy oder Phenylthio,

$R^6$ und $R^7$ stehen unabhängig voneinander bevorzugt für Wasserstoff, für jeweils gegebenenfalls durch Halogen substituiertes $C_1$-$C_8$-Alkyl, $C_3$-$C_8$-Cycloalkyl, $C_1$-$C_8$-Alkoxy, $C_3$-$C_8$-Alkenyl, $C_1$-$C_8$-Alkoxy-$C_1$-$C_8$-alkyl, für gegebenenfalls durch Halogen, $C_1$-$C_8$-Halogenalkyl, $C_1$-$C_8$-Alkyl oder $C_1$-$C_8$-Alkoxy substituiertes Phenyl, gegebenenfalls durch Halogen, $C_1$-$C_8$-Alkyl, $C_1$-$C_8$-Halogenalkyl oder $C_1$-$C_8$-Alkoxy substituiertes Benzyl oder zusammen für einen gegebenenfalls

durch $C_1$-$C_4$-Alkyl substituierten $C_3$-$C_6$-Alkylenrest, in welchem gegebenenfalls ein Kohlenstoffatom durch Sauerstoff oder Schwefel ersetzt ist.

In den als bevorzugt genannten Restedefinitionen steht Halogen für Fluor, Chlor, Brom und Iod, insbesondere für Fluor, Chlor und Brom.

X steht besonders bevorzugt für Fluor, Chlor, Brom, $C_1$-$C_4$-Alkyl, $C_2$-$C_4$-Alkenyl, $C_2$-$C_4$-Alkinyl, $C_1$-$C_4$-Alkoxy, $C_1$-$C_4$-Halogenalkyl, $C_1$-$C_4$-Halogenalkoxy oder Cyano.

Z steht besonders bevorzugt für Wasserstoff, Fluor, Chlor, Brom, $C_1$-$C_4$-Alkyl, $C_2$-$C_4$-Alkenyl, $C_2$-$C_4$-Alkinyl oder für den Rest

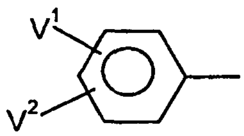

$V^1$ steht besonders bevorzugt für Wasserstoff, Fluor, Chlor, Brom, $C_1$-$C_6$-Alkyl, $C_1$-$C_4$-Alkoxy, $C_1$-$C_2$-Halogenalkyl, $C_1$-$C_2$-Halogenalkoxy, Nitro oder Cyano,

$V^2$ steht besonders bevorzugt für Wasserstoff, Fluor, Chlor, Brom, $C_1$-$C_4$-Alkyl, $C_1$-$C_4$-Alkoxy, $C_1$-$C_2$-Halogenalkyl oder $C_1$-$C_2$-Halogenalkoxy,

W und Y stehen besonders bevorzugt unabhängig voneinander für Wasserstoff, Fluor, Chlor, Brom, $C_1$-$C_4$-Alkyl, $C_1$-$C_4$-Halogenalkyl, $C_1$-$C_4$-Alkoxy oder $C_1$-$C_4$-Halogenalkoxy,

CKE steht besonders bevorzugt für eine der Gruppen

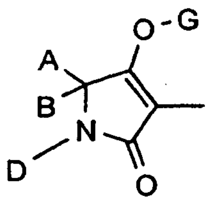 (1), 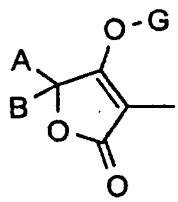 (2),

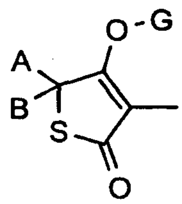 (3), 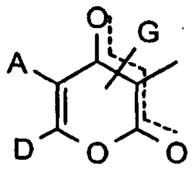 (4),

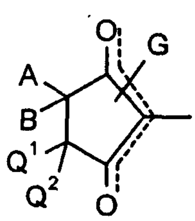 (5) oder 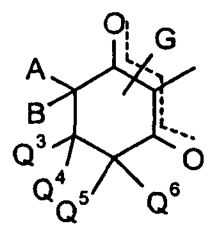 (6),

A steht besonders bevorzugt für Wasserstoff, jeweils gegebenenfalls durch Fluor oder Chlor substituiertes $C_1$-$C_6$-Alkyl, $C_1$-$C_4$-Alkoxy-$C_1$-$C_4$-alkyl oder gegebenenfalls durch Fluor, Chlor, $C_1$-$C_4$-Alkyl oder $C_1$-$C_4$-Alkoxy substituiertes $C_3$-$C_7$-Cycloalkyl,

B steht besonders bevorzugt für Wasserstoff oder $C_1$-$C_6$-Alkyl, oder

A, B und das Kohlenstoffatom, an das sie gebunden sind, stehen besonders bevorzugt für gesättigtes $C_3$-$C_7$-Cycloalkyl oder ungesättigtes $C_5$-$C_7$-Cycloalkyl, worin gegebenenfalls ein Ringglied durch Sauerstoff oder Schwefel ersetzt ist und welches gegebenenfalls einfach durch $C_1$-$C_6$-Alkyl, $C_1$-$C_3$-Halogenalkyl oder $C_1$-$C_6$-Alkoxy substituiert ist, oder

A, B und das Kohlenstoffatom, an das sie gebunden sind, stehen besonders bevorzugt für $C_5$-$C_6$-Cycloalkyl, welches durch eine gegebenenfalls ein oder zwei nicht direkt benachbarte Sauerstoff- oder Schwefelatome enthaltende gegebenenfalls durch Methyl oder Ethyl substituierte Alkylendiyl- oder durch eine Alkylendioxyl- oder durch eine Alkylendithiol-Gruppe substituiert ist, die mit dem Kohlenstoffatom, an das sie gebunden ist, einen weiteren fünf- oder sechsgliedrigen Ring bildet,

D steht besonders bevorzugt für Wasserstoff, für jeweils gegebenenfalls durch Fluor oder Chlor substituiertes $C_1$-$C_6$-Alkyl, $C_3$-$C_6$-Alkenyl, $C_1$-$C_4$-Alkoxy-$C_2$-$C_3$-alkyl, für gegebenenfalls durch $C_1$-$C_4$-Alkyl, $C_1$-$C_4$-Alkoxy oder $C_1$-$C_2$-Halogenalkyl substituiertes $C_3$-$C_7$-Cycloalkyl, oder

A und D stehen gemeinsam besonders bevorzugt für gegebenenfalls substituiertes $C_3$-$C_5$-Alkandiyl, in welchem eine Methylengruppe durch Sauerstoff oder Schwefel ersetzt sein kann, wobei als Substituenten $C_1$-$C_4$-Alkyl in Frage kommt, oder

A und D stehen (im Fall der Verbindungen der Formel (I-1)) gemeinsam mit den Atomen, an die sie gebunden sind, für eine der Gruppen AD-1 bis AD-10:

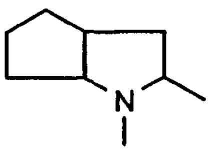

AD-1

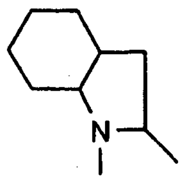

AD-2

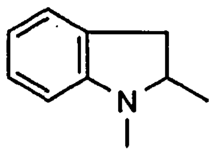

AD-3

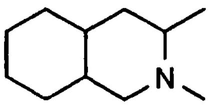

AD-4

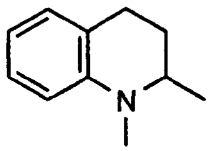

AD-5

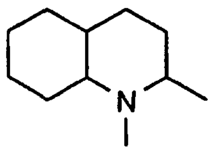

AD-6

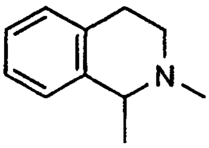

AD-7

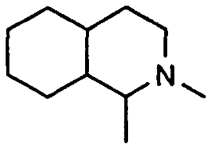

AD-8

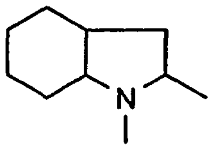

AD-9

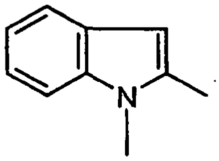

AD-10

A und $Q^1$ stehen gemeinsam besonders bevorzugt für jeweils gegebenenfalls einfach oder zweifach, gleich oder verschieden durch $C_1$-$C_4$-Alkyl oder $C_1$-$C_4$-Alkoxy substituiertes $C_3$-$C_4$-Alkandiyl oder $C_3$-$C_4$-Alkendiyl oder

$Q^1$ steht besonders bevorzugt für Wasserstoff,

$Q^2$ steht besonders bevorzugt für Wasserstoff,

$Q^4$, $Q^5$ und $Q^6$ stehen besonders bevorzugt unabhängig voneinander für Wasserstoff oder $C_1$-$C_2$-Alkyl,

$Q^3$ steht besonders bevorzugt für Wasserstoff, $C_1$-$C_4$-Alkyl, $C_1$-$C_4$-Alkoxy-$C_1$-$C_2$-alkyl, $C_1$-$C_4$-Alkylthio-$C_1$-$C_2$-alkyl oder gegebenenfalls durch Methyl oder Methoxy substituiertes $C_3$-$C_6$-Cycloalkyl, worin gegebenenfalls eine Methylengruppe durch Sauerstoff oder Schwefel ersetzt ist, oder

$Q^3$ und $Q^4$ stehen besonders bevorzugt gemeinsam mit dem Kohlenstoff, an das sie gebunden sind, für einen gegebenenfalls durch $C_1$-$C_4$-Alkyl oder $C_1$-$C_4$-Alkoxy substituierten gesättigten $C_5$-$C_6$-Ring, in welchem gegebenenfalls ein Ringglied durch Sauerstoff oder Schwefel ersetzt ist,

G steht besonders bevorzugt für Wasserstoff (a) oder für eine der Gruppen

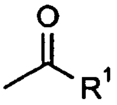 (b), 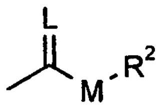 (c), 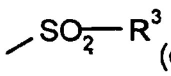 (d), 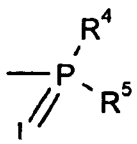 (e),

E (f) oder

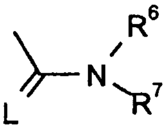

(g), insbesondere für (a), (b) oder (c), in welchen
E für ein Metallitinäquivalent oder ein Ammoniumion steht,
L für Sauerstoff oder Schwefel steht und
M für Sauerstoff oder Schwefel steht,

$R^1$ steht besonders bevorzugt für jeweils gegebenenfalls durch Fluor oder Chlor substituiertes $C_1$-$C_{16}$-Alkyl, $C_2$-$C_{16}$-Alkenyl, $C_1$-$C_6$-Alkoxy-$C_1$-$C_4$-alkyl, $C_1$-$C_6$-Alkylthio-$C_1$-$C_6$-alkyl oder gegebenenfalls durch Fluor, Chlor, $C_1$-$C_4$-Alkyl oder $C_1$-$C_4$-Alkoxy substituiertes $C_3$-$C_7$-Cycloalkyl, in welchem gegebenenfalls ein oder zwei nicht direkt benachbarte Ringglieder durch Sauerstoff und/oder Schwefel ersetzt sind,
für gegebenenfalls durch Fluor, Chlor, Brom, Cyano, Nitro, $C_1$-$C_4$-Alkyl, $C_1$-$C_4$-Alkoxy, $C_1$-$C_3$-Halogenalkyl oder $C_1$-$C_3$-Halogenalkoxy substituiertes Phenyl,

$R^2$ steht besonders bevorzugt für jeweils gegebenenfalls durch Fluor substituiertes $C_1$-$C_{16}$-Alkyl, $C_2$-$C_{16}$-Alkenyl oder $C_1$-$C_6$-Alkoxy-$C_2$-$C_6$-alkyl,
für gegebenenfalls durch Fluor, Chlor, $C_1$-$C_4$-Alkyl oder $C_1$-$C_4$-Alkoxy substituiertes $C_3$-$C_7$-Cycloalkyl,
für jeweils gegebenenfalls durch Fluor, Chlor, Brom, Cyano, Nitro, $C_1$-$C_4$-Alkyl, $C_1$-$C_3$-Alkoxy, $C_1$-$C_3$-Halogenalkyl oder $C_1$-$C_3$-Halogenalkoxy substituiertes Phenyl oder Benzyl,

$R^3$ steht besonders bevorzugt für gegebenenfalls durch Fluor substituiertes $C_1$-$C_6$-Alkyl oder für gegebenenfalls durch Fluor, Chlor, Brom, $C_1$-$C_4$-Alkyl, $C_1$-$C_4$-Alkoxy, $C_1$-C3-Halogenalkyl, $C_1$-$C_3$-Halogenalkoxy, Cyano oder Nitro substituiertes Phenyl,

$R^4$ steht besonders bevorzugt für $C_1$-$C_6$-Alkyl, $C_1$-$C_6$-Alkoxy, $C_1$-$C_6$-Alkylamino, Di-($C_1$-$C_6$-alkyl)amino,

$C_1$-$C_6$-Alkylthio, $C_3$-$C_4$-Alkenylthio, $C_3$-$C_6$-Cycloalkylthio oder für jeweils gegebenenfalls durch Fluor, Chlor, Brom, Nitro, Cyano, $C_1$-$C_3$-Alkoxy, $C_1$-$C_3$-Halogenalkoxy, $C_1$-$C_3$-Alkylthio, $C_1$-$C_3$-Halogenalkylthio, $C_1$-$C_3$-Alkyl oder $C_1$-$C_3$-Halogenalkyl substituiertes Phenyl, Phenoxy oder Phenylthio,

$R^5$ steht besonders bevorzugt für $C_1$-$C_6$-Alkoxy oder $C_1$-$C_6$-Alkylthio,

$R^6$ steht besonders bevorzugt für Wasserstoff, $C_1$-$C_6$-Alkyl, $C_3$-$C_6$-Cycloalkyl, $C_1$-$C_6$-Alkoxy, $C_3$-$C_6$-Alkenyl, $C_1$-$C_6$-Alkoxy-$C_1$-$C_4$-alkyl, für gegebenenfalls durch Fluor, Chlor, Brom, $C_1$-$C_3$-Halogenalkyl, $C_1$-$C_4$-Alkyl oder $C_1$-$C_4$-Alkoxy substituiertes Phenyl, für gegebenenfalls durch Fluor, Chlor, Brom, $C_1$-$C_4$-Alkyl, $C_1$-$C_3$-Halogenalkyl oder $C_1$-$C_4$-Alkoxy substituiertes Benzyl,

$R^7$ steht bevorzugt für $C_1$-$C_6$-Alkyl, $C_3$-$C_6$-Alkenyl oder $C_1$-$C_6$-Alkoxy-$C_1$-$C_4$-alkyl, oder

$R^6$ und $R^7$ stehen besonders bevorzugt zusammen für einen gegebenenfalls durch Methyl oder Ethyl substituierten $C_4$-$C_5$-Alkylenrest, in welchem gegebenenfalls eine Methylengruppe durch Sauerstoff oder Schwefel ersetzt ist.

In den als besonders bevorzugt genannten Restedefinitionen steht Halogen für Fluor, Chlor, Brom und Iod, insbesondere für Fluor, Chlor und Brom.

W steht ganz besonders bevorzugt für Wasserstoff, Chlor, Brom, Methyl, Ethyl oder Methoxy,

X steht ganz besonders bevorzugt für Chlor, Brom, Methyl, Ethyl, Methoxy, Ethoxy oder Trifluormethyl,

Y steht ganz besonders bevorzugt für Wasserstoff, Chlor, Brom, Methyl, Ethyl, Propyl oder Trifluormethyl,

Z steht ganz besonders bevorzugt für Wasserstoff, Chlor, Brom, Methyl oder für den Rest

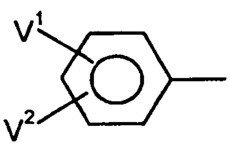 ,

$V^1$ steht ganz besonders bevorzugt für Wasserstoff, Fluor, Chlor, Methyl, Ethyl, Methoxy, Trifluormethyl oder Trifluormethoxy,

$V^2$ steht ganz besonders bevorzugt für Wasserstoff, Fluor, Chlor oder Methyl,

CKE steht ganz besonders bevorzugt für eine der Gruppen

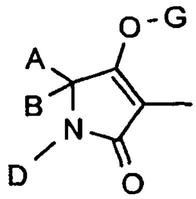 (1), 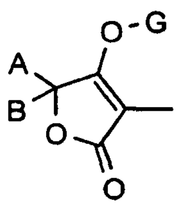 (2),

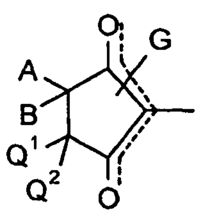 (5) oder 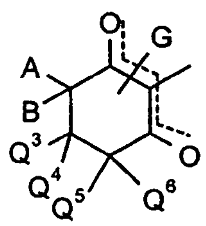 (6),

A steht ganz besonders bevorzugt für Wasserstoff, jeweils gegebenenfalls durch Fluor substituiertes $C_1$-$C_4$-Alkyl, $C_1$-$C_2$-Alkoxy-$C_1$-$C_2$-alkyl oder $C_3$-$C_6$-Cycloalkyl,

B steht ganz besonders bevorzugt für Wasserstoff oder Methyl, oder

A, B und das Kohlenstoffatom an das sie gebunden sind, stehen ganz besonders bevorzugt für gesättigtes $C_5$-$C_6$-Cycloalkyl, in welchem gegebenenfalls ein Ringglied durch Sauerstoff oder Schwefel ersetzt ist und welches gegebenenfalls einfach durch Methyl, Ethyl, Propyl, Trifluormethyl, Methoxy, Ethoxy, Propoxy, Butoxy oder Isobutoxy substituiert ist, oder

A, B und das Kohlenstoffatom, an das sie gebunden sind, stehen ganz besonders bevorzugt für $C_5$-$C_6$-Cycloalkyl, welches durch eine mit zwei nicht direkt benachbarten Sauerstoffatomen enthaltende Alkylendioxyl-Gruppe substituiert ist, die mit dem Kohlenstoff, an das sie gebunden sind, einen weiteren fünf- oder sechsgliedrigen Ring bilden,

D steht ganz besonders bevorzugt für Wasserstoff, $C_1$-$C_4$-Alkyl, $C_3$-$C_4$-Alkenyl, $C_1$-$C_2$-Alkoxy-$C_2$-$C_3$-alkyl oder $C_3$-$C_6$-Cycloalkyl,

oder

A und D stehen gemeinsam ganz besonders bevorzugt für gegebenenfalls substituiertes $C_3$-$C_5$-Alkandiyl, worin gegebenenfalls ein Kohlenstoffatom durch Sauerstoff oder Schwefel ersetzt ist,

A und D stehen (im Fall der Verbindungen der Formel (I-1)) gemeinsam mit den Atomen, an die sie gebunden sind, für die Gruppe:

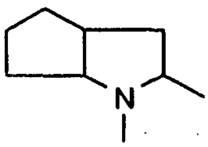

AD-1

A und $Q^1$ stehen gemeinsam ganz besonders bevorzugt für gegebenenfalls einfach oder zweifach durch Methyl oder Methoxy substituiertes $C_3$-$C_4$-Alkandiyl oder

$Q^1$ steht ganz besonders bevorzugt für Wasserstoff,

$Q^2$ steht ganz besonders bevorzugt für Wasserstoff,

$Q^4$, $Q^5$ und $Q^6$ stehen ganz besonders bevorzugt unabhängig voneinander für Wasserstoff oder Methyl,

$Q^3$ steht ganz besonders bevorzugt für Wasserstoff, Methyl, Ethyl oder $C_3$-$C_6$-Cycloalkyl, oder

$Q^3$ und $Q^4$ stehen ganz besonders bevorzugt gemeinsam mit dem Kohlenstoff, an den sie gebunden sind, für einen gegebenenfalls durch Methyl oder Methoxy substituierten gesättigten $C_5$-$C_6$-Ring, in welchem gegebenenfalls ein Ringglied durch Sauerstoff ersetzt ist,

G steht ganz besonders bevorzugt für Wasserstoff (a) oder für eine der Gruppen

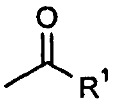 (b), 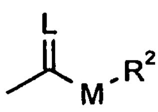 (c),

in welchen
E für ein Metallionäquivalent oder ein Ammoniumion steht,

L für Sauerstoff steht und
M für Sauerstoff oder Schwefel steht,

$R^1$ steht ganz besonders bevorzugt für jeweils gegebenenfalls durch Fluor oder Chlor substituiertes $C_1$-$C_{10}$-Alkyl, $C_2$-$C_{10}$-Alkenyl, $C_1$-$C_4$-Alkoxy-$C_1$-$C_2$-alkyl, $C_1$-$C_4$-Alkylthio-$C_1$-$C_2$-alkyl oder gegebenenfalls durch Fluor, Chlor, Methyl, Ethyl oder Methoxy substituiertes $C_3$-$C_6$-Cycloalkyl,
für gegebenenfalls durch Fluor, Chlor, Brom, Cyano, Nitro, Methyl, Methoxy, Trifluormethyl oder Trifluormethoxy substituiertes Phenyl,

$R^2$ steht ganz besonders bevorzugt für jeweils gegebenenfalls durch Fluor substituiertes $C_1$-$C_{10}$-Alkyl, $C_2$-$C_{10}$-Alkenyl oder $C_1$-$C_4$-Alkoxy-$C_2$-$C_4$-alkyl oder
für $C_3$-$C_6$-Cycloalkyl,
oder für jeweils gegebenenfalls durch Fluor, Chlor, Cyano, Nitro, Methyl, Methoxy, Trifluormethyl oder Trifluormethoxy substituiertes Phenyl oder Benzyl,

W steht insbesonders bevorzugt für Wasserstoff, Methyl, Ethyl, Chlor oder Brom,

X steht insbesonders bevorzugt für Chlor, Brom, Methyl, Ethyl oder Methoxy,

Y steht insbesonders bevorzugt für Wasserstoff, Chlor, Brom, Methyl oder Ethyl,

Z steht insbesonders bevorzugt für Wasserstoff, Chlor, Brom, Methyl, oder für den Rest

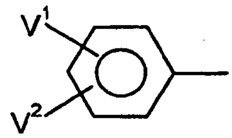

,

der insbesonders bevorzugt in der para-Position zum Substituenten X steht,

$V^1$ steht insbesonders bevorzugt für Fluor, Chlor, oder Trifluormethyl,

$V^2$ steht insbesonders bevorzugt für Wasserstoff, Fluor oder Chlor,

CKE steht insbesonders bevorzugt für eine der Gruppen

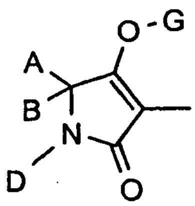 (1) oder 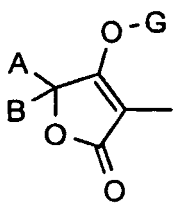 (2),

A, B und das Kohlenstoffatom an das sie gebunden sind, stehen insesonders bevorzugt für ungesättigtes $C_5$-$C_6$-Cycloalkyl, in welchem gegebenenfalls ein Ringglied durch Sauerstoff ersetzt ist und welches gegebenenfalls einfach durch Methyl, Methoxy, Ethoxy, Propoxy oder Trifluormethyl substituiert ist,

D steht insbesonders bevorzugt für Wasserstoff,

G steht insbesonders bevorzugt für Wasserstoff (a) oder für eine der Gruppen

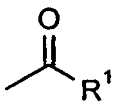 (b) oder 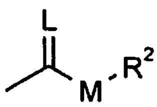 (c),

in welchen
L für Sauerstoff steht und
M für Sauerstoff oder Schwefel steht,

$R^1$ steht insbesonders bevorzugt für $C_1$-$C_6$-Alkyl, $C_2$-$C_6$-Alkenyl, $C_1$-$C_2$-Alkoxy-$C_1$-alkyl, $C_1$-$C_2$-Alkylthio-$C_1$-alkyl oder gegebenenfalls einfach durch Fluor, Chlor, Methyl oder Methoxy substituiertes Cyclopropyl oder Cyclohexyl, für gegebenenfalls einfach durch Fluor, Chlor, Brom, Cyano, Nitro, Methyl, Methoxy, Trifluormethyl oder Trifluormethoxy substituiertes Phenyl,

$R^2$ steht insbesonders bevorzugt für jeweils gegebenenfalls einfach bis dreifach durch Fluor substituiertes $C_1$-$C_8$-Alkyl, $C_2$-$C_6$-Alkenyl oder $C_1$-$C_4$-Alkoxy-$C_2$-$C_3$-alkyl, Phenyl oder Benzyl.

Hervorgehoben sind Verbindungen der oben genannten Formel (I), in welcher die Reste die folgende Bedeutung haben:

W steht hervorgehoben für Wasserstoff oder Methyl,

X steht hervorgehoben für Chlor, Brom, Methyl oder Ethyl;

Y steht hervorgehoben für Wasserstoff, Chlor, Brom oder Methyl,

Z steht hervorgehoben für Wasserstoff, Chlor, Brom oder Methyl,

CKE steht hervorgehoben für die Gruppe

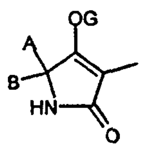
(1),

A, B und das Kohlenstoffatom an das sie gebunden sind, stehen hervorgehoben für gesättigtes $C_6$-Cycloalkyl, in welchem gegebenenfalls ein Ringglied durch Sauerstoff ersetzt ist und welches gegebenenfalls einfach durch Methyl, Trifluormethyl, Methoxy, Ethoxy oder Propoxy substituiert ist,

G steht hervorgehoben für Wasserstoff (a) oder für eine der Gruppen

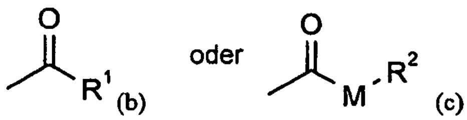
(b) oder (c),

in welchen

M für Sauerstoff oder Schwefel steht,

$R^1$ steht hervorgehoben für $C_1$-$C_6$-Alkyl, $C_2$-$C_4$-Alkenyl, Methoxymethyl, Ethoxymethyl, Ethylthiomethyl, Cyclopropyl, Cyclopentyl, Cyclohexyl oder
für gegebenenfalls einfach durch Fluor, Chlor, Brom, Methyl, Methoxy, Trifluormethyl, Trifluormethoxy, Cyano oder Nitro substituiertes Phenyl,

$R^2$ steht hervorgehoben für $C_1$-$C_6$-Alkyl, $C_2$-$C_4$-Alkenyl, Methoxyethyl, Ethoxyethyl, Phenyl oder Benzyl,

in Form ihrer Isomerengemische oder reinen Isomeren.

Besonders hervorgehoben als Beispiele sind Verbindungen der Formel (I-1'), in welcher die Reste die folgende Bedeutung haben:

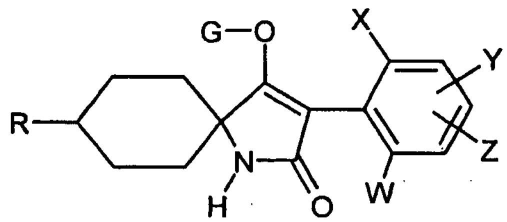

(I-1')

| Beispiel-Nr. | W | X | Y | Z | R | G | bekannt aus |
|---|---|---|---|---|---|---|---|
| I-1'-1 | $CH_3$ | $C_2H_5$ | 4-Br | H | OCH3 | H | WO 97/02243; I-1-a-40 |
| I-1'-2 | H | Br | H | 5-CH3 | OCH3 | CO-i-$C_3H_7$ | WO 98/05638; I-1-b-33 |
| I-1'-3 | H | Br | H | 5-CH3 | $OCH_3$ | $CO_2$-$C_2H_5$ | WO 98/05638; I-1-c-22 |
| I-1'-4 | H | $CH_3$ | H | 5-$CH_3$ | $OCH_3$ | H | WO 98/05638; I-1-a-4 WO 04/007448; I-a-1 |
| I-1'-5 | H | $CH_3$ | H | 5-$CH_3$ | OCH3 | $CO_2$-$C_2H_5$ | WO 98/05638; I-1-c-4 WO 04/007448; I-c-1 |
| I-1'-6 | $CH_3$ | $CH_3$ | H | 3-Br | $OCH_3$ | H | WO 97/36868; I-1-a-17 |
| I-1'-7 | $CH_3$ | $CH_3$ | H | 3-Cl | $OCH_3$ | H | WO 97/36868; I-1-a-2 |
| I-1'-8 | H | Br | 4-$CH_3$ | 5-$CH_3$ | $OCH_3$ | CO-i-$C_3H_7$ | WO 97/01535; I-1-b-54 |
| I-1'-9 | H | $CH_3$ | 4-Cl | 5-$CH_3$ | $OCH_3$ | $CO_2$-$C_2H_5$ | WO 97/01535; I-1-c-18 |
| I-1'-10 | $CH_3$ | $CH_3$ | 4-$CH_3$ | 3-$CH_3$ | $OCH_3$ | H | WO 97/36868; I-1-a-4 |
| I-1'-11 | $CH_3$ | $CH_3$ | H | 3-Br | $OC_2H_5$ | CO-i-$C_3H_7$ | WO 01/89300; I-10 |
| I-1'-12 | H | $CH_3$ | 4-$CH_3$ | 5-$CH_3$ | $OC_2H_5$ | CO-n-$C_3H_7$ | WO 97/01535; I-1-b-25 |
| I-1'-13 | H | $CH_3$ | 4-$CH_3$ | 5-$CH_3$ | $OC_2H_5$ | CO-i-$C_3H_7$ | WO 97/01535; I-1-b-22 |
| I-1'-14 | H | $CH_3$ | 4-$CH_3$ | 5-$CH_3$ | $OC_2H_5$ | CO-c-$C_3H_5$ | WO 97/01535; I-1-b-34 |

Die oben aufgeführten allgemeinen oder in Vorzugsbereichen aufgeführten Restedefinitionen bzw. Erläuterungen können untereinander, also auch zwischen den jeweiligen Bereichen und Vorzugsbereichen beliebig kombiniert werden.

Erfindungsgemäß bevorzugt wird die Verwendung der Verbindungen der Formel (I), in welchen eine Kombination der vorstehend als bevorzugt (vorzugsweise) aufgeführten Bedeutungen vorliegt.

Erfindungsgemäß besonders bevorzugt wird die Verwendung der Verbindungen der Formel (I), in welchen eine Kombination der vorstehend als besonders bevorzugt aufgeführten Bedeutungen vorliegt.

Erfindungsgemäß ganz besonders bevorzugt wird die Verwendung der Verbindungen der Formel (I), in welchen eine Kombination der vorstehend als ganz besonders bevorzugt aufgeführten Bedeutungen vorliegt.

Erfindungsgemäß insbesondere bevorzugt wird die Verwendung der Verbindungen der Formel (I), in welchen eine Kombination der vorstehend als insbesondere bevorzugt aufgeführten Bedeutungen vorliegt.

Erfindungsgemäß hervorgehoben wird die Verwendung der Verbindungen der Formel (I), in welchen eine Kombination der vorstehend als hervorgehoben aufgeführten Bedeutungen vorliegt.

Gesättigte oder ungesättigte Kohlenwasserstoffreste wie Alkyl oder Alkenyl können, auch in Verbindung mit Heteroatomen, wie z.B. in Alkoxy, soweit möglich, jeweils geradkettig oder verzweigt sein.

Gegebenenfalls substituierte Reste können, sofern nichts anderes angegeben ist, einfach oder mehrfach substituiert sein, wobei bei Mehrfachsubstitutionen die Substituenten gleich oder verschieden sein können.

Im einzelnen seien außer den bei den Beispielen genannten Verbindungen die folgenden Verbindungen der Formel (I-1-a) genannt:

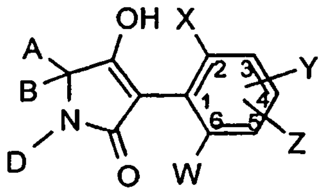

**Tabelle 1:** W = $CH_3$, X = $CH_3$, Y = 4-$CH_3$, Z = H.

| A | B | D |
|---|---|---|
| $CH_3$ | $CH_3$ | H |
| $C_2H_5$ | $CH_3$ | H |
| $C_3H_7$ | $CH_3$ | H |
| i-$C_3H_7$ | $CH_3$ | H |
| 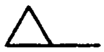 | $CH_3$ | H |
| $-(CH_2)_4$ | | H |
| $-(CH_2)_5-$ | | H |
| $-(CH_2)_2-O-(CH_2)_2-$ | | H |
| $-CH_2-O-(CH_2)_3-$ | | H |
| $-CH_2-CHCH_3-(CH_2)_3-$ | | H |
| $-(CH_2)_2-CHCH_3-(CH_2)_2-$ | | H |
| $-(CH_2)_2-CHOCH_3-(CH_2)_2-$ | | H |
| $-(CH_2)_2-CHOC_2H_5-(CH_2)_2-$ | | H |
| $-(CH_2)_2-C(CH_3)_2-(CH_2)_2-$ | | H |

**Tabelle 2:** A, B und D wie in Tabelle 1 angegeben W = $CH_3$; X = $CH_3$; Y = 4-Cl; Z = H.

**Tabelle 3:** A, B und D wie in Tabelle 1 angegeben W = $CH_3$; X = $CH_3$; Y = 4-Br; Z = H.

**Tabelle 4:** A, B und D wie in Tabelle 1 angegeben W = $C_2H_5$; X = $CH_3$; Y = 4-Cl; Z = H.

**Tabelle 5:** A, B und D wie in Tabelle 1 angegeben W = $C_2H_5$; X = $CH_3$; Y = 4-Br; Z = H.

**Tabelle 6:** A, B und D wie in Tabelle 1 angegeben W = $C_2H_5$; X = $C_2H_5$; Y = 4-Cl; Z = H.

**Tabelle 7:** A, B und D wie in Tabelle 1 angegeben W = $C_2H_5$; X = $C_2H_5$; Y = 4-Br; Z = H.

**Tabelle 8:** A, B und D wie in Tabelle 1 angegeben W = $CH_3$; X = Cl; Y = 4-Cl; Z = H.

**Tabelle 9:** A, B und D wie in Tabelle 1 angegeben W = $CH_3$; X = Br; Y = 4-Br; Z = H.

**Tabelle 10:** A, B und D wie in Tabelle 1 angegeben W = $CH_3$; X = Cl; Y = 4-Br; Z = H.

**Tabelle 11:** A, B und D wie in Tabelle 1 angegeben W = $CH_3$; X = Br; Y = 4-Cl; Z = H.

**Tabelle 12:** A, B und D wie in Tabelle 1 angegeben W = $C_2H_5$; X = Cl; Y = 4-Cl; Z = H.

**Tabelle 13:** A, B und D wie in Tabelle 1 angegeben W = $C_2H_5$; X = Br; Y = 4-Br; Z = H.

**Tabelle 14:** A, B und D wie in Tabelle 1 angegeben $W = C_2H_5$; X = Cl; Y = 4-Br; Z = H.

**Tabelle 15:** A, B und D wie in Tabelle 1 angegeben $W = C_2H_5$; X = Br; Y = 4-Cl; Z = H.

**Tabelle 16:** A, B und D wie in Tabelle 1 angegeben W = H; X = Cl; Y = H; Z = H.

**Tabelle 17:** A, B und D wie in Tabelle 1 angegeben W = H; X = Br; Y = H; Z = H.

**Tabelle 18:** A, B und D wie in Tabelle 1 angegeben W = H; $X = CH_3$; Y = H; Z = H.

**Tabelle 19:** A, B und D wie in Tabelle 1 angegeben W = H; $X = CF_3$; Y = H; Z = H.

**Tabelle 20:** A, B und D wie in Tabelle 1 angegeben W = H; $X = CH_3$; Y = 4-Cl; Z = H.

**Tabelle 21:** A, B und D wie in Tabelle 1 angegeben W = H; X = Cl; $Y = 4\text{-}CH_3$; Z = H.

**Tabelle 22:** A, B und D wie in Tabelle 1 angegeben W = H; $X = CH_3$; Y = 4-Br; Z = H.

**Tabelle 23:** A, B und D wie in Tabelle 1 angegeben W = H; X = Br; $Y = 4\text{-}CH_3$; Z = H.

**Tabelle 24:** A, B und D wie in Tabelle 1 angegeben W = H; X = Cl; Y = 4-Cl; Z = H.

**Tabelle 25:** A, B und D wie in Tabelle 1 angegeben W = H; X = Cl; Y = 4-Br; Z = H.

**Tabelle 26:** A, B und D wie in Tabelle 1 angegeben W = H; X = Br; Y = 4-Cl; Z = H.

**Tabelle 27:** A, B und D wie in Tabelle 1 angegeben $W = CH_3$; X = Cl; $Y = 4\text{-}CH_3$; Z = H.

**Tabelle 28:** A, B und D wie in Tabelle 1 angegeben $W = CH_3$; X = Br; $Y = 4\text{-}CH_3$; Z = H.

**Tabelle 29:** A, B und D wie in Tabelle 1 angegeben $W = C_2H_5$; X = Cl; $Y = 4\text{-}CH_3$; Z = H.

**Tabelle 30:** A, B und D wie in Tabelle 1 angegeben $W = C_2H_5$; X = Br; $Y = 4\text{-}CH_3$; Z = H.

**Tabelle 31:** A, B und D wie in Tabelle 1 angegeben $W = C_2H_5$; $X = CH_3$; $Y = 4\text{-}CH_3$; Z = H.

**Tabelle 32:** A, B und D wie in Tabelle 1 angegeben $W = C_2H_5$; $X = C_2H_5$; $Y = 4\text{-}CH_3$; Z = H.

**Tabelle 33:** A, B und D wie in Tabelle 1 angegeben $W = C_2H_5$; $X = C_2H_5$; $Y = 4\text{-}C_2H_5$; Z = H.

**Tabelle 34:** A, B und D wie in Tabelle 1 angegeben W = H; $X = CH_3$; $Y = 4\text{-}CH_3$; $Z = 5\text{-}CH_3$.

**Tabelle 35:** A, B und D wie in Tabelle 1 angegeben W = H; $X = CH_3$; Y = 4-Cl; $Z = 5\text{-}CH_3$.

**Tabelle 36:** A, B und D wie in Tabelle 1 angegeben W = H; X = Br; $Y = 4\text{-}CH_3$; $Z = 5\text{-}CH_3$.

**Tabelle 37:** A, B und D wie in Tabelle 1 angegeben W = H; X = Cl; Y = 4-Cl; $Z = 5\text{-}CH_3$.

**Tabelle 38:** A, B und D wie in Tabelle 1 angegeben W = H; $X = CH_3$; Y = 4-Br; $Z = 5\text{-}CH_3$.

**Tabelle 39:** A, B und D wie in Tabelle 1 angegeben W = H; X = Cl; $Y = 4\text{-}CH_3$; Z = 5-Cl.

**Tabelle 40:** A, B und D wie in Tabelle 1 angegeben W = H; $X = CH_3$; Y = H; $Z = 5\text{-}CH_3$.

**Tabelle 41:** A, B und D wie in Tabelle 1 angegeben W = H; X = Cl; Y = H; $Z = 5\text{-}CH_3$.

**Tabelle 42:** A, B und D wie in Tabelle 1 angegeben W = H; X = Br; Y = H; $Z = 5\text{-}CH_3$.

**Tabelle 43:** A, B und D wie in Tabelle 1 angegeben W = $CH_3$; X = $CH_3$; Y = 4-$CH_3$; Z = 3-$CH_3$.

**Tabelle 44:** A, B und D wie in Tabelle 1 angegeben W = $CH_3$; X = $CH_3$; Y = H; Z = 3-Br.

**Tabelle 45:** A, B und D wie in Tabelle 1 angegeben W = $CH_3$; X = $CH_3$; Y = 4- $CH_3$; Z = 3-Cl.

**Tabelle 46:** A, B und D wie in Tabelle 1 angegeben W = $CH_3$; X = $CH_3$; Y = 4-$CH_3$; Z = 3-Br.

**Tabelle 47:** A, B und D wie in Tabelle 1 angegeben W = $CH_3$; X = $CH_3$; Y = H; Z = 3-Cl.

Die Verbindungen der Formel (I) sind aus den eingangs zitierten Offenbarungsschriften prinzipiell bekannt oder lassen sich nach den dort beschriebenen Verfahren herstellen.

Bevorzugte Bedeutungen der oben in Zusammenhang mit den die Kulturpflanzen-Verträglichkeit verbessernden Verbindungen ("Herbizid-Safenern") der Formeln (IIa), (IIb), (IIc), (IId) und (IIe) aufgeführten Gruppen werden im Folgenden definiert.

m steht bevorzugt für die Zahlen 0, 1, 2, 3 oder 4,

$A^1$ steht bevorzugt für eine der nachstehend skizzierten divalenten heterocyclischen Gruppierungen

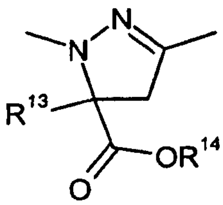 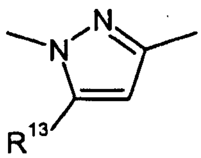 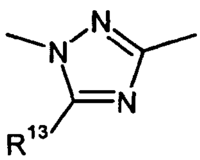 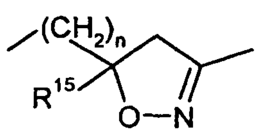 ,

n steht bevorzugt für die Zahlen 0, 1, 2, 3 oder 4,

$A^2$ steht bevorzugt für jeweils gegebenenfalls durch Methyl, Ethyl, Methoxycarbonyl oder Ethoxycarbonyl, Allyloxycarbonyl substituiertes Methylen oder Ethylen,

$R^8$ steht bevorzugt für Hydroxy, Mercapto, Amino, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino,

$R^9$ steht bevorzugt für Hydroxy, Mercapto, Amino, Methoxy, Ethoxy, n- oder i-Propoxy, n-, i-, s- oder t-Butoxy, 1-Methyl-hexyloxy, Allyloxy, 1-Allyloxymethyl-ethoxy, Methylthio, Ethylthio, n- oder i-Propylthio, n-, i-, s- oder t-Butylthio, Methylamino, Ethylamino, n- oder iPropylamino, n-, i-, s- oder t-Butylamino, Dimethylamino oder Diethylamino,

$R^{10}$ steht bevorzugt für jeweils gegebenenfalls durch Fluor, Chlor und/oder Brom substituiertes Methyl, Ethyl, n- oder i-Propyl,

$R^{11}$ steht bevorzugt für Wasserstoff, jeweils gegebenenfalls durch Fluor und/oder Chlor substituiertes Methyl, Ethyl, n- oder i-Propyl, n-, i-, s- oder t-Butyl, Propenyl, Butenyl, Propinyl oder Butinyl, Methoxymethyl, Ethoxymethyl, Methoxyethyl, Ethoxyethyl, Dioxolanylmethyl, Furyl, Furylmethyl, Thienyl, Thiazolyl, Piperidinyl, oder gegebenenfalls durch Fluor, Chlor, Methyl, Ethyl, n- oder i-Propyl, n-, i-, s- oder t-Butyl substituiertes Phenyl,

$R^{12}$ steht bevorzugt für Wasserstoff, jeweils gegebenenfalls durch Fluor und/oder Chlor substituiertes Methyl, Ethyl, n- oder i-Propyl, n-, i-, s- oder t-Butyl, Propenyl, Butenyl, Propinyl oder Butinyl, Methoxymethyl, Ethoxymethyl, Methoxyethyl, Ethoxyethyl, Dioxolanylmethyl, Furyl, Furylmethyl, Thienyl, Thiazolyl, Piperidinyl, oder gegebenenfalls durch Fluor, Chlor, Methyl, Ethyl, n- oder i-Propyl, n-, i-, s- oder t-Butyl substituiertes Phenyl, oder zusammen mit $R^{11}$ für einen der Reste $-CH_2-O-CH_2-CH_2-$ und $-CH_2-CH_2-O-CH_2-CH_2-$, die gegebenenfalls substituiert sind durch Methyl, Ethyl, Furyl, Phenyl, einen annellierten Benzolring oder durch zwei Substituenten, die gemeinsam mit dem C-Atom, an das sie gebunden sind, einen 5- oder 6-gliedrigen Carbocyclus bilden,

$R^{13}$ steht bevorzugt für Wasserstoff, Cyano, Fluor, Chlor, Brom, oder für jeweils gegebenenfalls durch Fluor, Chlor und/oder Brom substituiertes Methyl, Ethyl, n- oder i-Propyl, Cyclopropyl, Cyclobutyl, Cyclopentyl, Cyclohexyl oder Phenyl,

$R^{14}$ steht bevorzugt für Wasserstoff, gegebenenfalls durch Hydroxy, Cyano, Fluor, Chlor, Methoxy, Ethoxy, n- oder i-Propoxy substituiertes Methyl, Ethyl, n- oder i-Propyl, n-, i-, s-oder t-Butyl,

$R^{15}$ steht bevorzugt für Wasserstoff, Cyano, Fluor, Chlor, Brom, oder für jeweils gegebenenfalls durch Fluor, Chlor und/oder Brom substituiertes Methyl, Ethyl, n- oder i-Propyl, n-, i-, s-oder t-Butyl, Cyclopropyl, Cyclobutyl, Cyclopentyl, Cyclohexyl oder Phenyl,

$X^1$ steht bevorzugt für Nitro, Cyano, Fluor, Chlor, Brom, Methyl, Ethyl, n- oder i-Propyl, n-, i-, s- oder t-Butyl, Difluormethyl, Dichlormethyl, Trifluormethyl, Trichlormethyl, Chlordifluormethyl, Fluordichlormethyl, Methoxy, Ethoxy, n- oder i-Propoxy, Difluormethoxy oder Trifluormethoxy,

$X^2$ steht bevorzugt für Wasserstoff, Nitro, Cyano, Fluor, Chlor, Brom, Methyl, Ethyl, n- oder i-Propyl, n-, i-, s- oder t-Butyl, Difluormethyl, Dichlormethyl, Trifluormethyl, Trichlormethyl, Chlordifluormethyl, Fluordichlormethyl, Methoxy, Ethoxy, n- oder i-Propoxy, Difluormethoxy oder Trifluormethoxy,

$X^3$ steht bevorzugt für Wasserstoff, Nitro, Cyano, Fluor, Chlor, Brom, Methyl, Ethyl, n- oder i-Propyl, n-, i-, s- oder t-Butyl, Difluormethyl, Dichlormethyl, Trifluormethyl, Trichlormethyl, Chlordifluormethyl, Fluordichlormethyl, Methoxy, Ethoxy, n- oder i-Propoxy, Difluormethoxy oder Trifluormethoxy,

t steht bevorzugt für die Zahlen 0, 1, 2, 3 oder 4,

v steht bevorzugt für die Zahlen 0, 1, 2, 3 oder 4,

$R^{16}$ steht bevorzugt für Wasserstoff, Methyl, Ethyl, n- oder i-Propyl,

$R^{17}$ steht bevorzugt für Wasserstoff, Methyl, Ethyl, n- oder i-Propyl,

$R^{18}$ steht bevorzugt für Wasserstoff, jeweils gegebenenfalls durch Cyano, Fluor, Chlor, Methoxy, Ethoxy, n- oder i-Propoxy substituiertes Methyl, Ethyl, n- oder i-Propyl, n-, i-, s- oder t-Butyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino oder Diethylamino, oder jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino,

$R^{19}$ steht bevorzugt für Wasserstoff, jeweils gegebenenfalls durch Cyano, Hydroxy, Fluor, Chlor, Methoxy, Ethoxy, n- oder i-Propoxy substituiertes Methyl, Ethyl, n- oder i-Propyl, n-, i- oder s-Butyl, jeweils gegebenenfalls durch Cyano, Fluor, Chlor oder Brom substituiertes Propenyl, Butenyl, Propinyl oder Butinyl, oder jeweils gegebenenfalls durch Cyano, Fluor, Chlor, Brom, Methyl, Ethyl, n- oder i-Propyl substituiertes Cyclopropyl, Cyclobutyl, Cyclopentyl oder Cyclohexyl,

$R^{20}$ steht bevorzugt für Wasserstoff, jeweils gegebenenfalls durch Cyano, Hydroxy, Fluor, Chlor, Methoxy, Ethoxy, n- oder i-Propoxy substituiertes Methyl, Ethyl, n- oder i-Propyl, n-, i- oder s-Butyl, jeweils gegebenenfalls durch Cyano, Fluor, Chlor oder Brom substituiertes Propenyl, Butenyl, Propinyl oder Butinyl, jeweils gegebenenfalls durch Cyano, Fluor, Chlor, Brom, Methyl, Ethyl, n- oder i-Propyl substituiertes Cyclopropyl, Cyclobutyl, Cyclopentyl oder Cyclohexyl, oder gegebenenfalls durch Nitro, Cyano, Fluor, Chlor, Brom, Methyl, Ethyl, n-oder i-Propyl, n-, i-, s- oder t-Butyl, Trifluormethyl, Methoxy, Ethoxy, n- oder i-Propoxy, Difluormethoxy oder Trifluormethoxy substituiertes Phenyl, oder zusammen mit $R^{19}$ für jeweils gegebenenfalls durch Methyl oder Ethyl substituiertes Butan-1,4-diyl (Trimethylen), Pentan-1,5-diyl, 1-Oxa-butan-1,4-diyl oder 3-Oxa-pentan-1,5-diyl,

$X^4$ steht bevorzugt für Nitro, Cyano, Carboxy, Carbamoyl, Formyl, Sulfamoyl, Hydroxy, Amino, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy,

$X^5$ steht bevorzugt für Nitro, Cyano, Carboxy, Carbamoyl, Formyl, Sulfamoyl, Hydroxy, Amino, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy,

Beispiele für die als erfindungsgemäße Herbizid-Safener ganz besonders bevorzugten Verbindungen der Formel (IIa) sind in der nachstehenden Tabelle aufgeführt.

**Tabelle** Beispiele für die Verbindungen der Formel (IIa)

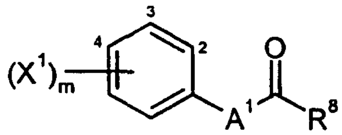

(IIa)

| Beispiel-Nr. | (Positionen) $(X^1)_m$ | $A^1$ | $R^8$ |
|---|---|---|---|
| IIa-1 | (2) Cl, (4) Cl | 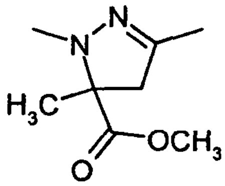 | $OCH_3$ |
| IIa-2 | (2) Cl, (4) Cl | 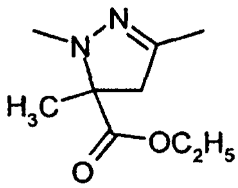 | $OCH_3$ |
| IIa-3 | (2) Cl, (4) Cl | 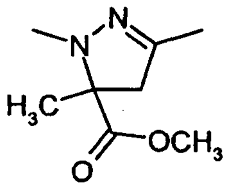 | $OC_2H_5$ |
| IIa-4 | (2) Cl, (4) Cl | 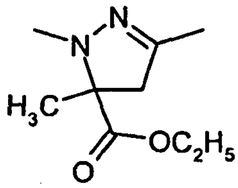 | $OC_2H_5$ |
| IIa-5 | (2) Cl | 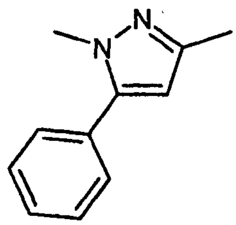 | $OCH_3$ |
| IIa-6 | (2) Cl, (4) Cl | 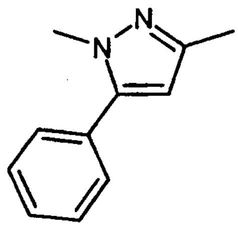 | $OCH_3$ |

(fortgesetzt)

| Beispiel-Nr. | (Positionen) $(X^1)_m$ | $A^1$ | $R^8$ |
|---|---|---|---|
| IIa-7 | (2) F | 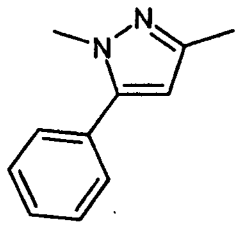 | $OCH_3$ |
| IIa-8 | (2) F | 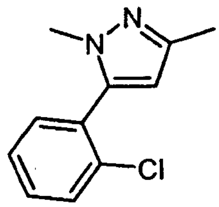 | $OCH_3$ |
| IIa-9 | (2) Cl, (4) Cl | 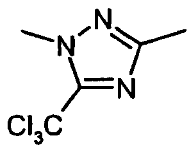 | $OC_2H_5$ |
| IIa-10 | (2) Cl, (4) $CF_3$ | 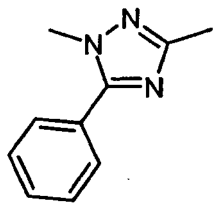 | $OCH_3$ |
| IIa-11 | (2) Cl | 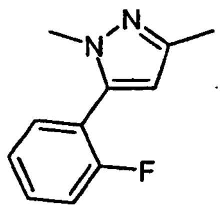 | $OCH_3$ |
| IIa-12 | - | 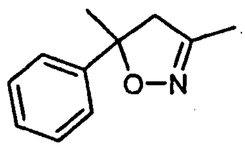 | $OC_2H_5$ |
| IIa-13 | (2) Cl, (4) Cl | 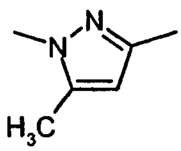 | $OC_2H_5$ |
| IIa-14 | (2) Cl, (4) Cl | 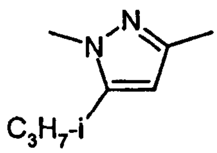 | $OC_2H_5$ |
| IIa-15 | (2) Cl, (4) Cl | 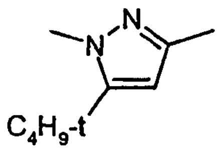 | $OC_2H_5$ |

(fortgesetzt)

| Beispiel-Nr. | (Positionen) $(X^1)_m$ | $A^1$ | $R^8$ |
|---|---|---|---|
| IIa-16 | (2) Cl, (4) Cl | 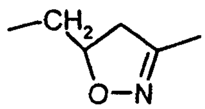 | $OC_2H_5$ |
| IIa-17 | (2) Cl, (4) Cl | 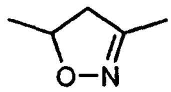 | $OC_2H_5$ |
| IIa-18 | - | 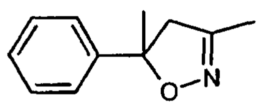 | OH |

Beispiele für die als erfindungsgemäße Herbizid-Safener ganz besonders bevorzugten Verbindungen der Formel (IIb) sind in der nachstehenden Tabelle aufgeführt.

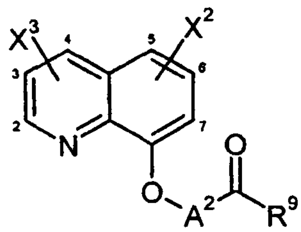

(IIb)

<u>Tabelle</u> Beispiele für die Verbindungen der Formel (IIb)

| Beispiel-Nr. | (Position) $X^2$ | (Position) $X^3$ | $A^2$ | $R^9$ |
|---|---|---|---|---|
| IIb-1 | (5) Cl | - | $CH_2$ | OH |
| IIb-2 | (5) Cl | - | $CH_2$ | $OCH_3$ |
| IIb-3 | (5) Cl | - | $CH_2$ | $OC_2H_5$ |
| IIb-4 | (5) Cl | - | $CH_2$ | $OC_3H_7$-n |
| IIb-5 | (5) Cl | - | $CH_2$ | $OC_3H_7$-i |
| IIb-6 | (5) Cl | - | $CH_2$ | $OC_4H_9$-n |
| IIb-7 | (5) Cl | - | $CH_2$ | $OCH(CH_3)C_5H_{11}$-n |
| IIb-8 | (5) Cl | (2) F | $CH_2$ | OH |
| IIb-9 | (5) Cl | (2) Cl | $CH_2$ | OH |
| IIb-10 | (5) Cl | - | $CH_2$ | $OCH_2CH=CH_2$ |
| IIb-11 | (5) | - | $CH_2$ | $OC_4H_9$-i |

(fortgesetzt)

| Beispiel-Nr. | (Position) $X^2$ | (Position) $X^3$ | $A^2$ | $R^9$ |
|---|---|---|---|---|
| | Cl | | | |
| IIb-12 | (5) Cl | - | $CH_2$ | 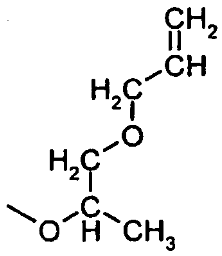 |
| IIb-13 | (5) Cl | - | 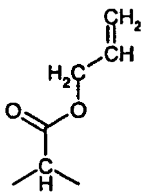 | $OCH_2CH=CH_2$ |
| IIb-14 | (5) Cl | - | 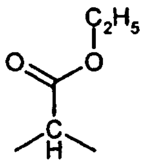 | $OC_2H_5$ |
| IIb-15 | (5) Cl | - | 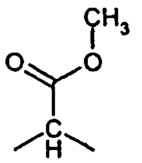 | $OCH_3$ |

Beispiele für die als erfindungsgemäße Herbizid-Safener ganz besonders bevorzugten Verbindungen der Formel (IIc) sind in der nachstehenden Tabelle aufgeführt.

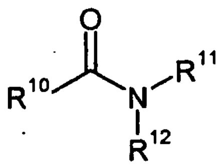

(IIc)

**Tabelle** Beispiele für die Verbindungen der Formel (IIc)

| Beispiel-Nr. | $R^{10}$ | $N(R^{11}, R^{12})$ |
|---|---|---|
| IIc-1 | $CHCl_2$ | $N(CH_2CH=CH_2)_2$ |
| IIc-2 | $CHCl_2$ | 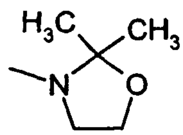 |
| IIc-3 | $CHCl_2$ | 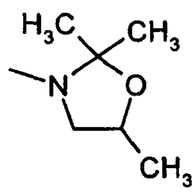 |

(fortgesetzt)

| Beispiel-Nr. | $R^{10}$ | $N(R^{11}, R^{12})$ |
|---|---|---|
| IIc-4 | $CHCl_2$ | 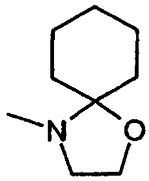 |
| IIc-5 | $CHCl_2$ | 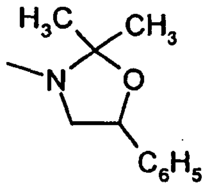 |
| IIc-6 | $CHCl_2$ | 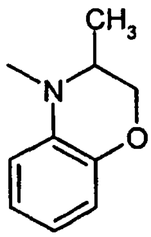 |
| IIc-7 | $CHCl_2$ | 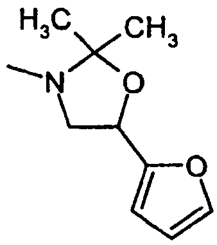 |

Beispiele für die als erfindungsgemäße Herbizid-Safener ganz besonders bevorzugten Verbindungen der Formel (IId) sind in der nachstehenden Tabelle aufgeführt.

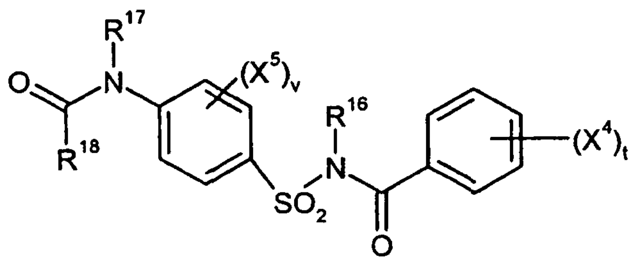

(IId)

<u>Tabelle</u> Beispiele für die Verbindungen der Formel (IId)

| Beispiel-Nr. | $R^{16}$ | $R^{17}$ | $R^{18}$ | (Positionen) $(X^4)_t$ | (Positionen) $(X^5)_v$ |
|---|---|---|---|---|---|
| IId-1 | H | H | $CH_3$ | (2) $OCH_3$ | - |
| IId-2 | H | H | $C_2H_5$ | (2)$OCH_3$ | - |
| IId-3 | H | H | $C_3H_7$-n | (2) $OCH_3$ | - |
| IId-4 | H | H | $C_3H_7$-i | (2) $OCH_3$ | - |

(fortgesetzt)

| Beispiel-Nr. | $R^{16}$ | $R^{17}$ | $R^{18}$ | (Positionen) $(X^4)_t$ | (Positionen) $(X^5)_v$ |
|---|---|---|---|---|---|
| IId-5 | H | H | 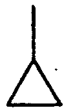 | (2) $OCH_3$ | - |
| IId-6 | H | H | $CH_3$ | (2) $OCH_3$<br>(5) $CH_3$ | - |
| IId-7 | H | H | $C_2H_5$ | (2) $OCH_3$<br>(5) $CH_3$ | - |
| IId-8 | H | H | $C_3H_7$-n | (2) $OCH_3$<br>(5) $CH_3$ | - |
| IId-9 | H | H | $C_3H_7$-i | (2) $OCH_3$<br>(5) $CH_3$ | - |
| IId-10 | H | H | 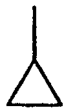 | (2) $OCH_3$<br>(5) $CH_3$ | - |
| IId-11 | H | H | $OCH_3$ | (2) $OCH_3$<br>(5) $CH_3$ | - |
| IId-12 | H | H | $OC_2H_5$ | (2) $OCH_3$<br>(5) $CH_3$ | - |
| IId-13 | H | H | $OC_3H_7$-i | (2) $OCH_3$<br>(5) $CH_3$ | - |
| IId-14 | H | H | $SCH_3$ | (2) $OCH_3$<br>(5) $CH_3$ | - |
| IId-15 | H | H | $SC_2H_5$ | (2) $OCH_3$<br>(5) $CH_3$ | - |
| IId-16 | H | H | $SC_3H_7$-i | (2) $OCH_3$<br>(5) $CH_3$ | - |
| IId-17 | H | H | $NHCH_3$ | (2) $OCH_3$<br>(5) $CH_3$ | - |
| IId-18 | H | H | $NHC_2H_5$ | (2) $OCH_3$<br>(5) $CH_3$ | - |
| IId-19 | H | H | $NHC_3H_7$-i | (2) $OCH_3$<br>(5) $CH_3$ | - |
| IId-20 | H | H | 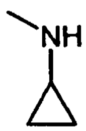 | (2) $OCH_3$<br>(5) $CH_3$ | - |
| IId-21 | H | H | $NHCH_3$ | (2) $OCH_3$ | - |
| IId-22 | H | H | $NHC_3H_7$-i | (2) $OCH_3$ | - |
| IId-23 | H | H | $N(CH_3)_2$ | (2) $OCH_3$ | - |
| IId-24 | H | H | $N(CH_3)_2$ | (3) $CH_3$<br>(4) $CH_3$ | - |
| IId-25 | H | H | $CH_2$-O-$CH_3$ | (2) $OCH_3$ | - |

Beispiele für die als erfindungsgemäße Herbizid-Safener ganz besonders bevorzugten Verbindungen der Formel (IIe) sind in der nachstehenden Tabelle aufgeführt.

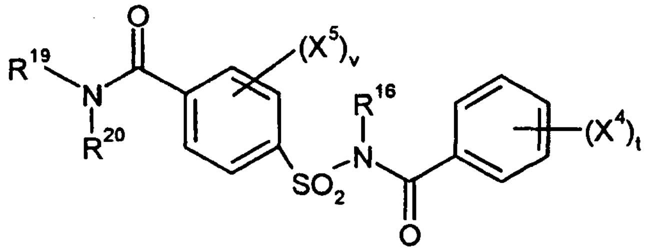

(IIe)

<u>Tabelle</u> Beispiele für die Verbindungen der Formel (IIe)

| Beispiel-Nr. | $R^{16}$ | $R^{19}$ | $R^{20}$ | (Positionen) $(X^4)_t$ | (Positionen) $(X^5)_v$ |
|---|---|---|---|---|---|
| IIe-1 | H | H | $CH_3$ | (2) $OCH_3$ | - |
| IIe-2 | H | H | $C_2H_5$ | (2) $OCH_3$ | - |
| IIe-3 | H | H | $C_3H_7$-n | (2) $OCH_3$ | - |
| IIe-4 | H | H | $C_3H_7$-i | (2) $OCH_3$ | - |
| IIe-5 | H | H | 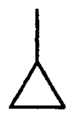 | (2) $OCH_3$ | - |
| IIe-6 | H | $CH_3$ | $CH_3$ | (2) $OCH_3$ | - |
| IIe-7 | H | H | $CH_3$ | (2) $OCH_3$<br>(5) $CH_3$ | - |
| IIe-8 | H | H | $C_2H_5$ | (2) $OCH_3$<br>(5) $CH_3$ | - |
| IIe-9 | H | H | $C_3H_7$-n | (2) $OCH_3$·<br>(5) $CH_3$ | - |
| IIe-10 | H | H | $C_3H_7$-i | (2) $OCH_3$<br>(5) $CH_3$ | - |
| IIe-11 | H | H | 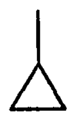 | (2) $OCH_3$<br>(5) $CH_3$ | - |
| IIe-12 | H | $CH_3$ | $CH_3$ | (2) $OCH_3$<br>(5) $CH_3$ | - |

Als die Kulturpflanzen-Verträglichkeit verbessernde Verbindung [Komponente b)] sind Cloquintocet-mexyl, Fenchlorazol-ethyl, Isoxadifen-ethyl, Mefenpyr-diethyl, Furilazole, Fenclorim, Cumyluron, Dymron, Dichlormid, Dimepiperate und die Verbindungen IIe-5 und IIe-11 am meisten bevorzugt, wobei Cloquintocet-mexyl, Isoxadifen-ethyl, Mefenpyr-diethyl, Furilazole, Dichlormid, Fenclorim und IIe-5 besonders hervorgehoben seien.

Beispiele für die erfindungsgemäßen selektiv insektiziden und/oder akariziden Kombinationen aus jeweils einem Wirkstoff der Formel (I) und jeweils einem der oben definierten Safener sind in der nachstehenden Tabelle aufgeführt.

<u>Tabelle</u> Beispiele für die erfindungsgemäßen Kombinationen

| Wirkstoffe der Formel (I) | Safener |
|---|---|
| I-1 | Cloquintocet-mexyl |

(fortgesetzt)

| Wirkstoffe der Formel (I) | Safener |
|---|---|
| I-1 | Fenchlorazole-ethyl |
| I-1 | Isoxadifen-ethyl |
| I-1 | Mefenpyr-diethyl |
| I-1 | Furilazole |
| I-1 | Fenclorim |
| I-1 | Cumyluron |
| I-1 | Daimuron /Dymron |
| I-1 | Dimepiperate |
| I-1 | IIe-11 |
| I-1 | IIe-5 |
| I-1 | Dichlormid |
| I-2 | Cloquintocet-mexyl |
| I-2 | Fenchlorazole-ethyl |
| I-2 | Isoxadifen-ethyl |
| I-2 | Mefenpyr-diethyl |
| I-2 | Furilazole |
| I-2 | Fenclorim |
| I-2 | Cumyluron |
| I-2 | Daimuron /Dymron |
| I-2 | Dimepiperate |
| I-2 | IIe-11 |
| I-2 | IIe-5 |
| I-2 | Dichlormid |
| I-3 | Cloquintocet-mexyl |
| I-3 | Fenchlorazole-ethyl |
| I-3 | Isoxadifen-ethyl |
| I-3 | Mefenpyr-diethyl |
| I-3 | Furilazole |
| I-3 | Fenclorim |
| I-3 | Cumyluron |
| I-3 | Daimuron /Dynron |
| I-3 | Dimepiperate |
| I-3 | IIe-5 |
| I-3 | IIe-11 |
| I-3 | Dichlormid |
| I-4 | Cloquintocet-mexyl |
| I-4 | Fenchlorazole-ethyl |
| I-4 | Isoxadifen-ethyl |

(fortgesetzt)

| Wirkstoffe der Formel (I) | Safener |
|---|---|
| I-4 | Mefenpyr-diethyl |
| I-4 | Furilazole |
| I-4 | Fenclorim |
| I-4 | Cumyluron |
| I-4 | Daimuron /Dymron |
| I-4 | Dimepiperate |
| I-4 | IIe-11 |
| I-4 | IIe-5 |
| I-4 | Dichlormid |
| I-5 | Cloquintocet-mexyl |
| I-5 | Fenchlorazole-ethyl |
| I-5 | Isoxadifen-ethyl |
| I-5 | Mefenpyr-diethyl |
| I-5 | Furilazole |
| I-5 | Fenclorim |
| I-5 | Cumyluron |
| I-5 | Daimuron /Dymron |
| I-5 | Dimepiperate |
| I-5 | IIe-5 |
| I_5 | IIe-11 |
| I-5 | Dichlormid |
| I-6 | Cloquintocet-mexyl |
| I-6 | Fenchlorazole-ethyl |
| I-6 | Isoxadifen-ethyl |
| I-6 | Mefenpyr-diethyl |
| I-6 | Furilazole |
| I-6 | Fenclorim |
| I-6 | Cumyluron |
| I-6 | Daimuron /Dymron |
| I-6 | Dimepiperate |
| I-6 | IIe-5 |
| I-6 | IIe-11 |
| I-6 | Dichlormid |

Die als Safener zu verwendenden Verbindungen der allgemeinen Formel (IIa) sind bekannt und/oder können nach an sich bekannten Verfahren hergestellt werden (vgl. WO-A-91/07874, WO-A-95/07897).

Die als Safener zu verwendenden Verbindungen der allgemeinen Formel (IIb) sind bekannt und/oder können nach an sich bekannten Verfahren hergestellt werden (vgl. EP-A-191736).

Die als Safener zu verwendenden Verbindungen der allgemeinen Formel (IIc) sind bekannt und/oder können nach an sich bekannten Verfahren hergestellt werden (vgl. DE-A-2218097, DE-A-2350547).

Die als Safener zu verwendenden Verbindungen der allgemeinen Formel (IId) sind bekannt und/oder können nach an sich bekannten Verfahren hergestellt werden (vgl. DE-A-19621522 / US-A-6235680).

Die als Safener zu verwendenden Verbindungen der allgemeinen Formel (IIe) sind bekannt und/oder können nach an sich bekannten Verfahren hergestellt werden (vgl. WO-A-99/66795 / US-A-6251827).

Es wurde nun überraschend gefunden, dass die oben definierten Wirkstoffkombinationen aus substituierten Ketoenolen der allgemeinen Formel (I) und Safenern (Antidots) aus der oben aufgeführten Gruppe (b) bei sehr guter Nutzpflanzen-Verträglichkeit eine gute insektizide und/oder akarizide Wirksamkeit aufweisen und in verschiedenen Kulturen, insbesondere in Getreide (vor allem Weizen und Gerste), aber auch in Hirse, Mais und Reis zur selektiven Insektenbekämpfung verwendet werden können.

Dabei ist es als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Verbindungen der Gruppe (b) geeignet sind, die schädigende Wirkung von substituierten cyclischen Ketoenolen der Formel (I) auf die Kulturpflanzen annähernd vollständig aufzuheben, ohne dabei die insektizide und/oder akarizide Wirksamkeit negativ zu beeinträchtigen.

Weiterhin ist es als völlig überraschend anzusehen, dass Verbindungen aus der oben aufgeführter Gruppe (b) befähigt sind, nicht nur die schädigende Wirkung von substituierten cyclischen Ketoenolen der Formel (I) auf die Kulturpflanzen annähernd vollständig aufzuheben, sondern dabei auch noch die insektizide und/oder akarizide Wirksamkeit der substituierten cyclischen Ketenolen der Formel (I) teilweise verstärken, so dass eine synergistische Wirkung zu verzeichnen ist.

Hervorgehoben sei hierbei die besonders vorteilhafte Wirkung der besonders und am meisten bevorzugten Kombinationspartner aus der Gruppe (b), insbesondere hinsichtlich der Schonung von Getreidepflanzen, wie z.B. Weizen, Gerste und Roggen, aber auch Hirse, Mais und Reis, als Kulturpflanzen.

Die Wirkstoffkombinationen können z.B. bei den folgenden Pflanzen verwendet werden:

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita, Helianthus.

Monokotyle Kulturen der Gattungen: Oryza, Zea, Triticum, Hordeum, Avena, Secale, Sorghum, Panicum, Saccharum, Ananas, Asparagus, Allium.

Die Verwendung der Wirkstoffkombinationen ist jedoch keineswegs auf diese Gattungen beschränkt, sondern erstreckt sich in gleicher Weise auch auf andere Pflanzen.

Der vorteilhafte Effekt der Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im Allgemeinen entfallen auf 1 Gewichtsteil Wirkstoff der Formel (I) Salzen 0,001 bis 1000 Gewichtsteile, vorzugsweise 0,01 bis 100 Gewichtsteile, besonders bevorzugt 0,05 bis 10 Gewichtsteile und am meisten bevorzugt 0,07 bis 1,5 Gewichtsteile einer der oben unter (b) genannten, die Kulturpflanzen Verträglichkeit verbessernden Verbindungen (Antidots/Safener).

Die Wirkstoffe bzw. Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine

wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängeln; als Emulgier- und/oder schaumerzeugende Mittel kommen in Frage: z.B. nicht-ionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent an Wirkstoffen einschließlich der safenden Wirkstoffe, vorzugsweise zwischen 0,5 und 90 %.

Die Wirkstoffkombinationen werden im Allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Lockstoffen, Sterilantien, Bakteriziden, Schutzstoffen, gegen Vogelfraß, Wuchsstoffen, Pflanzennährstoffen und Bodenstruktur-Verbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Rako Binol") oder Ammoniumsalze wie z.B. Ammoniumsulfat oder Ammoniumrhodanid aufzunehmen.

Die Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der Wirkstoffkombinationen können in einem gewissen Bereich variiert werden; sie hängen u.a. vom Wetter und von den Bodenfaktoren ab. Im Allgemeinen liegen die Aufwandmengen zwischen 0,005 und 5 kg pro ha, vorzugsweise zwischen 0,01 und 2 kg pro ha, besonders bevorzugt zwischen 0,05 und 1,0 kg pro ha.

Die Wirkstoffkombinationen können vor und nach dem Auflaufen der Pflanzen appliziert werden, also im Vorauflauf und Nachauflauf-Verfahren.

Die einzusetzenden Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Ablaufen der Pflanzen angewendet werden.

Die Wirkstoffkombinationen eignen sich zur Bekämpfung von tierischen Schädlingen, vorzugsweise Arthropoden und Nematoden, insbesondere Insekten und Spinnentieren, die in der Landwirtschaft, der Tiergesundheit in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp..

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp..

Aus der Ordnung der Phthiraptera z.B. Pediculus humanus corporis, Haematopinus spp., Linognathus spp., Trichodectes spp., Damalinia spp..

Aus der Ordnung der Thysanoptera z.B. Hercinothrips femoralis, Thrips tabaci, Thrips palmi, Frankliniella occidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp.

Aus der Ordnung der Siphonaptera z.B. Xenopsylla cheopis, Ceratophyllus spp.

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp.

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp.

Die Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.% Wirkstoff, vorzugsweise zwischen 0,0001 und 1 Gew.% liegen.

Die Anwendung geschieht in einer den Anwendungsformen angepassten üblichen Weise.

Erfindungsgemäß können alle Planzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft, Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei

Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den Wirkstoffmischungen behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

**<u>Anwendungsbeispiele</u>**

Methode: Safenerprüfung nach Spritzung

Lösungsmttel: 7 Gewichtsteile DMF
Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Leitungswasser auf die gewünschte Konzentration. Die gewünschte Menge Safener (im Falle von Mefenpyr-diethyl als WP 20) wird in das zum Verdünnen gewonnene Wasser gemischt. Weiterhin gibt man 2 g ai/l Rapsölmethylester 500 EW zu. Wintergerstenblätter im 2-Blattstadium, die von der Getreideblattlaus (Rhopalosiphum padi) befallen sind, werden mit den gewünschten Wirkstoff- und Safenerkonzentrationen mit einer Balkenspritze behandelt, wobei die Wasseraufwandmenge 300 l/ha beträgt. Es werden je Variante mindestens 2 Replikate angesetzt. Die Auswertung erfolgt nach 7 d und/oder 14 d durch Beurteilung der Pflanzenschäden in % und der Abtötung der Getreideblattläuse in % im Vergleich zur unbehandelten Kontrolle. Dabei bedeutet 100 % Schädigung, dass die Pflanze abgestorben ist und 0 % keine Schädigung. Eine Wirkung von 100 % bei den Getreideblattläusen bedeutet, dass alle Blattläuse abgetötet wurden; 0 % bedeutet, dass keine Blattläuse abgetötet wurden.
Ergebnisse aus Gewächshausversuchen mit Safener nach Spritzung gegen Rhopalosiphum padi an Sommergerste/Wintergerste

**Tabelle**

| | Aufwandmenge g ai/ha | Abtötung (%) 7d | Schäden (%) | |
|---|---|---|---|---|
| | | | 7d | 14d |
| Beispiel I-1'-1 | 40 | 70 | 80 | 90 |
| Beispiel I-1'-1 + Mefenpyr-diethyl | 40 + 100 | 97 | 50 | 40 |
| Mefenpyr-diethyl | 100 | 0 | 0 | 0 |

**Tabelle**

| | Aufwandmenge g ai/ha | Abtötung (%) 7d | Schäden am Neuzuwachs (%) | |
|---|---|---|---|---|
| | | | 7d | 14d |
| Beispiel I-1'-1 | 40 | 70 | 100 | 100 |
| Beispiel I-1'-1 + Mefenpyr-diethyl | 40 + 100 | 97 | 30 | 0 |
| Mefenpyr-diethyl | 100 | 0 | 0 | 0 |

*Berechnungsformel für den Abtötungsgrad einer Kombination aus zwei Wirkstoffen*

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:
Wenn

X den Abtötungsgrad, ausgedrücht in % der unbehandelten Kontrolle, beim Einsatz des Wirkstoffes A in einer Aufwandmenge von m ppm,

Y den Abtötungsgrad, ausgedrückt in % der unbehandelten Kontrolle, beim Einsatz des Wirkstoffes B in einer Aufwandmenge von n ppm,

E den Abtötungsgrad, ausgedrückt in % der unbehandelten Kontrolle, beim Einsatz des Wirkstoffes A und B in Aufwandmengen von m und n ppm bedeutet,

dann ist

$$E = X + Y - \frac{X \times Y}{100}$$

Ist der tatsächliche insektizide Abtötungsgrad größer als berechnet, so ist die Kombination in ihrer Abtötung überadditiv, d.h. es liegt ein synergistischer Effekt vor. In diesem Fall muß der tatsächlich beobachtete Abtötungsgrad größer sein als der aus der oben angeführten Formel errechnete Wert für den erwarteten Abtötungsgrad (E).

**Beispiele für die Spritzanwendung**

| | |
|---|---|
| Lösungsmittel: | Wasser |
| Adjuvant: | Rapsölmethylester (0,1 % a.i./1) |

Zur Herstellung einer zweckmäßigen Anwendungslösung vermischt man 1 Gewichtsteil Formulierung mit der entsprechenden Menge Wasser und dem Adjuvant und verdünnt das Konzentrat mit Wasser auf die gewünschte Konzentration.

**Beispiel A**

**Aphis gossypii test**

Baumwollpflanzen (*Gossypium herbaceum*), die stark von der Baumwollblattlaus (*Aphis gossypii*) befallen sind, werden mit der gewünschten Konzentration der Anwendungslösung tropfnass gespritzt.

**Beispiel B**

**Metopolophium dirhodum test**

Gerstenpflanzen (*Hordeum vulgare*), die stark von einer Getreideblattlaus (*Metopolophium dirhodum*) befallen sind, werden mit der gewünschten Konzentration der Anwendungslösung tropfnass gespritzt.

**Beispiel C**

**Myzus persicae test**

Paprikapflanzen (*Capsicum sativum*), die stark von der Grünen Pfirsichblattlaus (*Myzus persicae*) befallen sind, werden mit der gewünschten Konzentration der Anwendungslösung tropfnass gespritzt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel.

Bei diesem Test zeigt z.B. die folgende Wirkstoffkombination gemäß vorliegender Anmeldung eine synergistisch verstärkte Wirksamkeit im Vergleich zu den einzeln angewendeten Wirkstoffen:

Tabelle A

| Pflanzenschädigende Insekten<br>**Aphis gossypii - Test** | | | |
|---|---|---|---|
| Formulierung | Konzentration in ppm | Abtötungsgrad in % nach $7^d$ | |
| **Bsp. (I-1'-5) SC 240** | 20 | 30 | |
| **Isoxadifen-ethyl WG 50** | 50 | 0 | |
| **Bsp. (I-1'-5) + Isoxadifen-ethyl (1:2,5)**<br>erfindungegemäß | **20 + 50** | **gef.* 50** | **ber. ** 30** |

(fortgesetzt)

| Pflanzenschädigende Insekten<br>**Aphis gossypii - Test** | | | |
|---|---|---|---|
| Formulierung | Konzentration in ppm | Abtötungsgrad in % nach 7$^d$ | |
| **Mefenpyr-diethyl WG 15** | 100 | 0 | |
| **Bsp. (I-1'-5) + Mefenpyr-diethyl (1:5)** erfindungsgemäß | **20 + 100** | **gef.* 55** | **ber. ** 30** |
| **Bsp. (IIe-5) a.i.** | 100 | 0 | |
| **Bsp. (I-1'-5) + (Bsp. IIe-5)** erfindungsgemäß | **20 + 100** | **gef.* 50** | **ber.** 30** |
| **Cloquintocet-mexyl WP 20** | 100 | 5 | |
| **Bsp. (I-1'-5) + Cloquintocet-mexyl (1:5)** erfindungsgemäß | **20 + 100** | **gef.* 70** | **ber. ** 33,5** |
| **Dichlormid a.i.** | 100 | 0 | |
| **Bsp. (I-1'-5) + Dichlormid (1:5)** erfindungsgemäß | **20 + 100** | **gef.* 55** | **ber. ** 30** |
| * gef. = gefundene Wirkung<br>** ber. = nach der Colby-Formel berechnete Wirkung | | | |

Tabelle B

| Pflanzenschädigende Insekten<br>**Metopolophium dirhodum-Test** | | | |
|---|---|---|---|
| Formulierung | Konzentration in ppm | Abtötungsgrad in % nach 7$^d$ | |
| **Bsp. (1-1'-5) SC 240** | 20 | 15 | |
| **Isoxadifen-ethyl WG 50** | 25 | 0 | |
| **Bsp. (I-1'-5) + Isoxadifen-ethyl (1:1,25)** erfindungsgemäß | **20 + 25** | **gef.* 35** | **ber.** 15** |
| **Bsp. (IIe-5)** | 100 | 0 | |
| **Bsp. (I-1'-5) + (Bsp. IIe-5) (1:5)** erfindungsgemäß | **20 + 100** | **gef.* 35** | **ber.** 15** |
| **Dichloramid a.i.** | 100 | 0 | |
| **Bsp. (1-1'-5) + Dichloramid(1:5)** erfindungsgemäß | **20 + 100** | **gef.* 40** | **ber.** 15** |
| **Fenclorim a.i.** | 25 | 0 | |
| **Bsp. (I-1'-5) + Fenclorim (1:1,25)** erfindungsgemäß | **20 + 25** | **gef.* 35** | **ber.** 15** |
| * gef. = gefundene Wirkung<br>** ber. = nach der Colby-Formel berechnete Wirkung | | | |

Tabelle C

| Pflanzenschädigende Insekten<br>**Myzus persicae - Test** | | | |
|---|---|---|---|
| Formulierung | Konzentration in ppm | Abtötungsgrad in % nach 7$^d$ | |
| **Bsp. (I-1'-5) SC 240** | 20 | 0 | |
| **Mefenpyr-diethyl WG 15** | 100 | 5 | |
| **Bsp. (I-1'-5) + Mefenpyr-diethyl (1:5)** erfindungegemäß | **20 + 100** | **gef.* 35** | **ber. ** 5** |

(fortgesetzt)

| Pflanzenschädigende Insekten<br>**Myzus persicae - Test** | | | |
|---|---|---|---|
| Formulierung | Konzentration in ppm | Abtötungsgrad in % nach $7^d$ | |
| **Bsp. (IIe-5)** | 100 | 5 | |
| **Bsp. (I-1'-5) + (Bsp. IIe-5) (1:5) erfindungsgemäß** | **20 + 100** | **gef.* 70** | **ber. ** 5** |
| **Cloquintocet-mexyl WP 20** | 25 | 0 | |
| **Bsp. (I-1'-5) + Cloquintocet-mexyl (1:1,25)** erfindungsgemäß | **20 + 25** | **gef.* 80** | **ber. ** 0** |
| **Dichlormid a.i.** | 100 | 0 | |
| **Bsp. (I-1'-5) + Dichlormid (1:5)** erfindungsgemäß | **20 + 100** | **gef.* 94** | **ber. ** 0** |
| **Fenclorim a.i.** | 50 | 0 | |
| **Bsp. (I-1'-5) + Fenclorim (1:2,5)** erfindungsgemäß | **20+50** | **gef.* 90** | **ber. ** 0** |
| **Furilazole a.i.** | 50 | 0 | |
| **Bsp. (I-1'-5) + Furilazole (1:2,5)** erfindungsgemäß | **20+50** | **gef.* 87,5** | **ber. ** 0** |

* gef. = gefundene Wirkung
** ber. = nach der Colby-Formel berechnete Wirkung

## Patentansprüche

**1.** Verwendung eines Mittels enthaltend einen wirksamen Gehalt an einer Wirkstoffkombination umfassend

(a) mindestens ein substituiertes, cyclisches Ketoenol der Formel (I)

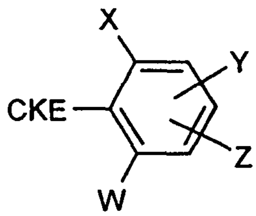

(I)

in welcher

X für Halogen, Alkyl, Alkenyl, Alkinyl, Alkoxy, Alkenyloxy, Alkylthio, Alkylsulfinyl, Alkylsulfonyl, Halogenalkyl, Halogenalkoxy, Halogenalkenyloxy, Nitro oder Cyano steht,
Z für Wasserstoff, Alkyl, Halogen, Alkenyl, Alkinyl, für jeweils gegebenenfalls substituiertes Aryl oder Hetaryl steht,
W und Y unabhängig voneinander für Wasserstoff, Halogen, Alkyl, Alkoxy, Alkenyloxy, Halogenalkyl, Halogenalkoxy, Halogenalkenyloxy, Nitro oder Cyano stehen,
CKE für eine der Gruppen

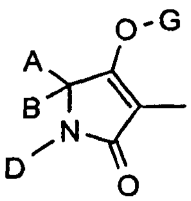

(1),

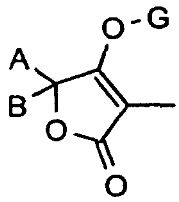

(2),

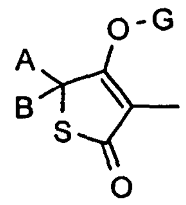 (3),

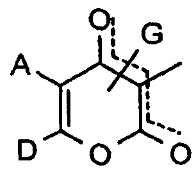 (4),

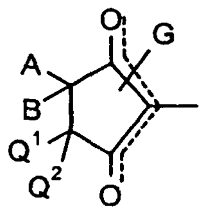 (5) oder

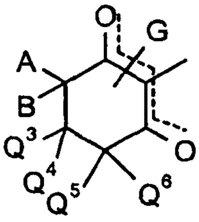 (6)

steht,
worin
A für Wasserstoff, jeweils gegebenenfalls durch Halogen substituiertes Alkyl, Alkenyl, Alkoxyalkyl, Alkylthioalkyl, gesättigtes oder ungesättigtes, gegebenenfalls substituiertes Cycloalkyl, in welchem gegebenenfalls mindestens ein Ringatom durch ein Heteroatom ersetzt ist, oder jeweils gegebenenfalls durch Halogen, Alkyl, Halogenalkyl, Alkoxy, Halogenalkoxy, Cyano oder Nitro substituiertes Aryl, Arylalkyl oder Hetaryl steht,
B für Wasserstoff, Alkyl oder Alkoxyalkyl steht, oder
A und B gemeinsam mit dem Kohlenstoffatom, an das sie gebunden sind, für einen gesättigten oder ungesättigten, gegebenenfalls mindestens ein Heteroatom enthaltenden unsubstituierten oder substituierten Cyclus stehen,
D für Wasserstoff oder einen gegebenenfalls substituierten Rest aus der Reihe Alkyl, Alkenyl, Alkinyl, Alkoxyalkyl, gesättigtes oder ungesättigtes Cycloalkyl, in welchem gegebenenfalls eines oder mehrere Ringglieder durch Heteroatome ersetzt sind, Arylalkyl, Aryl, Hetarylalkyl oder Hetaryl steht oder
A und D gemeinsam mit den Atomen an die sie gebunden sind für einen gesättigten oder ungesättigten und gegebenenfalls mindestens ein Heteroatom enthaltenden, im A,D-Teil unsubstituierten oder substituierten Cyclus stehen, oder
A und $Q^1$ gemeinsam für gegebenenfalls durch Hydroxy, jeweils gegebenenfalls substituiertes Alkyl, Alkoxy, Alkylthio, Cycloalkyl, Benzyloxy oder Aryl substituiertes Alkandiyl oder Alkendiyl stehen, oder
$Q^1$ für Wasserstoff oder Alkyl steht,
$Q^2$, $Q^4$, $Q^5$ und $Q^6$ unabhängig voneinander für Wasserstoff oder Alkyl stehen,
$Q^3$ für Wasserstoff, Alkyl, Alkoxyalkyl, Alkylthioalkyl, gegebenenfalls substituiertes Cycloalkyl (worin gegebenenfalls eine Methylengruppe durch Sauerstoff oder Schwefel ersetzt ist) oder gegebenenfalls substituiertes Phenyl steht, oder
$Q^3$ und $Q^4$ gemeinsam mit dem Kohlenstoffatom, an das sie gebunden sind, für einen gesättigten oder ungesättigten, gegebenenfalls ein Heteroatom enthaltenden unsubstituierten oder substituierten Cyclus stehen,
G für Wasserstoff (a) oder für eine der Gruppen

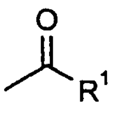 (b),
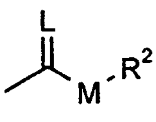 (c),
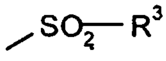 (d),
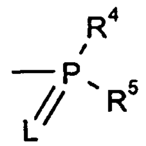 (e),

E(f) oder

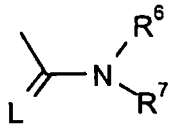 (g),

steht,
worin
E für ein Metallionäquivalent oder ein Ammoniumion steht,
L für Sauerstoff oder Schwefel steht,
M für Sauerstoff oder Schwefel steht,
$R^1$ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
$R^2$ für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
$R^3$, $R^4$ und $R^5$ unabhängig voneinander für jeweils gegebenenfalls durch Halogen substituiertes Alkyl, Alkoxy, Alkylamino, Dialkylamino, Alkylthio, Alkenylthio, Cycloalkylthio und für jeweils gegebenenfalls substituiertes Phenyl, Benzyl, Phenoxy oder Phenylthio stehen,
$R^6$ und $R^7$ unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl stehen, oder gemeinsam mit dem N-Atom, an das sie gebunden sind, für einen gegebenenfalls durch Sauerstoff oder Schwefel unterbrochenen Cyclus stehen,
- einschließlich aller möglichen tautomeren Formen der Verbindungen der allgemeinen Formel (I) und der möglichen Salze bzw. Säure- oder Basen-Addukte der Verbindungen der allgemeinen Formel (I) -

und
(b) zumindest eine die Kulturpflanzen-Verträglichkeit verbessernde Verbindung aus der folgenden Gruppe von Verbindungen:

4-Dichloracetyl-1-oxa-4-aza-spiro[4.5]-decan (AD-67, MON-4660), 1-Dichloracetyl-hexahydro-3,3,8a-trimethylpyrrolo[1,2-a]-pyrimidin-6(2H)-on (Dicyclonon, BAS-145138), 4-Dichloracetyl-3,4-dihydro-3-methyl-2H-1,4-benzoxazin (Benoxacor), 5-Chlor-chinolin-8-oxy-essigsäure-(1-methyl-hexylester) (Cloquintocet-mexyl - ), 3-(2-Chlorbenzyl)-1-(1-methyl-1-phenyl-ethyl)-harnstoff (Cumyluron), $\alpha$-(Cyanomethoximino)-phenylacetonitril (Cyometrinil), 2,4-Dichlor-phenoxyessigsäure (2,4-D), 4-(2,4-Dichlorphenoxy)-buttersäure (2,4-DB), 1-(1-Methyl-1-phenyl-ethyl)-3-(4-methyl-phenyl)-harnstoff (Daimuron, Dymron), 3,6-Dichlor-2-methoxy-benzoesäure (Dicamba), Piperidin-1-thiocarbonsäure-S-1-methyl-1-phenyl-ethylester (Dimepiperate), 2,2-Dichlor-N-(2-oxo-2-(2-propenylamino)-ethyl)-N-(2-propenyl)-acetamid (DKA-24), 2,2-Dichlor-N,N-di-2-pro-penyl-acetamid (Dichlormid), 4,6-Dichlor-2-phenyl-pyrimidin (Fenclorim), 1-(2,4-Dichlorphenyl)-5-trichlormethyl-1H-1,2,4-triazol-3-carbonsäure-ethylester (Fenchlorazole-ethyl - ), 2-Chlor-4-trifluor-methyl-thiazol-5-carbonsäure-phenylmethylester (Flurazole), 4-Chlor-N-(1,3-dioxolan-2-yl-methoxy)-$\alpha$-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazol-carboxylat (Isoxadifen-ethyl -), 1-(Ethoxycarbonyl)-ethyl-3,6-dichlor-2-methoxybenzoat (Lactidichlor), (4-Chlor-o-tolyl-oxy)-essigsäure (MCPA), 2-(4-Chlor-o-tolyloxy)-propionsäure (Mecoprop), Diethyl-1-(2,4-dichlor-phenyl)-4,5-dihydro-5-methyl-1H-pyrazol-3,5-dicarboxylat (Mefenpyr-diethyl - ) 2-Dichlormethyl-2-methyl-1,3-dioxolan (MG-191), 2-Propenyl-1-oxa-4-azaspiro[4.5]decane-4-carbodithioate (MG-838), 1,8-Naphthalsäureanhydrid, $\alpha$-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 4-(4-Chlor-o-tolyl)-buttersäure, 4-(4-Chlor-phenoxy)-buttersäure, Diphenylmethoxyessigsäure, Diphenylmethoxyessigsäure-methylester, Diphenylmethoxy-essigsäure-ethylester, 1-(2-Chlor-phenyl)-5-phenyl-1H-pyrazol-3-carbonsäure-methylester, 1-(2,4-Dichlor-phenyl)-5-methyl-1H-pyrazol-3-carbonsäure-ethylester, 1-(2,4-Dichlor-phenyl)-5-isopropyl-1H-pyrazol-3-carbonsäure-ethylester, 1-(2,4-Dichlor-phenyl)-5-(1,1-dimethyl-ethyl)-1H-pyrazol-3-carbonsäure-ethylester, 1-(2,4-Dichlor-phenyl)-5-phenyl-1H-pyrazol-3-carbonsäure-ethylester, 5-(2,4-Dichlor-benzyl)-2-isoxazolin-3-carbonsäure-ethylester, 5-Phenyl-2-isoxazolin-3-carbonsäure-ethylester, 5-(4-Fluor-phenyl)-5-phenyl-2-isoxazolin-3-carbon-säure-ethylester, 5-Chlor-chinolin-8-oxy-essigsäure-(1,3-dimethyl-but-1-yl)-ester, 5-Chlor-chinolin-8-oxy-essigsäure-4-allyloxy-butylester, 5-Chlor-chinolin-8-oxy-essigsäure-1-allyloxy-prop-2-yl-ester, 5-Chlor-chinoxalin-8-oxy-essigsäure-methylester, 5-Chlor-chinolin-8-oxy-essigsäure-ethylester, 5-Chlor-chinoxalin-8-oxy-essigsäure-allylester, 5-Chlor-chinolin-8-oxy-essigsäure-2-oxo-prop-1-yl-ester, 5-Chlor-chinolin-8-oxy-malonsäure-diethylester, 5-Chlor-chinoxalin-8-oxy-malonsäure-diallylester, 5-Chlor-chinolin-8-oxy-malonsäure-diethylester, 4-Carboxy-chroman-4-yl-essigsäure (AC-304415), 4-Chlor-phenoxy-essigsäure, 3,3'-Dimethyl-4-methoxy-benzophenon, 1-Brom-4-chlormethylsulfonyl-benzol, 1-[4-(N-2-Methoxybenzoyl-sulfamoyl)-phenyl]-3-methyl-harnstoff (alias N-(2-Methoxy-benzoyl)-4-[(methylamino-carbonyl)-amino]-benzolsulfonamid), 1-[4-(N-2-Methoxybenzoylsulfamoyl)-phenyl]-3,3-dimethyl-harnstoff, 1-[4-(N-4,5-Dimethylbenzoylsulfamoyl)-phenyl]-3-methyl-harnstoff, 1-[4-(N-Naphthylsulfamoyl)-phenyl]-3,3-dimethyl-harnstoff, N-(2-Methoxy-5-methyl-benzoyl)-4-(cyclopropylaminocarbonyl)-benzolsulfonamid, und/oder eine der folgenden durch allgemeine Formeln definierten Verbindungen der allgemeinen Formel (IIa)

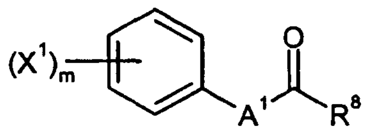

(IIa)

oder der allgemeinen Formel (IIb)

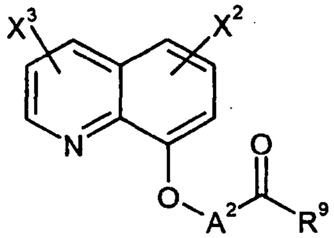

(IIb)

oder der Formel (IIc)

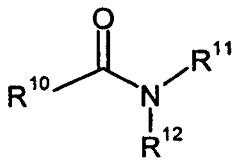

(IIc)

wobei

m für eine Zahl 0, 1, 2, 3, 4 oder 5 steht,
$A^1$ für eine der nachstehend skizzierten divalenten heterocyclischen Gruppierungen steht,

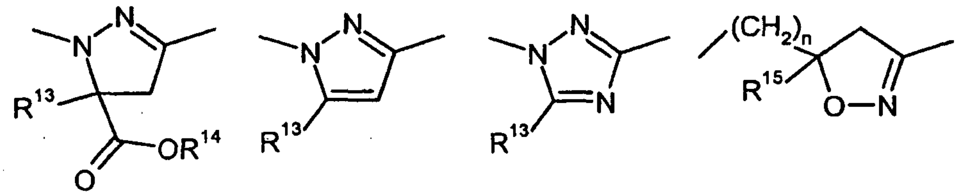

n für eine Zahl 0, 1, 2, 3, 4 oder 5 steht,
$A^2$ für gegebenenfalls durch $C_1$-$C_4$-Alkyl und/oder $C_1$-$C_4$-Alkoxy-carbonyl und/oder $C_1$-$C_4$-Alkenyloxy-carbonyl substituiertes Alkandiyl mit 1 oder 2 Kohlenstoffatomen steht,
$R^8$ für Hydroxy, Mercapto, Amino, $C_1$-$C_6$-Alkoxy, $C_1$-$C_6$-Alkylthio, $C_1$-$C_6$-Alkylamino oder Di-($C_1$-$C_4$-alkyl)-amino steht,

$R^9$ für Hydroxy, Mercapto, Amino, $C_1$-$C_7$-Alkoxy, $C_1$-$C_6$-Alkenyloxy, $C_1$-$C_6$-Alkenyloxy-$C_1$-$C_6$-alkoxy, $C_1$-$C_6$-Alkylthio, $C_1$-$C_6$-Alkylamino oder Di-($C_1$-$C_4$-alkyl)-amino steht,
$R^{10}$ für jeweils gegebenenfalls durch Fluor, Chlor und/oder Brom substituiertes $C_1$-$C_4$-Alkyl steht,
$R^{11}$ für Wasserstoff, jeweils gegebenenfalls durch Fluor, Chlor und/oder Brom substituiertes $C_1$-$C_6$-Alkyl, $C_2$-$C_6$-Alkenyl oder $C_2$-$C_6$-Alkinyl, $C_1$-$C_4$-Alkoxy-$C_1$-$C_4$-alkyl, Dioxolanyl-$C_1$-$C_4$-alkyl, Furyl, Furyl-$C_1$-$C_4$-alkyl, Thienyl, Thiazolyl, Piperidinyl, oder gegebenenfalls durch Fluor, Chlor und/oder Brom oder $C_1$-$C_4$-Alkyl substituiertes Phenyl steht,
$R^{12}$ für Wasserstoff, jeweils gegebenenfalls durch Fluor, Chlor und/oder Brom substituiertes $C_1$-$C_6$-Alkyl, $C_2$-$C_6$-Alkenyl oder $C_2$-$C_6$-Alkinyl, $C_1$-$C_4$-Alkoxy-$C_1$-$C_4$-alkyl, Dioxolanyl-$C_1$-$C_4$-alkyl, Furyl, Furyl-$C_1$-$C_4$-alkyl, Thienyl, Thiazolyl, Piperidinyl, oder gegebenenfalls durch Fluor, Chlor und/oder Brom oder $C_1$-$C_4$-Alkyl substituiertes Phenyl, oder $R^{11}$ und $R^{12}$ auch gemeinsam für jeweils gegebenenfalls durch $C_1$-$C_4$-Alkyl, Phenyl, Furyl, einen annellierten Benzolring oder durch zwei Substituenten, die gemeinsam mit dem C-Atom, an das sie gebunden sind, einen 5- oder 6-gliedrigen Carbocyclus bilden, substituiertes $C_3$-$C_6$-Alkandiyl oder $C_2$-$C_5$-Oxaalkandiyl steht,
$R^{13}$ für Wasserstoff, Cyano, Halogen, oder für jeweils gegebenenfalls durch Fluor, Chlor und/oder Brom substituiertes $C_1$-$C_4$-Alkyl, $C_3$-$C_6$-Cycloalkyl oder Phenyl steht,
$R^{14}$ für Wasserstoff, gegebenenfalls durch Hydroxy, Cyano, Halogen oder $C_1$-$C_4$-Alkoxy substituiertes $C_1$-$C_6$-Alkyl, $C_3$-$C_6$-Cycloalkyl oder Tri-($C_1$-$C_4$-alkyl)-silyl steht,
$R^{15}$ für Wasserstoff, Cyano, Halogen, oder für jeweils gegebenenfalls durch Fluor, Chlor und/oder Brom substituiertes $C_1$-$C_4$-Alkyl, $C_3$-$C_6$-Cycloalkyl oder Phenyl steht,
$X^1$ für Nitro, Cyano, Halogen, $C_1$-$C_4$-Alkyl, $C_1$-$C_4$-Halogenalkyl, $C_1$-$C_4$-Alkoxy oder $C_1$-$C_4$-Halogenalkoxy steht,
$X^2$ für Wasserstoff, Cyano, Nitro, Halogen, $C_1$-$C_4$-Alkyl, $C_1$-$C_4$-Halogenalkyl, $C_1$-$C_4$-Alkoxy oder $C_1$-$C_4$-Halogenalkoxy steht,
$X^3$ für Wasserstoff, Cyano, Nitro, Halogen, $C_1$-$C_4$-Alkyl, $C_1$-$C_4$-Halogenalkyl, $C_{14}$-$C_4$-Alkoxy oder $C_1$-$C_4$-Halogenalkoxy steht,

und/oder die folgenden durch allgemeine Formeln definierten Verbindungen der allgemeinen Formel (IId)

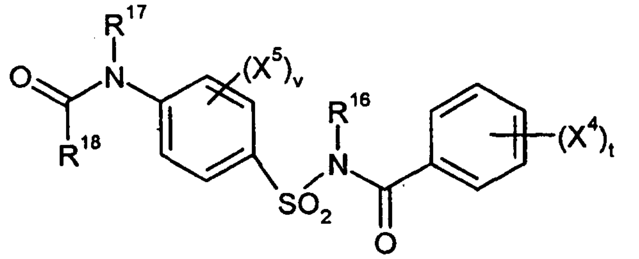

**(IId)**

oder der allgemeinen Formel (IIe)

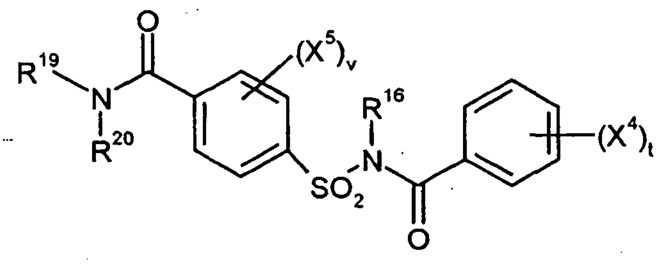

**(IIe)**

wobei

t für eine Zahl 0, 1, 2, 3, 4 oder 5 steht,
v für eine Zahl 0, 1, 2, 3, 4 oder 5 steht,
$R^{16}$ für Wasserstoff oder $C_1$-$C_4$-Alkyl steht,
$R^{17}$ für Wasserstoff oder $C_1$-$C_4$-Alkyl steht,

$R^{18}$ für Wasserstoff, jeweils gegebenenfalls durch Cyano, Halogen oder $C_1$-$C_4$-Alkoxy substituiertes $C_1$-$C_6$-Alkyl, $C_1$-$C_6$-Alkoxy, $C_1$-$C_6$-Alkylthio, $C_1$-$C_6$-Alkylamino oder Di-($C_1$-$C_4$-alkyl)-amino, oder jeweils gegebenenfalls durch Cyano, Halogen oder $C_1$-$C_4$-Alkyl substituiertes $C_3$-$C_6$-Cycloalkyl, $C_3$-$C_6$-Cycloalkyloxy, $C_3$-$C_6$-Cycloalkylthio oder $C_3$-$C_6$-Cycloalkylamino steht,
$R^{19}$ für Wasserstoff, gegebenenfalls durch Cyano, Hydroxy, Halogen oder $C_1$-$C_4$-Alkoxy substituiertes $C_1$-$C_6$-Alkyl, jeweils gegebenenfalls durch Cyano oder Halogen substituiertes $C_3$-$C_6$-Alkenyl oder $C_3$-$C_6$-Alkinyl, oder gegebenenfalls durch Cyano, Halogen oder $C_1$-$C_4$-Alkyl substituiertes $C_3$-$C_6$-Cycloalkyl steht,
$R^{20}$ für Wasserstoff, gegebenenfalls durch Cyano, Hydroxy, Halogen oder $C_1$-$C_4$-Alkoxy substituiertes $C_1$-$C_6$-Alkyl, jeweils gegebenenfalls durch Cyano oder Halogen substituiertes $C_3$-$C_6$-Alkenyl oder $C_3$-$C_6$-Alkinyl, gegebenenfalls durch Cyano, Halogen oder $C_1$-$C_4$-Alkyl substituiertes $C_3$-$C_6$-Cycloalkyl, oder gegebenenfalls durch Nitro, Cyano, Halogen, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl steht, oder zusammen mit $R^{19}$ für jeweils gegebenenfalls durch $C_1$-$C_4$-Alkyl substituiertes $C_2$-$C_6$-Alkandiyl oder $C_2$-$C_5$-Oxaalkandiyl steht,
$X^4$ für Nitro, Cyano, Carboxy, Carbamoyl, Formyl, Sulfamoyl, Hydroxy, Amino, Halogen, $C_1$-$C_4$-Alkyl, $C_1$-$C_4$-Halogenalkyl, $C_1$-$C_4$-Alkoxy oder $C_1$-$C_4$-Halogenalkoxy steht, und
$X^5$ für Nitro, Cyano, Carboxy, Carbamoyl, Formyl, Sulfamoyl, Hydroxy, Amino, Halogen, $C_1$-$C_4$-Alkyl, $C_1$-$C_4$-Halogenalkyl, $C_1$-$C_4$-Alkoxy oder $C_1$-$C_4$-Halogenalkoxy steht,

zur Bekämpfung von Insekten und/oder Spinnentieren.

**2.** Verwendung eines Mittels gemäß Anspruch 1 zur Bekämpfung von Insekten und/oder Spinnentieren, enthaltend Verbindungen der Formel (I), in welcher

X für Halogen, $C_1$-$C_6$-Alkyl, $C_1$-$C_6$-Alkenyl, $C_2$-$C_6$-Alkinyl, $C_1$-$C_6$-Halogenalkyl, $C_1$-$C_6$-Alkoxy, $C_3$-$C_6$-Alkenyloxy, $C_1$-$C_6$-Halogenalkoxy, $C_3$-$C_6$-Halogenalkenyloxy, Nitro oder Cyano steht,
Z für Wasserstoff, Halogen, $C_1$-$C_6$-Alkyl, $C_2$-$C_6$-Alkenyl, $C_2$-$C_6$-Alkinyl oder für einen der Reste

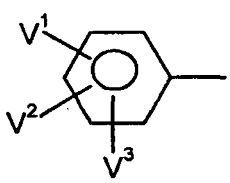 , 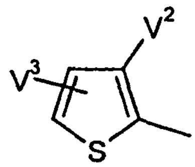 ,

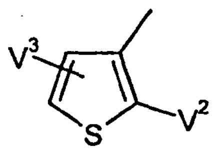

steht,
worin

$V^1$ für Wasserstoff, Halogen, $C_1$-$C_{12}$-Alkyl, $C_1$-$C_6$-Alkoxy, $C_1$-$C_6$-Alkylthio, $C_1$-$C_6$-Alkylsulfinyl, $C_1$-$C_6$-Alkylsulfonyl, $C_1$-$C_4$-Halogenalkyl, $C_1$-$C_4$-Halogenalkoxy, Nitro oder Cyano steht,
$V^2$ und $V^3$ unabhängig voneinander für Wasserstoff, Halogen, $C_1$-$C_6$-Alkyl, $C_1$-$C_6$-Alkoxy, $C_1$-$C_4$-Halogenalkyl oder $C_1$-$C_4$-Halogenalkoxy stehen,
W und Y unabhängig voneinander für Wasserstoff, Halogen, $C_1$-$C_6$-Alkyl, $C_1$-$C_6$-Halogenalkyl, $C_1$-$C_6$-Alkoxy, $C_1$-$C_6$-Halogenalkoxy, Nitro oder Cyano stehen,
CKE für eine der Gruppen

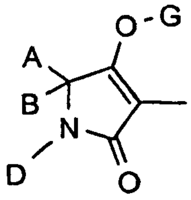 (1), 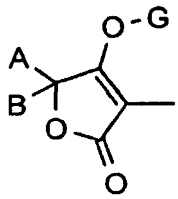 (2),

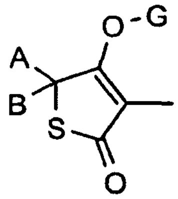 (3), 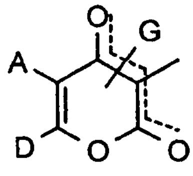 (4),

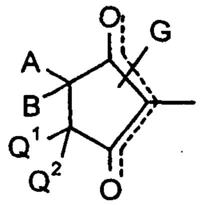 (5) oder 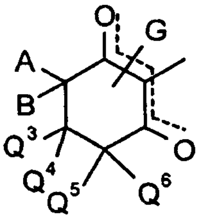 (6)

steht,

A für Wasserstoff oder jeweils gegebenenfalls durch Halogen substituiertes $C_1$-$C_{12}$-Alkyl, $C_3$-$C_8$-Alkenyl, $C_1$-$C_{10}$-Alkoxy-$C_1$-$C_8$-alkyl, $C_1$-$C_{10}$-Alkylthio-$C_1$-$C_6$-alkyl, gegebenenfalls durch Halogen, $C_1$-$C_6$-Alkyl oder $C_1$-$C_6$-Alkoxy substituiertes $C_3$-$C_8$-Cycloalkyl, in welchem gegebenenfalls ein oder zwei nicht direkt benachbarte Ringglieder durch Sauerstoff und/oder Schwefel ersetzt sind oder für jeweils gegebenenfalls durch Halogen, $C_1$-$C_6$-Alkyl, $C_1$-$C_6$-Halogenalkyl, $C_1$-$C_6$-Alkoxy, $C_1$-$C_6$-Halogenalkoxy, Cyano oder Nitro substituiertes Phenyl oder Phenyl-$C_1$-$C_6$-alkyl steht,

B für Wasserstoff, $C_1$-$C_{12}$-Alkyl oder $C_1$-$C_8$-Alkoxy-$C_1$-$C_6$-alkyl steht, oder

A, B und das Kohlenstoffatom an das sie gebunden sind, für gesättigtes $C_3$-$C_{10}$-Cycloalkyl oder ungesättigtes $C_5$-$C_{10}$-Cycloalkyl, worin gegebenenfalls ein Ringglied durch Sauerstoff oder Schwefel ersetzt ist und welche gegebenenfalls einfach oder zweifach durch $C_1$-$C_8$-Alkyl, $C_3$-$C_{10}$-Cycloalkyl, $C_1$-$C_8$-Halogenalkyl, $C_1$-$C_8$-Alkoxy, $C_1$-$C_8$-Alkylthio, Halogen oder Phenyl substituiert sind, oder

A, B und das Kohlenstoffatom, an das sie gebunden sind, für $C_5$-$C_6$-Cycloalkyl, welches durch eine gegebenenfalls ein oder zwei nicht direkt benachbarte Sauerstoff und/oder Schwefelatome enthaltende gegebenenfalls durch $C_1$-$C_4$-Alkyl substituierte Alkylendiyl-, oder durch eine Alkylendioxyl- oder durch eine Alkylendithioyl-Gruppe substituiert ist, die mit dem Kohlenstoffatom, an das sie gebunden ist, einen weiteren fünf- bis achtgliedrigen Ring bildet, oder

A, B und das Kohlenstoffatom, an das sie gebunden sind, für $C_3$-$C_8$-Cycloalkyl oder $C_5$-$C_8$-Cycloalkenyl stehen, in welchen zwei Substituenten gemeinsam mit den Kohlenstoffatomen, an die sie gebunden sind, für jeweils gegebenenfalls durch $C_1$-$C_6$-Alkyl, $C_1$-$C_6$-Alkoxy oder Halogen substituiertes $C_2$-$C_6$-Alkandiyl, $C_2$-$C_6$-Alkendiyl oder $C_4$-$C_6$-Alkandiendiyl stehen, worin gegebenenfalls eine Methylengruppe durch Sauerstoff oder Schwefel ersetzt ist,

D für Wasserstoff, jeweils gegebenenfalls durch Halogen substituiertes $C_1$-$C_{12}$-Alkyl, $C_3$-$C_8$-Alkenyl, $C_3$-$C_8$-Alkinyl, $C_1$-$C_{10}$-Alkoxy-$C_2$-$C_8$-alkyl, gegebenenfalls durch Halogen, $C_1$-$C_4$-Alkyl, $C_1$-$C_4$-Alkoxy oder $C_1$-$C_4$-Halogenalkyl substituiertes $C_3$-$C_8$-Cycloalkyl, in welchem gegebenenfalls ein Ringglied durch Sauerstoff oder Schwefel ersetzt ist oder jeweils gegebenenfalls durch Halogen, $C_1$-$C_6$-Alkyl, $C_1$-$C_6$-Halogenalkyl, $C_1$-$C_6$-Alkoxy, $C_1$-$C_6$-Halogenalkoxy, Cyano oder Nitro substituiertes Phenyl oder Phenyl-$C_1$-$C_6$-alkyl steht,

A und D gemeinsam für jeweils gegebenenfalls substituiertes $C_3$-$C_6$-Alkandiyl oder $C_3$-$C_6$-Alkendiyl stehen, worin gegebenenfalls eine Methylengruppe durch eine Carbonylgruppe, Sauerstoff oder Schwefel ersetzt ist und wobei als Substituenten jeweils in Frage kommen:

Halogen, Hydroxy, Mercapto oder jeweils gegebenenfalls durch Halogen sübstituiertes $C_1$-$C_{10}$-Alkyl oder

$C_1$-$C_6$-Alkoxy, oder eine weitere $C_3$-$C_6$-Alkandiylgruppierung, $C_3$-$C_6$-Alkendiylgruppierung oder eine Butadienylgruppierung, die gegebenenfalls durch $C_1$-$C_6$-Alkyl substituiert ist oder in der gegebenenfalls zwei benachbarte Substituenten mit den Kohlenstoffatomen, an die sie gebunden sind, einen weiteren gesättigten oder ungesättigten Cyclus mit 5 oder 6 Ringatomen bilden (im Fall der Verbindung der Formel (I-1) stehen A und D dann gemeinsam mit den Atomen, an die sie gebunden sind beispielsweise für die weiter unten genannten Gruppen AD-1 bis AD-10), der Sauerstoff oder Schwefel enthalten kann,

A und $Q^1$ gemeinsam für jeweils gegebenenfalls einfach oder zweifach, gleich oder verschieden durch Halogen, durch jeweils gegebenenfalls einfach bis dreifach, gleich oder verschieden durch Halogen substituiertes $C_1$-$C_{10}$-Alkyl, $C_1$-$C_6$-Alkoxy, $C_1$-$C_6$-Alkylthio, $C_3$-$C_7$-Cycloalkyl oder durch jeweils gegebenenfalls einfach bis dreifach, gleich oder verschieden durch Halogen, $C_1$-$C_6$-Alkyl oder $C_1$-$C_6$-Alkoxy substituiertes Benzyloxy oder Phenyl substituiertes $C_3$-$C_6$-Alkandiyl oder $C_4$-$C_6$-Alkendiyl stehen, welches außerdem durch eine $C_1$-$C_2$-Alkandiylgruppe oder durch ein Sauerstoffatom überbrückt ist oder

$Q^1$ für Wasserstoff oder $C_1$-$C_4$-Alkyl steht,

$Q^2$, $Q^4$, $Q^5$ und $Q^6$ unabhängig voneinander für Wasserstoff oder $C_1$-$C_4$-Alkyl stehen,

$Q^3$ für Wasserstoff, $C_1$-$C_6$-Alkyl, $C_1$-$C_6$-Alkoxy-$C_1$-$C_2$-alkyl, $C_1$-$C_6$-Aklthio-$C_1$-$C_2$-alkyl, gegebenenfalls durch Halogen, $C_1$-$C_4$-Alkyl oder $C_1$-$C_4$-Alkoxy substituiertes $C_3$-$C_8$-Cycloalkyl, worin gegebenenfalls eine Methylengruppe durch Sauerstoff oder Schwefel ersetzt ist oder für gegebenenfalls durch Halogen, $C_1$-$C_4$-Alkyl, $C_1$-$C_4$-Alkoxy, $C_1$-$C_2$-Halogenalkyl, $C_1$-$C_2$-Halogenalkoxy, Cyano oder Nitro substituiertes Phenyl steht, oder

$Q^3$ und $Q^4$ gemeinsam mit dem Kohlenstoffatom, an das sie gebunden sind, für einen gegebenenfalls durch $C_1$-$C_4$-Alkyl, $C_1$-$C_4$-Alkoxy oder $C_1$-$C_4$-Alkoxy oder $C_1$-$C_2$-Halogenalkyl substituierten $C_3$-$C_7$-Ring stehen, in welchem gegebenenfalls ein Ringglied durch Sauerstoff oder Schwefel ersetzt ist,

G für Wasserstoff (a) oder für eine der Gruppen

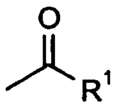 (b), 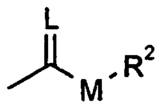 (c), 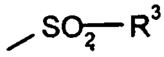 (d), 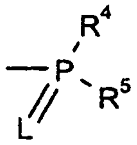 (e),

E (f) oder

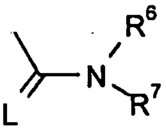 (g),

steht,

in welchen

E für ein Metallionäquivalent oder ein Ammoniumion steht,
L für Sauerstoff oder Schwefel steht und
M für Sauerstoff oder Schwefel steht,

$R^1$ für jeweils gegebenenfalls durch Halogen substituiertes $C_1$-$C_{20}$-Alkyl, $C_2$-$C_{20}$-Alkenyl, $C_1$-$C_8$-Alkoxy-$C_1$-$C_8$-alkyl, $C_1$-$C_8$-Alkylthio-$C_1$-$C_8$-alkyl, Poly-$C_1$-$C_8$-alkoxy-$C_1$-$C_8$-alkyl oder gegebenenfalls durch Halogen, $C_1$-$C_6$-Alkyl oder $C_1$-$C_6$-Alkoxy substituiertes $C_3$-$C_8$-Cycloalkyl, in welchem gegebenenfalls ein oder mehrere nicht direkt benachbarte Ringglieder durch Sauerstoff und/oder Schwefel ersetzt sind,

für gegebenenfalls durch Halogen, Cyano, Nitro, $C_1$-$C_6$-Alkyl, $C_1$-$C_6$-Alkoxy, $C_1$-$C_6$-Halogenalkyl, $C_1$-$C_6$-Halogenalkoxy, $C_1$-$C_6$-Alkylthio oder $C_1$-$C_6$-Alkylsulfonyl substituiertes Phenyl,

für gegebenenfalls durch Halogen, Nitro, Cyano, $C_1$-$C_6$-Alkyl, $C_1$-$C_6$-Alkoxy, $C_1$-$C_6$-Halogenalkyl oder $C_1$-$C_6$-Halogenalkoxy substituiertes Phenyl-$C_1$-$C_6$-alkyl,

für gegebenenfalls durch Halogen oder $C_1$-$C_6$-Alkyl substituiertes 5- oder 6-gliedriges Hetaryl,

für gegebenenfalls durch Halogen oder $C_1$-$C_6$-Alkyl substituiertes Phenoxy-$C_1$-$C_6$-alkyl oder

für gegebenenfalls durch Halogen, Amino oder $C_1$-$C_6$-Alkyl substituiertes 5- oder 6-gliedriges Hetaryloxy-$C_1$-$C_6$-alkyl steht,

$R^2$ für jeweils gegebenenfalls durch Halogen substituiertes $C_1$-$C_{20}$-Alkyl, $C_2$-$C_{20}$-Alkenyl, $C_1$-$C_8$-Alkoxy-$C_2$-$C_8$-alkyl, Poly-$C_1$-$C_8$-alkoxy-$C_2$-$C_8$-alkyl,

für gegebenenfalls durch Halogen, $C_1$-$C_6$-Alkyl oder $C_1$-$C_6$-Alkoxy substituiertes $C_3$-$C_8$-Cycloalkyl oder für jeweils gegebenenfalls durch Halogen, Cyano, Nitro, $C_1$-$C_6$-Alkyl, $C_1$-$C_6$-Alkoxy, $C_1$-$C_6$-Halogenalkyl oder $C_1$-$C_6$-Halogenalkoxy substituiertes Phenyl oder Benzyl steht,

$R^3$ für gegebenenfalls durch Halogen substituiertes $C_1$-$C_8$-Alkyl oder für jeweils gegebenenfalls durch Halogen, $C_1$-$C_6$-Alkyl, $C_1$-$C_6$-Alkoxy, $C_1$-$C_4$-Halogenalkyl, $C_1$-$C_4$-Halogenalkoxy, Cyano oder Nitro substituiertes Phenyl oder Benzyl steht,

$R^4$ und $R^5$ unabhängig voneinander für jeweils gegebenenfalls durch Halogen substituiertes $C_1$-$C_8$-Alkyl, $C_1$-$C_8$-Alkoxy, $C_1$-$C_8$-Alkylamino, Di-($C_1$-$C_8$-alkyl)amino, $C_1$-$C_8$-Alkylthio, $C_2$-$C_8$-Alkenylthio, $C_3$-$C_7$-Cycloalkylthio oder für jeweils gegebenenfalls durch Halogen, Nitro, Cyano, $C_1$-$C_4$-Alkoxy, $C_1$-$C_4$-Halogenalkoxy, $C_1$-$C_4$-Alkylthio, $C_1$-$C_4$-Halogenalkylthio, $C_1$-$C_4$-Alkyl oder $C_1$-$C_4$-Halogenalkyl substituiertes Phenyl, Phenoxy oder Phenylthio stehen,

$R^6$ und $R^7$ unabhängig voneinander für Wasserstoff, für jeweils gegebenenfalls durch Halogen substituiertes $C_1$-$C_8$-Alkyl, $C_3$-$C_8$-Cycloalkyl, $C_1$-$C_8$-Alkoxy, $C_3$-$C_8$-Alkenyl, $C_1$-$C_8$-Alkoxy-$C_1$-$C_8$-alkyl, für gegebenenfalls durch Halogen, $C_1$-$C_8$-Halogenalkyl, $C_1$-$C_8$-Alkyl oder $C_1$-$C_8$-Alkoxy substituiertes Phenyl, gegebenenfalls durch Halogen, $C_1$-$C_8$-Alkyl, $C_1$-$C_8$-Halogenalkyl oder $C_1$-$C_8$-Alkoxy substituiertes Benzyl oder zusammen für einen gegebenenfalls durch $C_1$-$C_4$-Alkyl substituierten $C_3$-$C_6$-Alkylenrest stehen, in welchem gegebenenfalls ein Kohlenstoffatom durch Sauerstoff oder Schwefel ersetzt ist.

**3.** Verwendung eines Mittels gemäß Anspruch 1 zur Bekämpfung von Insekten oder Spinnentieren, enthaltend Verbindungen der Formel (I), in welcher

X für Fluor, Chlor, Brom, $C_1$-$C_4$-Alkyl, $C_1$-$C_4$-Alkenyl, $C_2$-$C_4$-Alkinyl, $C_1$-$C_4$-Alkoxy, C1_C4-Halogenalkyl, $C_1$-$C_4$-Halogenalkoxy oder Cyano steht,

Z für Wasserstoff, Fluor, Chlor, Brom, $C_1$-$C_4$-Alkyl, $C_2$-$C_4$-Alkenyl, $C_2$-$C_4$-Alkinyl oder für den Rest

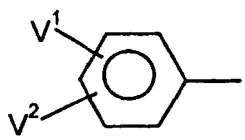

steht,

$V^1$ für Wasserstoff, Fluor, Chlor, Brom, $C_1$-$C_6$-Alkyl, $C_1$-$C_4$-Alkoxy, $C_1$-$C_2$-Halogenalkyl, $C_1$-$C_2$-Halogenalkoxy, Nitro oder Cyano steht,

$V^2$ für Wasserstoff, Fluor, Chlor, Brom, $C_1$-$C_4$-Alkyl, $C_1$-$C_4$-Alkoxy, $C_1$-$C_2$-Halogenalkyl oder $C_1$-$C_2$-Halogenalkoxy steht,

W und Y unabhängig voneinander für Wasserstoff, Fluor, Chlor, Brom, $C_1$-$C_4$-Alkyl, $C_1$-$C_4$-Halogenalkyl, $C_1$-$C_4$-Alkoxy oder $C_1$-$C_4$-Halogenalkoxy stehen,

CKE für eine der Gruppen

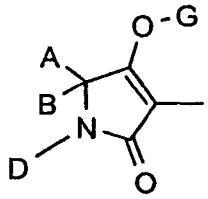 (1), 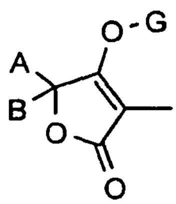 (2),

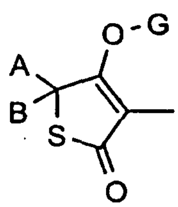 (3), 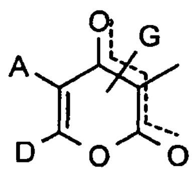 (4),

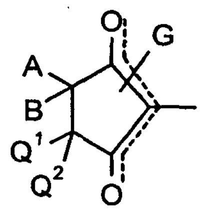 (5) oder 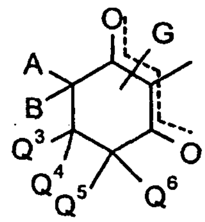 (6)

steht,

A für Wasserstoff, jeweils gegebenenfalls durch Fluor oder Chlor substituiertes $C_1$-$C_6$-Alkyl, $C_1$-$C_4$-Alkoxy-$C_1$-$C_4$-alkyl oder gegebenenfalls durch Fluor, Chlor, $C_1$-$C_4$-Alkyl oder $C_1$-$C_4$-Alkoxy substituiertes $C_3$-$C_7$-Cycloalkyl steht,

B für Wasserstoff oder $C_1$-$C_6$-Alkyl steht, oder

A, B und das Kohlenstoffatom, an das sie gebunden sind, für gesättigtes $C_3$-$C_7$-Cycloalkyl oder ungesättigtes $C_5$-$C_7$-Cycloalkyl, worin, gegebenenfalls ein Ringglied durch Sauerstoff oder Schwefel ersetzt ist und welches gegebenenfalls einfach durch $C_1$-$C_6$-Alkyl, $C_1$-$C_3$-Halogenalkyl oder $C_1$-$C_6$-Alkoxy substituiert ist, oder

A, B und das Kohlenstoffatom, an das sie gebunden sind, für $C_5$-$C_6$-Cycloalkyl stehen, welches durch eine gegebenenfalls ein oder zwei nicht direkt benachbarte Sauerstoff- oder Schwefelatome enthaltende gegebenenfalls durch Methyl oder Ethyl substituierte Alkylendiyl- oder durch eine Alkylendioxyl- oder durch eine Alkylendithiol-Gruppe substituiert ist, die mit dem Kohlenstoffatom, an das sie gebunden ist, einen weiteren fünf- oder sechsgliedrigen Ring bildet,

D für Wasserstoff, für jeweils gegebenenfalls durch Fluor oder Chlor substituiertes $C_1$-$C_6$-Alkyl, $C_3$-$C_6$-Alkenyl, $C_1$-$C_4$-Alkoxy-$C_2$-$C_3$-alkyl, für gegebenenfalls durch $C_1$-$C_4$-Alkyl, $C_1$-$C_4$-Alkoxy oder $C_1$-$C_2$-Halogenalkyl substituiertes $C_3$-$C_7$-Cycloalkyl steht, oder

A und D gemeinsam für gegebenenfalls substituiertes $C_3$-$C_5$-Alkandiyl stehen, in welchem eine Methylengruppe durch Sauerstoff oder Schwefel ersetzt sein kann, wobei als Substituenten $C_1$-$C_4$-Alkyl in Frage kommt, oder

A und D (im Fall der Verbindungen der Formel (I-1)) gemeinsam mit den Atomen, an die sie gebunden sind, für eine der Gruppen AD-1 bis AD-10 stehen:

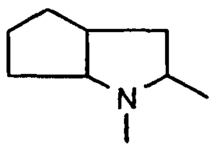

AD-1

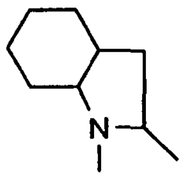

AD-2

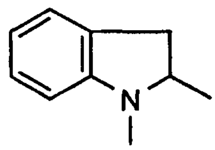

AD-3

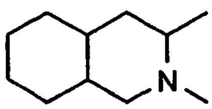

AD-4

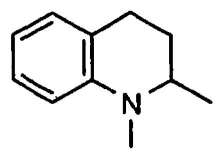

AD-5

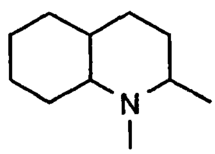

AD-6

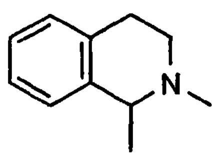

AD-7

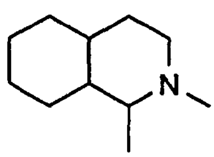

AD-8

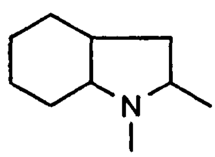

AD-9

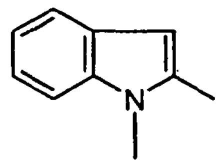

AD-10

A und $Q^1$ gemeinsam für jeweils gegebenenfalls einfach oder zweifach, gleich oder verschieden durch $C_1$-$C_4$-Alkyl oder $C_1$-$C_4$-Alkoxy substituiertes $C_3$-$C_4$-Alkandiyl oder $C_3$-$C_4$-Alkendiyl stehen, oder
$Q^1$ für Wasserstoff steht,
$Q^2$ für Wasserstoff steht,
$Q^4$, $Q^5$ und $Q^6$ unabhängig voneinander für Wasserstoff oder $C_1$-$C_2$-Alkyl stehen,
$Q^3$ für Wasserstoff, $C_1$-$C_4$-Alkyl, $C_1$-$C_4$-Alkoxy-$C_1$-$C_2$-alkyl, $C_1$-$C_4$-Alkylthio-$C_1$-$C_2$-alkyl oder gegebenenfalls durch Methyl oder Methoxy substituiertes $C_3$-$C_6$-Cycloalkyl steht, worin gegebenenfalls eine Methylengruppe durch Sauerstoff oder Schwefel ersetzt ist, oder
$Q^3$ und $Q^4$ gemeinsam mit dem Kohlenstoff, an das sie gebunden sind, für einen gegebenenfalls durch $C_1$-$C_4$-Alkyl oder $C_1$-$C_4$-Alkoxy substituierten gesättigten $C_5$-$C_6$-Ring stehen, in welchem gegebenenfalls ein Ringglied durch Sauerstoff oder Schwefel ersetzt ist,
G für Wasserstoff(a) oder für eine der Gruppen

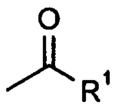 (b), 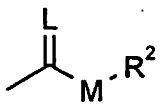 (c), 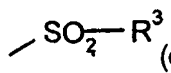 (d), 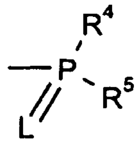 (e),

E (f) oder

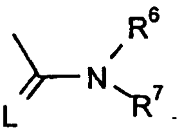 (g)

steht,
in welchen
E für ein Metallionäquivalent oder ein Ammoniumion steht,
L für Sauerstoff oder Schwefel steht und
M für Sauerstoff oder Schwefel steht,

$R^1$ für jeweils gegebenenfalls durch Fluor oder Chlor substituiertes $C_1$-$C_{16}$-Alkyl, $C_2$-$C_{16}$-Alkenyl, $C_1$-$C_6$-Alkoxy-$C_1$-$C_4$-alkyl, $C_1$-$C_6$-Alkylthio-$C_1$-$C_6$-alkyl oder gegebenenfalls durch Fluor, Chlor, $C_1$-$C_4$-Alkyl oder $C_1$-$C_4$-Alkoxy

substituiertes $C_3$-$C_7$-Cycloalkyl, in welchem gegebenenfalls ein oder zwei nicht direkt benachbarte Ringglieder durch Sauerstoff und/oder Schwefel ersetzt sind,
für gegebenenfalls durch Fluor, Chlor, Brom, Cyano, Nitro, $C_1$-$C_4$-Alkyl, $C_1$-$C_4$-Alkoxy, $C_1$-$C_3$-Halogenalkyl oder $C_1$-$C_3$-Halogenalkoxy substituiertes Phenyl steht,
$R^2$ für jeweils gegebenenfalls durch Fluor substituiertes $C_1$-$C_{16}$-Alkyl, $C_2$-$C_{16}$-Alkenyl oder $C_1$-$C_6$-Alkoxy-$C_2$-$C_6$-alkyl,
für gegebenenfalls durch Fluor, Chlor, $C_1$-$C_4$-Alkyl oder $C_1$-$C_4$-Alkoxy substituiertes $C_3$-$C_7$-Cycloalkyl,
für jeweils gegebenenfalls durch Fluor, Chlor, Brom, Cyano, Nitro, $C_1$-$C_4$-Alkyl, $C_1$-$C_3$-Alkoxy, $C_1$-$C_3$-Halogenalkyl oder $C_1$-$C_3$-Halogenalkoxy substituiertes Phenyl oder Benzyl steht,
$R^3$ für gegebenenfalls durch Fluor substituiertes $C_1$-$C_6$-Alkyl oder für jeweils gegebenenfalls durch Fluor, Chlor, Brom, $C_1$-$C_4$-Alkyl, $C_1$-$C_4$-Alkoxy, $C_1$-$C_3$-Halogenalkyl, $C_1$-$C_3$-Halogenalkoxy, Cyano oder Nitro substituiertes Phenyl steht,
$R^4$ für $C_1$-$C_6$-Alkyl, $C_1$-$C_6$-Alkoxy, $C_1$-$C_6$-Alkylamino, Di-($C_1$-$C_6$-alkyl)amino, $C_1$-$C_6$-Alkylthio, $C_3$-$C_4$-Alkenylthio, $C_3$-$C_6$-Cycloalkylthio oder für jeweils gegebenenfalls durch Fluor, Chlor, Brom, Nitro, Cyano, $C_1$-$C_3$-Alkoxy, $C_1$-$C_3$-Halogenalkoxy, $C_1$-$C_3$-Alkylthio, $C_1$-$C_3$-Halogenalkylthio, $C_1$-$C_3$-Alkyl oder $C_1$-$C_3$-Halogenalkyl substituiertes Phenyl, Phenoxy oder Phenylthio steht,
$R^5$ für $C_1$-$C_6$-Alkoxy oder $C_1$-$C_6$-Alkylthio steht,
$R^6$ für Wasserstoff, $C_1$-$C_6$-Alkyl, $C_3$-$C_6$-Cycloalkyl, $C_1$-$C_6$-Alkoxy, $C_3$-$C_6$-Alkenyl, $C_1$-$C_6$-Alkoxy-$C_1$-$C_4$-alkyl, für gegebenenfalls durch Fluor, Chlor, Brom, $C_1$-$C_3$-Halogenalkyl, $C_1$-$C_4$-Alkyl oder $C_1$-$C_4$-Alkoxy substituiertes Phenyl, für gegebenenfalls durch Fluor, Chlor, Brom, $C_1$-$C_4$-Alkyl, $C_1$-$C_3$-Halogenalkyl oder $C_1$-$C_4$-Alkoxy substituiertes Benzyl steht,
$R^7$ für $C_1$-$C_6$-Alkyl, $C_3$-$C_6$-Alkenyl oder $C_1$-$C_6$-Alkoxy-$C_1$-$C_4$-alkyl steht, oder
$R^6$ und $R^7$ zusammen für einen gegebenenfalls durch Methyl oder Ethyl substituierten $C_4$-$C_5$-Alkylenrest stehen, in welchem gegebenenfalls eine Methylengruppe durch Sauerstoff oder Schwefel ersetzt ist.

**4.** Verwendung eines Mittels gemäß Anspruch 1 zur Bekämpfung von Insekten und/oder Spinnentieren, enthaltend Verbindungen der Formel I), in welcher

W für Wasserstoff, Chlor, Brom, Methyl, Ethyl oder Methoxy steht,
X für Chlor, Brom, Methyl, Ethyl, Methoxy, Ethoxy oder Trifluormethyl steht,
Y für Wasserstoff, Chlor, Brom, Methyl, Ethyl, Propyl oder Trifluormethyl steht,
Z für Wasserstoff, Chlor, Brom, Methyl oder für den Rest

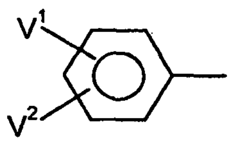

steht,
$V^1$ für Wasserstoff, Fluor, Chlor, Methyl, Ethyl, Methoxy, Trifluormethyl oder Trifluormethoxy steht,
$V^2$ für Wasserstoff, Fluor, Chlor oder Methyl steht,
CKE für eine der Gruppen

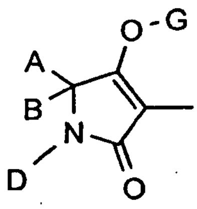 (1),

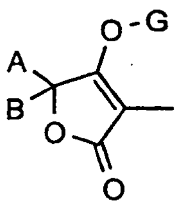 (2),

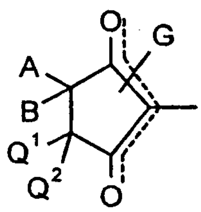 (5) oder 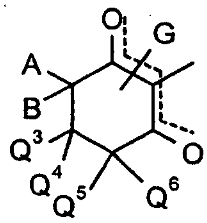 (6)

steht,

A für Wasserstoff, jeweils gegebenenfalls durch Fluor substituiertes $C_1$-$C_4$-Alkyl, $C_1$-$C_2$-Alkoxy-$C_1$-$C_2$-alkyl oder $C_3$-$C_6$-Cycloalkyl steht,

B für Wasserstoff oder Methyl steht, oder

A, B und das Kohlenstoffatom an das sie gebunden sind, für gesättigtes $C_5$-$C_6$-Cycloalkyl, in welchem gegebenenfalls ein Ringglied durch Sauerstoff oder Schwefel ersetzt ist und welches gegebenenfalls einfach durch Methyl, Ethyl, Propyl, Trifluormethyl, Methoxy, Ethoxy, Propoxy, Butoxy oder Isobutoxy substituiert ist, oder

A, B und das Kohlenstoffatom, an das sie gebunden sind, für $C_5$-$C_6$-Cycloalkyl stehen, welches durch eine mit zwei nicht direkt benachbarten Sauerstoffatomen enthaltende Alkylendioxyl-Gruppe substituiert ist, die mit dem Kohlenstoff, an das sie gebunden sind, einen weiteren fünf- oder sechsgliedrigen Ring bilden,

D für Wasserstoff, $C_1$-$C_4$-Alkyl, $C_3$-$C_4$-Alkenyl, $C_1$-$C_2$-Alkoxy-$C_2$-$C_3$-alkyl oder $C_3$-$C_6$-Cycloalkyl steht,

oder

A und D gemeinsam für gegebenenfalls substituiertes $C_3$-$C_5$-Alkandiyl stehen, worin gegebenenfalls ein Kohlenstoffatom durch Sauerstoff oder Schwefel ersetzt ist,

A und D (im Fall der Verbindungen der Formel (I-1)) gemeinsam mit den Atomen, an die sie gebunden sind, für die Gruppe:

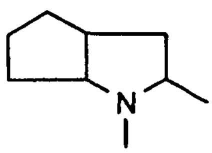

AD-1

stehen,

A und $Q^1$ gemeinsam für gegebenenfalls einfach oder zweifach durch Methyl oder Methoxy substituiertes $C_3$-$C_4$-Alkandiyl stehen, oder

$Q^1$ für Wasserstoff steht,

$Q^2$ für Wasserstoff steht,

$Q^4$, $Q^5$ und $Q^6$ unabhängig voneinander für Wasserstoff oder Methyl stehen,

$Q^3$ für Wasserstoff, Methyl, Ethyl oder $C_3$-$C_6$-Cycloalkyl steht, oder

$Q^3$ und $Q^4$ gemeinsam mit dem Kohlenstoff, an den sie gebunden sind, für einen gegebenenfalls durch Methyl oder Methoxy substituierten gesättigten $C_5$-$C_6$-Ring stehen, in welchem gegebenenfalls ein Ringglied durch Sauerstoff ersetzt ist,

G für Wasserstoff (a) oder für eine der Gruppen

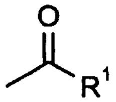 (b) oder 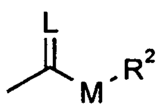 (c)

steht,

in welchen

E für ein Metallionäquivalent oder ein Ammoniumion steht,
L für Sauerstoff steht und
M für Sauerstoff oder Schwefel steht,

$R^1$ für jeweils gegebenenfalls durch Fluor oder Chlor substituiertes $C_1$-$C_{10}$-Alkyl, $C_2$-$C_{10}$-Alkenyl, $C_1$-$C_4$-Alkoxy-$C_1$-$C_2$-alkyl, $C_1$-$C_4$-Alkylthio-$C_1$-$C_2$-alkyl oder gegebenenfalls durch Fluor, Chlor, Methyl, Ethyl oder Methoxy substituiertes $C_3$-$C_6$-Cycloalkyl,
für gegebenenfalls durch Fluor, Chlor, Brom, Cyano, Nitro, Methyl, Methoxy, Trifluormethyl oder Trifluormethoxy substituiertes Phenyl steht,
$R^2$ für jeweils gegebenenfalls durch Fluor substituiertes $C_1$-$C_{10}$-Alkyl, $C_2$-$C_{10}$-Alkenyl oder $C_1$-$C_4$-Alkoxy-$C_2$-$C_4$-alkyl oder
für $C_3$-$C_6$-Cycloalkyl,
oder für jeweils gegebenenfalls durch Fluor, Chlor, Cyano, Nitro, Methyl, Methoxy, Trifluormethyl oder Trifluormethoxy substituiertes Phenyl oder Benzyl steht

**5.** Verwendung eines Mittels gemäß Anspruch 1 zur Bekämpfung von Insekten und/oder Spinnentieren, enthaltend Verbindungen der Formel (I), in welcher

W für Wasserstoff, Methyl, Ethyl, Chlor oder Brom steht,
X für Chlor, Brom, Methyl, Ethyl oder Methoxy steht,
Y für Wasserstoff, Chlor, Brom, Methyl oder Ethyl steht,
Z für Wasserstoff, Chlor, Brom, Methyl, oder für den Rest

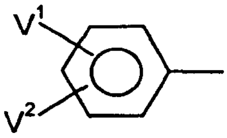

steht,
der in der para-Position zum Substituenten X steht,

$V^1$ für Fluor, Chlor, oder Trifluormethyl steht,
$V^2$ für Wasserstoff, Fluor oder Chlor steht,
CKE für eine der Gruppen

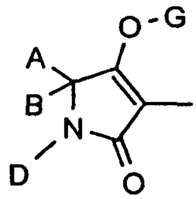

(1) oder

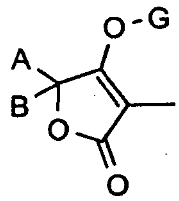

(2)

steht,

A, B und das Kohlenstoffatom an das sie gebunden sind, für ungesättigtes $C_5$-$C_6$-Cycloalkyl stehen, in welchem gegebenenfalls ein Ringglied durch Sauerstoff ersetzt ist und welches gegebenenfalls einfach durch Methyl, Methoxy, Ethoxy, Propoxy oder Trifluormethyl substituiert ist,
D für Wasserstoff steht,
G für Wasserstoff (a) oder für eine der Gruppen

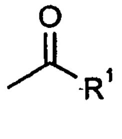

(b) oder

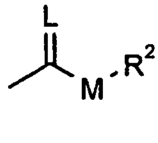

(c)

steht,

in welchen

L für Sauerstoff steht und
M für Sauerstoff oder Schwefel steht,

$R^1$ für $C_1$-$C_6$-Alkyl, $C_2$-$C_6$-Alkenyl, $C_1$-$C_2$-Alkoxy-$C_1$-alkyl, $C_1$-$C_2$-Alkylthio-$C_1$-alkyl oder gegebenenfalls einfach durch Fluor, Chlor, Methyl oder Methoxy substituiertes Cyclopropyl oder Cyclohexyl stehen,
für gegebenenfalls einfach durch Fluor, Chlor, Brom, Cyano, Nitro, Methyl, Methoxy, Trifluormethyl oder Trifluormethoxy substituiertes Phenyl steht,
$R^2$ für jeweils gegebenenfalls einfach bis dreifach durch Fluor substituiertes $C_1$-$C_8$-Alkyl, $C_2$-$C_6$-Alkenyl oder $C_1$-$C_4$-Alkoxy-$C_2$-$C_3$-alkyl, Phenyl oder Benzyl steht.

**6.** Verwendung eines Mittels gemäß Anspruch 1 zur Bekämpfung von Insekten und/oder Spinnentieren, enthaltend Verbindungen der Formel (I), in welcher

W für Wasserstoff oder Methyl steht,
X für Chlor, Brom, Methyl oder Ethyl steht,
Y für Wasserstoff, Chlor, Brom oder Methyl steht,
Z für Wasserstoff, Chlor, Brom oder Methyl steht,
CKE für die Gruppe

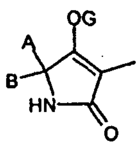 (1)

steht,
A, B und das Kohlenstoffatom an das sie gebunden sind, für gesättigtes $C_6$-Cycloalkyl stehen, in welchem gegebenenfalls ein Ringglied durch Sauerstoff ersetzt ist und welches gegebenenfalls einfach durch Methyl, Trifluormethyl, Methoxy, Ethoxy oder Propoxy substituiert ist,
G für Wasserstoff (a) oder für eine der Gruppen

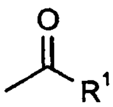 (b) oder 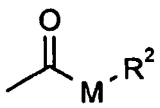 (c)

steht,
in welchen
M für Sauerstoff oder Schwefel steht,
$R^1$ für $C_1$-$C_6$-Alkyl, $C_2$-$C_4$-Alkenyl, Methoxymethyl, Ethoxymethyl, Ethylthiomethyl, Cyclopropyl, Cyclopentyl, Cyclohexyl oder
für gegebenenfalls einfach durch Fluor, Chlor, Brom, Methyl, Methoxy, Trifluormethyl, Trifluormethoxy, Cyano oder Nitro substituiertes Phenyl steht,
$R^2$ für $C_1$-$C_6$-Alkyl, $C_2$-$C_4$-Alkenyl, Methoxyethyl, Ethoxyethyl, Phenyl oder Benzyl steht.

**7.** Verwendung eines Mittels gemäß Anspruch 1 zur Bekämpfung von Insekten und/oder Spinnentieren, enthaltend Verbindungen der Formel (I-1'),

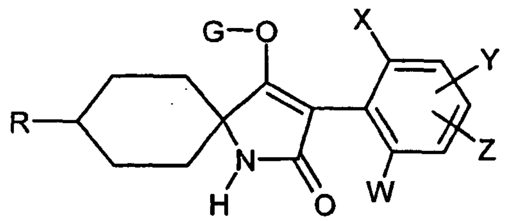

(I-1')

in welcher die Reste die folgende Bedeutung haben:

| W | X | Y | Z | R | G |
|---|---|---|---|---|---|
| $CH_3$ | $C_2H_5$ | 4-Br | H | $OCH_3$ | H |
| H | Br | H | 5-$CH_3$ | $OCH_3$ | CO-i-$C_3H_7$ |
| H | Br | H | 5-$CH_3$ | $OCH_3$ | $CO_2$-$C_2H_5$ |
| H | $CH_3$ | H | 5-$CH_3$ | $OCH_3$ | H |
| H | $CH_3$ | H | 5-$CH_3$ | $OCH_3$ | $CO_2$-$C_2H_5$ |
| $CH_3$ | $CH_3$ | H | 3-Br | $OCH_3$ | H |
| $CH_3$ | $CH_3$ | H | 3-Cl | $OCH_3$ | H |
| H | Br | 4-$CH_3$ | 5-$CH_3$ | $OCH_3$ | CO-i-$C_3H_7$ |
| H | $CH_3$ | 4-Cl | 5-$CH_3$ | $OCH_3$ | $CO_2$-$C_2H_5$ |
| $CH_3$ | $CH_3$ | 4-$CH_3$ | 3-$CH_3$ | $OCH_3$ | H |
| $CH_3$ | $CH_3$ | H | 3-Br | $OC_2H_5$ | CO-i-$C_3H_7$ |
| H | $CH_3$ | 4-$CH_3$ | 5-$CH_3$ | $OC_2H_5$ | CO-n-$C_3H_7$ |
| H | $CH_3$ | 4-$CH_3$ | 5-$CH_3$ | $OC_2H_5$ | CO-i-$C_3H_7$ |
| H | $CH_3$ | 4-$CH_3$ | 5-$CH_3$ | $OC_2H_5$ | CO-c-$C_3H_5$ |

**8.** Verwendung eines Mittels gemäß Anspruch 1 zur Bekämpfung von Insekten und/oder Spinnentieren, bei dem die die Kulturpflanzen-Verträglichkeit verbessernde Verbindung aus der folgenden Gruppe von Verbindungen ausgewählt ist:

Cloquintocet-mexyl, Isoxadifen-ethyl, Mefenpyr-diethyl, Dichlormid, Furilazole, Fenclorim oder die Verbindung

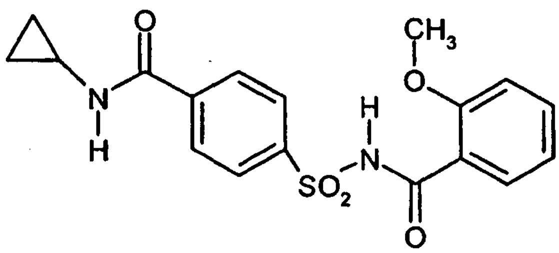

.

**9.** Verfahren zur Bekämpfung von Insekten und/oder Akariden, **dadurch gekennzeichnet, dass** man Mittel wie in Anspruch 1 definiert auf Insekten und/oder Spinnentiere und/oder deren Lebensraum einwirken lässt.

**10.** Mittel enthaltend einen wirksamen Gehalt an einer Wirkstoffkombination umfassend

(a) mindestens eine Verbindung der Formel (I-1')

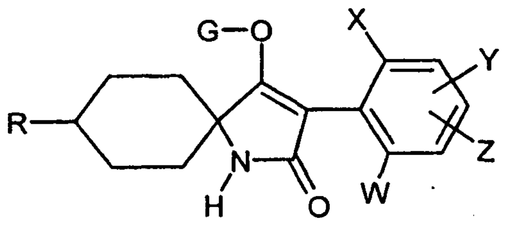
(I-1')

in welcher die Substituenten W, X, Y, Z, R und G die unten angegebenen Bedeutungen haben

| W | X | Y | Z | R | G |
|---|---|---|---|---|---|
| $CH_3$ | $C_2H_5$ | 4-Br | H | $OCH_3$ | H |
| H | Br | H | 5-$CH_3$ | $OCH_3$ | CO-i-$C_3H_7$ |
| H | Br | H | 5-$CH_3$ | $OCH_3$ | $CO_2$-$C_2H_5$ |
| H | $CH_3$ | H | 5-$CH_3$ | $OCH_3$ | H |
| H | $CH_3$ | H | 5-$CH_3$ | $OCH_3$ | $CO_2$-$C_2H_5$ |
| $CH_3$ | $CH_3$ | H | 3-Br | $OCH_3$ | H |
| $CH_3$ | $CH_3$ | H | 3-Cl | $OCH_3$ | H |
| H | Br | 4-$CH_3$ | 5-$CH_3$ | $OCH_3$ | CO-i-$C_3H_7$ |
| H | $CH_3$ | 4-Cl | 5-$CH_3$ | $OCH_3$ | $CO_2$-$C_2H_5$ |
| $CH_3$ | $CH_3$ | 4-$CH_3$ | 3-$CH_3$ | $OCH_3$ | H |
| $CH_3$ | $CH_3$ | H | 3-Br | $OC_2H_5$ | CO-i-$C_3H_7$ |
| H | $CH_3$ | 4-$CH_3$ | 5-$CH_3$ | $OC_2H_5$ | CO-n-$C_3H_7$ |
| H | $CH_3$ | 4-$CH_3$ | 5-$CH_3$ | $OC_2H_5$ | CO-i-$C_3H_7$ |
| H | $CH_3$ | 4-$CH_3$ | 5-$CH_3$ | $OC_2H_5$ | CO-c-$C_3H_5$ |

und
(b) zumindest eine die Kulturpflanzen-Verträglichkeit verbessernde Verbindung gemäß Anspruch 1.

**11.** Mittel gemäß Anspruch 10 enthaltend die Verbindung der Formel (I-1'-5).

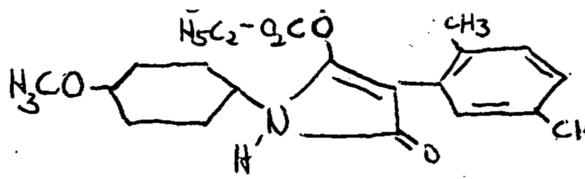
(I-1'-5).

## Claims

**1.** Use of a composition comprising an effective amount of an active compound combination comprising

(a) at least one substituted cyclic ketoenol of the formula (I)

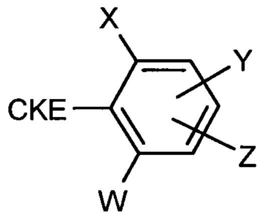

(I)

in which

X represents halogen, alkyl, alkenyl, alkynyl, alkoxy, alkenyloxy, alkylthio, alkylsulphinyl, alkylsulphonyl, haloalkyl, haloalkoxy, haloalkenyloxy, nitro or cyano,
Z represents hydrogen, alkyl, halogen, alkenyl, alkynyl, represents in each case optionally substituted aryl or hetaryl,
W and Y independently of one another represent hydrogen, halogen, alkyl, alkoxy, alkenyloxy, haloalkyl, haloalkoxy, haloalkenyloxy, nitro or cyano,
CKE represents one of the groups

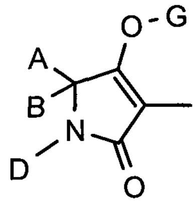

(1),

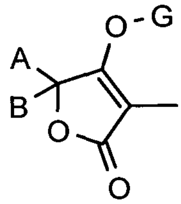

(2),

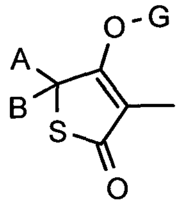

(3),

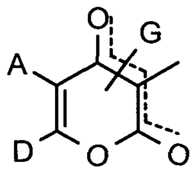

(4),

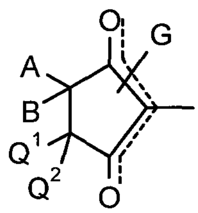

(5) or

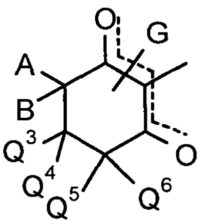

(6),

in which
A represents hydrogen, in each case optionally halogen-substituted alkyl, alkenyl, alkoxyalkyl, alkylthioalkyl, saturated or unsaturated, optionally substituted cycloalkyl, in which optionally at least one ring atom is replaced by a heteroatom, or in each case optionally halogen-, alkyl-, haloalkyl-, alkoxy-, haloalkoxy-, cyano- or nitrosubstituted aryl, arylalkyl or hetaryl,
B represents hydrogen, alkyl or alkoxyalkyl, or
A and B together with the carbon atom to which they are attached represent a saturated or unsaturated, unsubstituted or substituted cycle which optionally contains at least one heteroatom,
D represents hydrogen or an optionally substituted radical from the group consisting of alkyl, alkenyl, alkynyl, alkoxyalkyl, saturated or unsaturated cycloalkyl, in which optionally one or more ring members are replaced by heteroatoms, arylalkyl, aryl, hetarylalkyl or hetaryl, or
A and D together with the atoms to which they are attached represent a saturated or unsaturated cycle which is unsubstituted or substituted in the A,D moiety and optionally contains at least one heteroatom, or
A and $Q^1$ together represent alkanediyl or alkenediyl which are in each case optionally substituted by hydroxyl or by in each case optionally substituted alkyl, alkoxy, alkylthio, cycloalkyl, benzyloxy or aryl, or

$Q^1$ represents hydrogen or alkyl,
$Q^2$, $Q^4$, $Q^5$ and $Q^6$ independently of one another represent hydrogen or alkyl,
$Q^3$ represents hydrogen, alkyl, alkoxyalkyl, alkylthioalkyl, optionally substituted cycloalkyl (in which optionally one methylene group is replaced by oxygen or sulphur) or optionally substituted phenyl, or
$Q^3$ and $Q^4$ together with the carbon atom to which they are attached, represent a saturated or unsaturated, unsubstituted or substituted cycle which optionally contains a heteroatom,
G represents hydrogen (a) or represents one of the groups

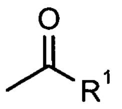 (b), 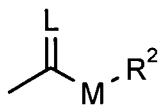 (c), 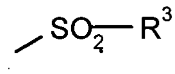 (d), 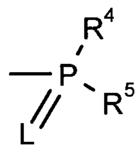 (e),

E (f) or

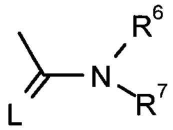 (g),

in which

E represents a metal ion equivalent or an ammonium ion,
L represents oxygen or sulphur,
M represents oxygen or sulphur,
$R^1$ represents in each case optionally halogen-substituted alkyl, alkenyl, alkoxyalkyl, alkylthioalkyl, polyalkoxyalkyl or optionally halogen-, alkyl- or alkoxysubstituted cycloalkyl, which may be interrupted by at least one heteroatom, represents in each case optionally substituted phenyl, phenylalkyl, hetaryl, phenoxyalkyl or hetaryloxyalkyl,
$R^2$ represents in each case optionally halogen-substituted alkyl, alkenyl, alkoxyalkyl, polyalkoxyalkyl or represents in each case optionally substituted cycloalkyl, phenyl or benzyl,
$R^3$, $R^4$ and $R^5$ independently of one another represent in each case optionally halogen-substituted alkyl, alkoxy, alkylamino, dialkylamino, alkylthio, alkenylthio, cycloalkylthio and represent in each case optionally substituted phenyl, benzyl, phenoxy or phenylthio,
$R^6$ and $R^7$ independently of one another represent hydrogen, in each case optionally halogen-substituted alkyl, cycloalkyl, alkenyl, alkoxy, alkoxyalkyl, represent optionally substituted phenyl, represent optionally substituted benzyl, or together with the N atom to which they are attached represent a cycle which is optionally interrupted by oxygen or sulphur,
- including all possible tautomeric forms of the compounds of the general formula (I) and the possible salts or acid or base adducts of the compounds of the general formula (I) -

and

(b) at least one crop plant compatibility-improving compound, from the group of compounds below:

4-dichloroacetyl-1-oxa-4-aza-spiro[4.5]-decane (AD-67, MON-4660), 1-dichloroacetyl-hexahydro-3,3,8a-trimethylpyrrolo[1,2-a]-pyrimidin-6(2H)-one (dicyclonon, BAS-145138), 4-dichloroacetyl-3,4-dihydro-3-methyl-2H-1,4-benzoxazine (benoxacor), 1-methyl-hexyl 5-chloro-quinolin-8-oxy-acetate (cloquintocet-mexyl), 3-(2-chloro-benzyl)-1-(1-methyl-1-phenyl-ethyl)-urea (cumyluron), $\alpha$-(cyanomethoximino)-phenylacetonitrile (cyometrinil), 2,4-dichloro-phenoxyacetic acid (2,4-D), 4-(2,4-dichloro-phenoxy)-butyric acid (2,4-DB), 1-(1-methyl-1-phenyl-ethyl)-3-(4-methylphenyl)-urea (daimuron, dymron), 3,6-dichloro-2-methoxy-benzoic acid (dicamba), S-1-methyl-1-phenyl-ethyl piperidine-1-thiocarboxylate (dimepiperate), 2,2-dichloro-N-(2-oxo-2-(2-propenylamino)-ethyl)-N-(2-propenyl)-acetamide (DKA-24), 2,2-dichloro-N,N-di-2-propenyl-acetamide (dichlormid), 4,6-dichloro-2-phenyl-pyrimidine (fenclorim), ethyl 1-(2,4-dichloro-phenyl)-5-trichloromethyl-1H-1,2,4-triazole-3-carboxylate (fenchlorazole-ethyl), phenyl-methyl 2-chloro-4-trifluoromethyl-thiazole-5-carboxylate (flurazole), 4-chloro-N-(1,3-dioxolan-2-ylmethoxy)-$\alpha$-trifluoro-ace-

tophenone oxime (fluxofenim), 3-dichloroacetyl-5-(2-furanyl)-2,2-dimethyl-oxazolidine (furilazole, MON-13900), ethyl 4,5-dihydro-5,5-diphenyl-3-isoxazolecarboxylate (isoxadifen-ethyl), 1-(ethoxycarbonyl)-ethyl 3,6-dichloro-2-methoxybenzoate (lactidichlor), (4-chloro-o-tolyloxy)-acetic acid (MCPA), 2-(4-chloro-o-tolyloxy)-propionic acid (mecoprop), diethyl 1-(2,4-dichloro-phenyl)-4,5-dihydro-5-methyl-1H-pyrazole-3,5-dicarboxylate (mefenpyr-diethyl), 2-dichloromethyl-2-methyl-1,3-dioxolane (MG-191), 2-propenyl-1-oxa-4-azaspiro[4.5]decane 4-carbodithioate (MG-838), 1,8-naphthalic anhydride, α-(1,3-dioxolan-2-yl-methoximino)-phenylacetonitrile (oxabetrinil), 2,2-dichloro-N-(1,3-dioxolan-2-yl-methyl)-N-(2-propenyl)-acetamide (PPG-1292), 3-dichloroacetyl-2,2-dimethyl-oxazolidine (R-28725), 3-dichloroacetyl-2,2,5-trimethyl-oxazolidine (R-29148), 4-(4-chloro-o-tolyl)-butyric acid, 4-(4-chloro-phenoxy)-butyric acid, diphenylmethoxyacetic acid, methyl diphenylmethoxyacetate, ethyl diphenylmethoxyacetate, methyl 1-(2-chloro-phenyl)-5-phenyl-1H-pyrazole-3-carboxylate, ethyl 1-(2,4-dichloro-phenyl)-5-methyl-1H-pyrazole-3-carboxylate, ethyl 1-(2,4-dichloro-phenyl)-5-isopropyl-1H-pyrazole-3-carboxylate, ethyl 1-(2,4-dichloro-phenyl)-5-(1,1-dimethyl-ethyl)-1H-pyrazole-3-carboxylate, ethyl 1-(2,4-dichlorophenyl)-5-phenyl-1H-pyrazole-3-carboxylate, ethyl 5-(2,4-dichloro-benzyl)-2-isoxazoline-3-carboxylate, ethyl 5-phenyl-2-isoxazoline-3-carboxylate, ethyl 5-(4-fluoro-phenyl)-5-phenyl-2-isoxazoline-3-carboxylate, 1,3-dimethyl-but-1-yl 5-chloro-quinolin-8-oxy-acetate, 4-allyloxy-butyl 5-chloro-quinolin-8-oxy-acetate, 1-allyloxy-prop-2-yl 5-chloro-quinolin-8-oxy-acetate, methyl 5-chloro-quinoxalin-8-oxy-acetate, ethyl 5-chloroquinolin-8-oxy-acetate, allyl 5-chloro-quinoxalin-8-oxy-acetate, 2-oxo-prop-1-yl 5-chloro-quinolin-8-oxy-acetate, diethyl 5-chloro-quinolin-8-oxymalonate, diallyl 5-chloro-quinoxalin-8-oxymalonate, diethyl 5-chloro-quinolin-8-oxymalonate, 4-carboxy-chroman-4-yl-acetic acid (AC-304415), 4-chloro-phenoxy-acetic acid, 3,3'-dimethyl-4-methoxy-benzophenone, 1-bromo-4-chloromethylsulphonyl-benzene, 1-[4-(N-2-methoxybenzoylsulphamoyl)-phenyl]-3-methyl-urea (alias N-(2-methoxy-benzoyl)-4-[(methylaminocarbonyl)-amino]-benzenesulphonamide), 1-[4-(N-2-methoxybenzoylsulphamoyl)-phenyl]-3,3-dimethyl-urea, 1-[4-(N-4,5-dimethylbenzoylsulphamoyl)-phenyl]-3-methyl-urea, 1-[4-(N-naphthylsulphamoyl)-phenyl]-3,3-dimethyl-urea, N-(2-methoxy-5-methyl-benzoyl)-4-(cyclopropylaminocarbonyl)-benzenesulphonamide,
and/or one of the following compounds defined by general formulae of the general formula (IIa)

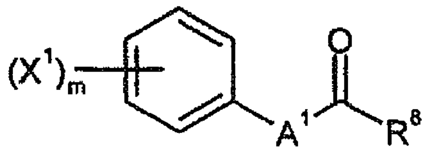

(IIa)

or of the general formula (IIb)

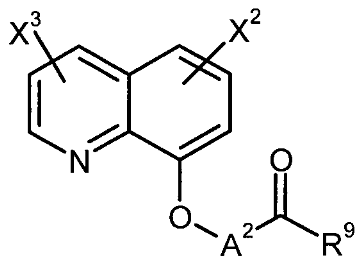

(IIb)

or the formula (IIc)

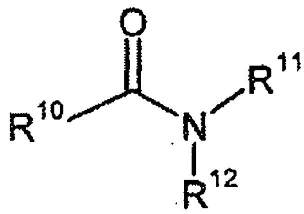

(IIc)

where
m represents a number 0, 1, 2, 3, 4 or 5,
$A^1$ represents one of the divalent heterocyclic groupings shown below

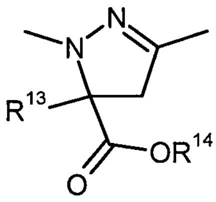 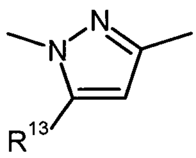 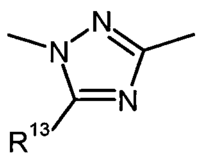 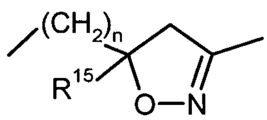

n represents a number 0, 1, 2, 3, 4 or 5,

$A^2$ represents optionally $C_1$-$C_4$-alkyl- and/or $C_1$-$C_4$-alkoxy-carbonyl- and/or $C_1$-$C_4$-alkenyloxycarbonyl-substituted alkanediyl with 1 or 2 carbon atoms,

$R^8$ represents hydroxyl, mercapto, amino, $C_1$-$C_6$-alkoxy, $C_1$-$C_6$-alkylthio, $C_1$-$C_6$-alkylamino or di-($C_1$-$C_4$-alkyl)-amino,

$R^9$ represents hydroxyl, mercapto, amino, $C_1$-$C_7$-alkoxy, $C_1$-$C_6$-alkenyloxy, $C_1$-$C_6$-alkenyloxy-$C_1$-$C_6$-alkoxy, $C_1$-$C_6$-alkylthio, $C_1$-$C_6$-alkylamino or di-($C_1$-$C_4$-alkyl)-amino,

$R^{10}$ represents in each case optionally fluorine-, chlorine- and/or bromine-substituted $C_1$-$C_4$-alkyl,

$R^{11}$ represents hydrogen, in each case optionally fluorine-, chlorine- and/or bromine-substituted $C_1$-$C_6$-alkyl, $C_2$-$C_6$-alkenyl or $C_2$-$C_6$-alkynyl, $C_1$-$C_4$-alkoxy-$C_1$-$C_4$-alkyl, dioxolanyl-$C_1$-$C_4$-alkyl, furyl, furyl-$C_1$-$C_4$-alkyl, thienyl, thiazolyl, piperidinyl, or optionally fluorine-, chlorine- and/or bromine- or $C_1$-$C_4$-alkyl-substituted phenyl,

$R^{12}$ represents hydrogen, in each case optionally fluorine-, chlorine- and/or bromine-substituted $C_1$-$C_6$-alkyl, $C_2$-$C_6$-alkenyl or $C_2$-$C_6$-alkynyl, $C_1$-$C_4$-alkoxy-$C_1$-$C_4$-alkyl, dioxolanyl-$C_1$-$C_4$-alkyl, furyl, furyl-$C_1$-$C_4$-alkyl, thienyl, thiazolyl, piperidinyl, or optionally fluorine-, chlorine- and/or bromine- or $C_1$-$C_4$-alkyl-substituted phenyl, or $R^{11}$ and $R^{12}$ together also represent $C_3$-$C_6$-alkanediyl or $C_2$-$C_5$-oxaalkanediyl, each of which is optionally substituted by $C_1$-$C_4$-alkyl, phenyl, furyl, a fused-on benzene ring or by two substituents which together with the C atom to which they are attached form a 5- or 6-membered carbocycle,

$R^{13}$ represents hydrogen, cyano, halogen, or represents in each case optionally fluorine-, chlorine- and/or bromine-substituted $C_1$-$C_4$-alkyl, $C_3$-$C_6$-cycloalkyl or phenyl,

$R^{14}$ represents hydrogen, optionally hydroxyl-, cyano-, halogen- or $C_1$-$C_4$-alkoxy-substituted $C_1$-$C_6$-alkyl, $C_3$-$C_6$-cycloalkyl or tri-($C_1$-$C_4$-alkyl)-silyl,

$R^{15}$ represents hydrogen, cyano, halogen, or represents in each case optionally fluorine-, chlorine- and/or bromine-substituted $C_1$-$C_4$-alkyl, $C_3$-$C_6$-cycloalkyl or phenyl,

$X^1$ represents nitro, cyano, halogen, $C_1$-$C_4$-alkyl, $C_1$-$C_4$-haloalkyl, $C_1$-$C_4$-alkoxy or $C_1$-$C_4$-haloalkoxy,

$X^2$ represents hydrogen, cyano, nitro, halogen, $C_1$-$C_4$-alkyl, $C_1$-$C_4$-haloalkyl, $C_1$-$C_4$-alkoxy or $C_1$-$C_4$-haloalkoxy,

$X^3$ represents hydrogen, cyano, nitro, halogen, $C_1$-$C_4$-alkyl, $C_1$-$C_4$-haloalkyl, $C_1$-$C_4$-alkoxy or $C_1$-$C_4$-haloalkoxy,

and/or the following compounds defined by general formulae of the general formula (IId)

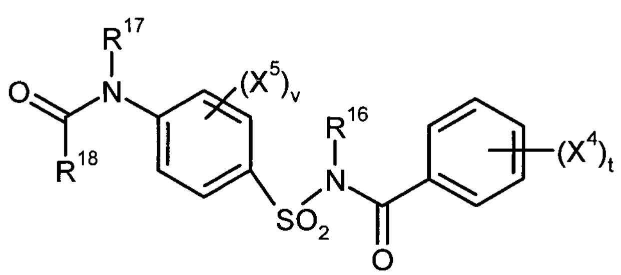 (IId)

or of the general formula (IIe)

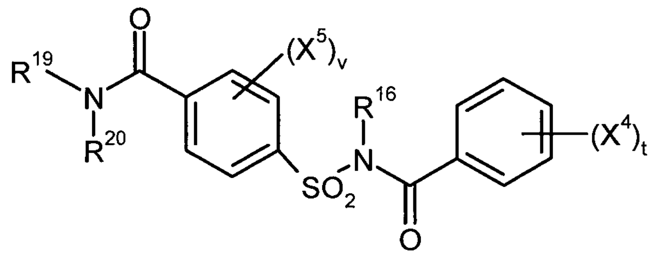

(IIe)

where

t represents a number 0, 1, 2, 3, 4 and 5,
v represents a number 0, 1, 2, 3, 4 and 5,
$R^{16}$ represents hydrogen or $C_1$-$C_4$-alkyl,
$R^{17}$ represents hydrogen or $C_1$-$C_4$-alkyl,
$R^{18}$ represents hydrogen, in each case optionally cyano-, halogen- or $C_1$-$C_4$-alkoxy-substituted $C_1$-$C_6$-alkyl, $C_1$-$C_6$-alkoxy, $C_1$-$C_6$-alkylthio, $C_1$-$C_6$-alkylamino or di-($C_1$-$C_4$-alkyl)-amino, or in each case optionally cyano-, halogen- or $C_1$-$C_4$-alkyl-substituted $C_3$-$C_6$-cycloalkyl, $C_3$-$C_6$-cycloalkyloxy, $C_3$-$C_6$-cycloalkylthio or $C_3$-$C_6$-cycloalkylamino,
$R^{19}$ represents hydrogen, optionally cyano-, hydroxyl-, halogen- or $C_1$-$C_4$-alkoxy-substituted $C_1$-$C_6$-alkyl, in each case optionally cyano- or halogen-substituted $C_3$-$C_6$-alkenyl or $C_3$-$C_6$-alkynyl, or optionally cyano-, halogen- or $C_1$-$C_4$-alkyl-substituted $C_3$-$C_6$-cycloalkyl,
$R^{20}$ represents hydrogen, optionally cyano-, hydroxyl-, halogen- or $C_1$-$C_4$-alkoxy-substituted $C_1$-$C_6$-alkyl, in each case optionally cyano- or halogen-substituted $C_3$-$C_6$-alkenyl or $C_3$-$C_6$-alkynyl, optionally cyano-, halogen- or $C_1$-$C_4$-alkyl-substituted $C_3$-$C_6$-cycloalkyl, or optionally nitro-, cyano-, halogen-, $C_1$-$C_4$-alkyl-, $C_1$-$C_4$-haloalkyl-, $C_1$-$C_4$-alkoxy- or $C_1$-$C_4$-haloalkoxy-substituted phenyl, or together with $R^{19}$ represents in each case optionally $C_1$-$C_4$-alkyl-substituted $C_2$-$C_6$-alkanediyl or $C_2$-$C_5$-oxaalkanediyl,
$X^4$ represents nitro, cyano, carboxyl, carbamoyl, formyl, sulphamoyl, hydroxyl, amino, halogen, $C_1$-$C_4$-alkyl, $C_1$-$C_4$-haloalkyl, $C_1$-$C_4$-alkoxy or $C_1$-$C_4$-haloalkoxy, and
$X^5$ represents nitro, cyano, carboxyl, carbamoyl, formyl, sulphamoyl, hydroxyl, amino, halogen, $C_1$-$C_4$-alkyl, $C_1$-$C_4$-haloalkyl, $C_1$-$C_4$-alkoxy or $C_1$-$C_4$-haloalkoxy,

for controlling insects and/or arachnids.

**2.** Use of a composition according to Claim 1 for controlling insects and/or arachnids, which compositions comprise compounds of the formula (I) in which

X represents halogen, $C_1$-$C_6$-alkyl, $C_2$-$C_6$-alkenyl, $C_2$-$C_6$-alkynyl, $C_1$-$C_6$-haloalkyl, $C_1$-$C_6$-alkoxy, $C_3$-$C_6$-alkenyloxy, $C_1$-$C_6$-haloalkoxy, $C_3$-$C_6$-haloalkenyloxy, nitro or cyano,
Z represents hydrogen, halogen, $C_1$-$C_6$-alkyl, $C_2$-$C_6$-alkenyl, $C_2$-$C_6$-alkynyl or represents one of the radicals

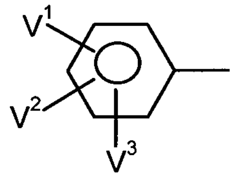 , 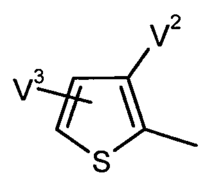 ,

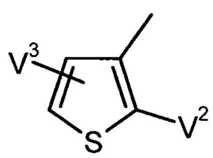 ,

in which

$V^1$ represents hydrogen, halogen, $C_1$-$C_{12}$-alkyl, $C_1$-$C_6$-alkoxy, $C_1$-$C_6$-alkylthio, $C_1$-$C_6$-alkylsulphinyl, $C_1$-$C_6$-alkylsulphonyl, $C_1$-$C_4$-haloalkyl, $C_1$-$C_4$-haloalkoxy, nitro or cyano,

$V^2$ and $V^3$ independently of one another represent hydrogen, halogen, $C_1$-$C_6$-alkyl, $C_1$-$C_6$-alkoxy, $C_1$-$C_4$-haloalkyl or $C_1$-$C_4$-haloalkoxy,

W and Y independently of one another represent hydrogen, halogen, $C_1$-$C_6$-alkyl, $C_1$-$C_6$-haloalkyl, $C_1$-$C_6$-alkoxy, $C_1$-$C_6$-haloalkoxy, nitro or cyano,

CKE represents one of the groups

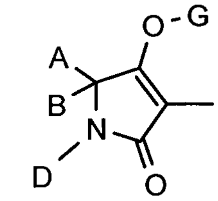 (1), 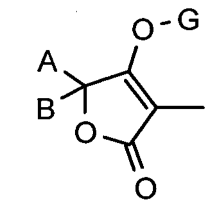 (2),

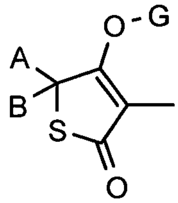 (3), 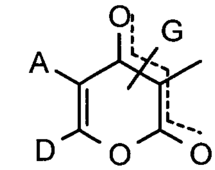 (4),

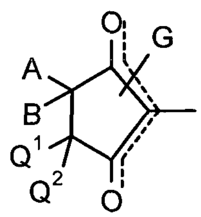 (5) or 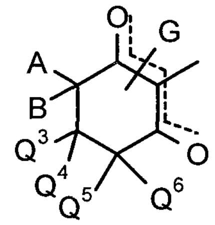 (6)

,

A represents hydrogen or in each case optionally halogen-substituted $C_1$-$C_{12}$-alkyl, $C_3$-$C_8$-alkenyl, $C_1$-$C_{10}$-alkoxy-$C_1$-$C_8$-alkyl, $C_1$-$C_{10}$-alkylthio-$C_1$-$C_6$-alkyl, optionally halogen-, $C_1$-$C_6$-alkyl- or $C_1$-$C_6$-alkoxy-substituted $C_3$-$C_8$-cycloalkyl in which optionally one or two not directly adjacent ring members are replaced by oxygen and/or sulphur or represents in each case optionally halogen-, $C_1$-$C_6$-alkyl-, $C_1$-$C_6$-haloalkyl-, $C_1$-$C_6$-alkoxy-, $C_1$-$C_6$-haloalkoxy-, cyano- or nitro-substituted phenyl or phenyl-$C_1$-$C_6$-alkyl,

B represents hydrogen, $C_1$-$C_{12}$-alkyl or $C_1$-$C_8$-alkoxy-$C_1$-$C_6$-alkyl, or

A, B and the carbon atom to which they are attached represent saturated $C_3$-$C_{10}$-cycloalkyl or unsaturated $C_5$-$C_{10}$-cycloalkyl in which optionally one ring member is replaced by oxygen or sulphur and which are optionally mono- or disubstituted by $C_1$-$C_8$-alkyl, $C_3$-$C_{10}$-cycloalkyl, $C_1$-$C_8$-haloalkyl, $C_1$-$C_8$-alkoxy, $C_1$-$C_8$-alkylthio, halogen or phenyl, or

A, B and the carbon atom to which they are attached represent $C_5$-$C_6$-cycloalkyl which is substituted by an alkylenediyl or by an alkylenedioxyl or by an alkylenedithiol group which, with the carbon atom to which it is attached, forms a further 5- to 8-membered ring and which is optionally substituted by $C_1$-$C_4$-alkyl which optionally contains one or two not directly adjacent oxygen and/or sulphur atoms, or

A, B and the carbon atom to which they are attached represent $C_3$-$C_8$-cycloalkyl or $C_5$-$C_8$-cycloalkenyl in which two substituents together with the carbon atoms to which they are attached represent in each case optionally $C_1$-$C_6$-alkyl-, $C_1$-$C_6$-alkoxy- or halogen-substituted $C_2$-$C_6$-alkanediyl, $C_2$-$C_6$-alkenediyl or $C_4$-$C_6$-alkanedienediyl in which optionally one methylene group is replaced by oxygen or sulphur,

D represents hydrogen, in each case optionally halogen-substituted $C_1$-$C_{12}$-alkyl, $C_3$-$C_8$-alkenyl, $C_3$-$C_8$-alkynyl, $C_1$-$C_{10}$-alkoxy-$C_2$-$C_8$-alkyl, optionally halogen-, $C_1$-$C_4$-alkyl-, $C_1$-$C_4$-alkoxy- or $C_1$-$C_4$-haloalkyl-substituted $C_3$-$C_8$-cycloalkyl in which optionally one ring member is replaced by oxygen or sulphur or represents in each case optionally halogen-, $C_1$-$C_6$-alkyl-, $C_1$-$C_6$-haloalkyl-, $C_1$-$C_6$-alkoxy-, $C_l$-$C_6$-haloalkoxy-, cyano- or nitro-substituted phenyl or phenyl-$C_1$-$C_6$-alkyl,

A and D together represent in each case optionally substituted $C_3$-$C_6$-alkanediyl or $C_3$-$C_6$-alkenediyl in which optionally one methylene group is replaced by a carbonyl group, by oxygen or by sulphur,

possible substituents being in each case:

halogen, hydroxyl, mercapto or in each case optionally halogen-substituted $C_1$-$C_{10}$-alkyl or $C_1$-$C_6$-alkoxy, or a further $C_3$-$C_6$-alkanediyl grouping, $C_3$-$C_6$-alkenediyl grouping or a butadienyl grouping which is optionally substituted by $C_1$-$C_6$-alkyl or in which optionally two adjacent substituents together with the carbon atoms to which they are attached form a further saturated or unsaturated cycle having 5 or 6 ring atoms (in the case of the compounds of the formula (I-1), A and D together with the atoms to which they are attached then represent, for example, the groups AD-1 to AD-10 mentioned further below), which may contain oxygen or sulphur,

A and $Q^1$ together represent $C_3$-$C_6$-alkanediyl or $C_4$-$C_6$-alkenediyl, each of which is optionally mono- or disubstituted by identical or different halogens, by $C_1$-$C_{10}$-alkyl, $C_1$-$C_6$-alkoxy, $C_1$-$C_6$-alkylthio, $C_3$-$C_7$-cycloalkyl, each of which is optionally mono- to trisubstituted by identical or different halogens, or by benzyloxy or phenyl, each of which is optionally mono- to trisubstituted by identical or different substituents from the group consisting of halogen, $C_1$-$C_6$-alkyl and $C_1$-$C_6$-alkoxy, where the $C_3$-$C_6$-alkanediyl or $C_4$-$C_6$-alkenediyl is furthermore bridged by a $C_1$-$C_2$-alkanediyl group or by an oxygen atom, or

$Q^1$ represents hydrogen or $C_1$-$C_4$-alkyl,

$Q^2$, $Q^4$, $Q^5$ and $Q^6$ independently of one another represent hydrogen or $C_1$-$C_4$-alkyl,

$Q^3$ represents hydrogen, $C_1$-$C_6$-alkyl, $C_1$-$C_6$-alkoxy-$C_1$-$C_2$-alkyl, $C_1$-$C_6$-alkylthio-$C_1$-$C_2$-alkyl, optionally halogen-, $C_1$-$C_4$-alkyl- or $C_1$-$C_4$-alkoxy-substituted $C_3$-$C_8$-cycloalkyl in which optionally one methylene group is replaced by oxygen or sulphur or represents optionally halogen-, $C_1$-$C_4$-alkyl-, $C_1$-$C_4$-alkoxy-, $C_1$-$C_2$-haloalkyl-, $C_1$-$C_2$-haloalkoxy-, cyano- or nitro-substituted phenyl, or

$Q^3$ and $Q^4$ together with the carbon atom to which they are attached represent an optionally $C_1$-$C_4$-alkyl-, $C_1$-$C_4$-alkoxy- or $C_1$-$C_2$-haloalkyl-substituted $C_3$-$C_7$-ring in which optionally one ring atom is replaced by oxygen or sulphur,

G represents hydrogen (a) or represents one of the groups

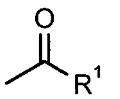 (b), 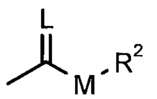 (c), 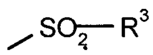 (d), 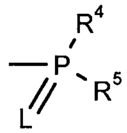 (e),

E (f) or

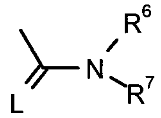 (g),

in which

E represents a metal ion equivalent or an ammonium ion,
L represents oxygen or sulphur and
M represents oxygen or sulphur,

$R^1$ represents in each case optionally halogen-substituted $C_1$-$C_{20}$-alkyl, $C_2$-$C_{20}$-alkenyl, $C_1$-$C_8$-alkoxy-$C_1$-$C_8$-alkyl, $C_1$-$C_8$-alkylthio-$C_1$-$C_8$-alkyl, poly-$C_1$-$C_8$-alkoxy-$C_1$-$C_8$-alkyl or optionally halogen-, $C_1$-$C_6$-alkyl- or $C_1$-$C_6$-alkoxy-substituted $C_3$-$C_8$-cycloalkyl in which optionally one or more not directly adjacent ring members are replaced by oxygen and/or sulphur,

represents optionally halogen-, cyano-, nitro-, $C_1$-$C_6$-alkyl-, $C_1$-$C_6$-alkoxy-, $C_1$-$C_6$-haloalkyl-, $C_1$-$C_6$-haloalkoxy-, $C_1$-$C_6$-alkylthio-or $C_1$-$C_6$-alkylsulphonyl-substituted phenyl,

represents optionally halogen-, nitro-, cyano-, $C_1$-$C_6$-alkyl-, $C_1$-$C_6$-alkoxy-, $C_1$-$C_6$-haloalkyl- or $C_1$-$C_6$-haloalkoxy-substituted phenyl-$C_1$-$C_6$-alkyl,

represents optionally halogen- or $C_1$-$C_6$-alkyl-substituted 5- or 6-membered hetaryl,

represents optionally halogen- or $C_1$-$C_6$-alkyl-substituted phenoxy- $C_1$-$C_6$-alkyl or

represents optionally halogen-, amino- or $C_1$-$C_6$-alkyl-substituted 5- or 6-membered hetaryloxy-$C_1$-$C_6$-alkyl,

$R^2$ represents in each case optionally halogen-substituted $C_1$-$C_{20}$-alkyl, $C_2$-$C_{20}$-alkenyl, $C_1$-$C_8$-alkoxy-$C_2$-$C_8$-alkyl, poly-$C_1$-$C_8$-alkoxy-$C_2$-$C_8$-alkyl,

represents optionally halogen-, $C_1$-$C_6$-alkyl-or $C_1$-$C_6$-alkoxy-substituted $C_3$-$C_8$-cycloalkyl or represents in each case optionally halogen-, cyano-, nitro-, $C_1$-$C_6$-alkyl, $C_1$-$C_6$-alkoxy-, $C_1$-$C_6$-haloalkyl- or $C_1$-$C_6$-haloalkoxy sub-

stituted phenyl or benzyl,

$R^3$ represents optionally halogen-substituted $C_1$-$C_8$-alkyl or represents in each case optionally halogen-, $C_1$-$C_6$-alkyl-, $C_1$-$C_6$-alkoxy-, $C_1$-$C_4$-haloalkyl-, $C_1$-$C_4$-haloalkoxy-, cyano- or nitro-substituted phenyl or benzyl,

$R^4$ and $R^5$ independently of one another represent in each case optionally halogen-substituted $C_1$-$C_8$-alkyl, $C_1$-$C_8$-alkoxy, $C_1$-$C_8$-alkylamino, di-($C_1$-$C_8$-alkyl) amino, $C_1$-$C_8$-alkylthio, $C_2$-$C_8$-alkenylthio, $C_3$-$C_7$-cycloalkylthio or represent in each case optionally halogen-, nitro-, cyano-, $C_1$-$C_4$-alkoxy-, $C_1$-$C_4$-haloalkoxy-, $C_1$-$C_4$-alkylthio-, $C_1$-$C_4$-haloalkylthio-, $C_1$-$C_4$-alkyl- or $C_1$-$C_4$-haloalkyl-substituted phenyl, phenoxy or phenylthio,

$R^6$ and $R^7$ independently of one another represent hydrogen, represent in each case optionally halogen-substituted $C_1$-$C_8$-alkyl, $C_3$-$C_8$-cycloalkyl, $C_1$-$C_8$-alkoxy, $C_3$-$C_8$-alkenyl, $C_1$-$C_8$-alkoxy-$C_1$-$C_8$-alkyl, represent optionally halogen-, $C_1$-$C_8$-haloalkyl-, $C_1$-$C_8$-alkyl- or $C_1$-$C_8$-alkoxy-substituted phenyl, optionally halogen-, $C_1$-$C_8$-alkyl-, $C_1$-$C_8$-haloalkyl- or $C_1$-$C_8$-alkoxy-substituted benzyl or together represent an optionally $C_1$-$C_4$-alkyl-substituted $C_3$-$C_6$-alkylene radical in which optionally one carbon atom is replaced by oxygen or sulphur.

**3.** Use of a composition according to Claim 1 for controlling insects or arachnids, which composition comprises compounds of the formula (I) in which

X represents fluorine, chlorine, bromine, $C_1$-$C_4$-alkyl, $C_2$-$C_4$-alkenyl, $C_2$-$C_4$-alkynyl, $C_1$-$C_4$-alkoxy, $C_1$-$C_4$-haloalkyl, $C_1$-$C_4$-haloalkoxy or cyano,

Z represents hydrogen, fluorine, chlorine, bromine, $C_1$-$C_4$-alkyl, $C_2$-$C_4$-alkenyl, $C_2$-$C_4$-alkynyl or represents the radical

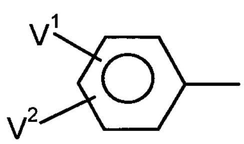

,

$V^1$ represents hydrogen, fluorine, chlorine, bromine, $C_1$-$C_6$-alkyl, $C_1$-$C_4$-alkoxy, $C_1$-$C_2$-haloalkyl, $C_1$-$C_2$-haloalkoxy, nitro or cyano,

$V^2$ represents hydrogen, fluorine, chlorine, bromine, $C_1$-$C_4$-alkyl, $C_1$-$C_4$-alkoxy, $C_1$-$C_2$-haloalkyl or $C_1$-$C_2$-haloalkoxy,

W and Y independently of one another represent hydrogen, fluorine, chlorine, bromine, $C_1$-$C_4$-alkyl, $C_1$-$C_4$-haloalkyl, $C_1$-$C_4$-alkoxy or $C_1$-$C_4$-haloalkoxy,

CKE represents one of the groups

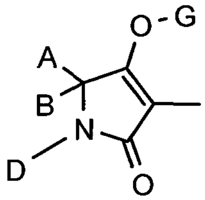 (1), 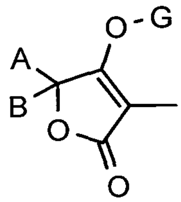 (2),

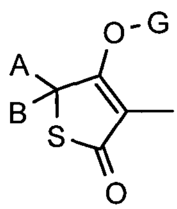 (3), 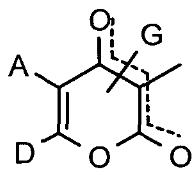 (4),

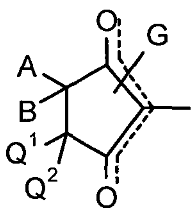 (5) or 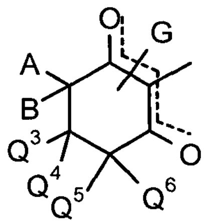 (6),

A represents hydrogen, in each case optionally fluorine- or chlorine-substituted $C_1$-$C_6$-alkyl, $C_1$-$C_4$-alkoxy-$C_1$-$C_4$-alkyl or optionally fluorine-, chlorine-, $C_1$-$C_4$-alkyl- or $C_1$-$C_4$-alkoxy-substituted $C_3$-$C_7$-cycloalkyl,

B represents hydrogen or $C_1$-$C_6$-alkyl, or

A, B and the carbon atom to which they are attached represent saturated $C_3$-$C_7$-cycloalkyl or unsaturated $C_5$-$C_7$-cycloalkyl in which optionally one ring member is replaced by oxygen or sulphur and which is optionally monosubstituted by $C_1$-$C_6$-alkyl, $C_1$-$C_3$-haloalkyl or $C_1$-$C_6$-alkoxy, or

A, B and the carbon atom to which they are attached represent $C_5$-$C_6$-cycloalkyl which is substituted by an alkylenediyl or by an alkylenedioxy or by an alkylenedithiol group which, together with the carbon atom to which it is attached, forms a further five- or six-membered ring and which is optionally substituted by methyl or ethyl and optionally contains one or two not directly adjacent oxygen or sulphur atoms,

D represents hydrogen, represents in each case optionally fluorine- or chlorine-substituted $C_1$-$C_6$-alkyl, $C_3$-$C_6$-alkenyl, $C_1$-$C_4$-alkoxy-$C_2$-$C_3$-alkyl, represents optionally $C_1$-$C_4$-alkyl-, $C_1$-$C_4$-alkoxy- or $C_1$-$C_2$-haloalkyl-substituted $C_3$-$C_7$-cycloalkyl, or

A and D together represent optionally substituted $C_3$-$C_5$-alkanediyl in which one methylene group may be replaced by oxygen or sulphur, possible substituents being $C_1$-$C_4$-alkyl, or

A and D (in the case of the compounds of the formula (I-1)) together with the atoms to which they are attached represent one of the groups AD-1 to AD-10:

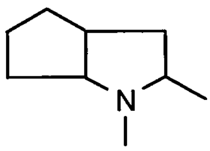

AD-1

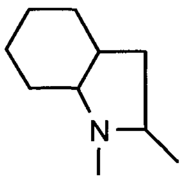

AD-2

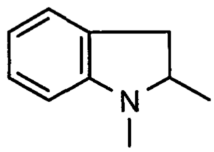

AD-3

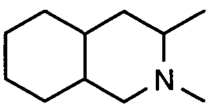

AD-4

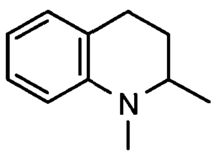

AD-5

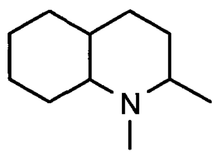

AD-6

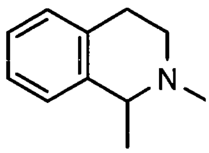

AD-7

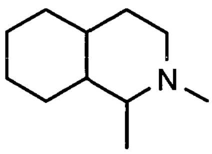

AD-8

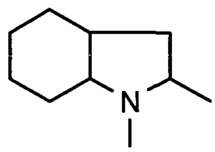

AD-9

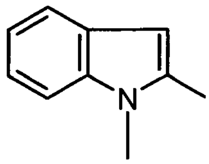

AD-10

A and $Q^1$ together represent $C_3$-$C_4$-alkanediyl or $C_3$-$C_4$-alkenediyl, each of which is optionally mono- or disubstituted by identical or different substituents from the group consisting of $C_1$-$C_4$-alkyl and $C_1$-$C_4$-alkoxy, or
$Q^1$ represents hydrogen,
$Q^2$ represents hydrogen,
$Q^4$, $Q^5$ and $Q^6$ independently of one another represent hydrogen or $C_1$-$C_2$-alkyl,
$Q^3$ represents hydrogen, $C_1$-$C_4$-alkyl, $C_1$-$C_4$-alkoxy-$C_1$-$C_2$-alkyl, $C_1$-$C_4$-alkylthio-$C_1$-$C_2$-alkyl or optionally methyl- or methoxy-substituted $C_3$-$C_6$-cycloalkyl in which optionally one methylene group is replaced by oxygen or sulphur, or
$Q^3$ and $Q^4$ together with the carbon to which they are attached represent an optionally $C_1$-$C_4$-alkyl- or $C_1$-$C_4$-alkoxy-substituted saturated $C_5$-$C_6$-ring in which optionally one ring member is replaced by oxygen or sulphur,
G represents hydrogen (a) or represents one of the groups

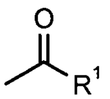 (b), 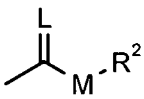 (c), 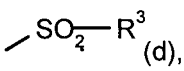 (d), 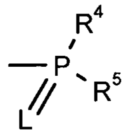 (e),

E (f) or

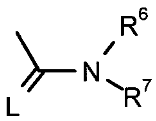 (g),

in which
E represents a metal ion equivalent or an ammonium ion,,
L represents oxygen or sulphur and
M represents oxygen or sulphur,

$R^1$ represents in each case optionally fluorine-or chlorine-substituted $C_1$-$C_{16}$-alkyl, $C_2$-$C_{16}$-alkenyl, $C_1$-$C_6$-alkoxy-$C_1$-$C_4$-alkyl, $C_1$-$C_6$-alkylthio-$C_1$-$C_6$-alkyl or optionally fluorine-, chlorine-, $C_1$-$C_4$-alkyl- or $C_1$-$C_4$-alkoxy-substituted $C_3$-$C_7$-cycloalkyl in which optionally one or two not directly adjacent ring members are replaced by oxygen and/or sulphur,
represents optionally fluorine-, chlorine-, bromine-, cyano-, nitro-, $C_1$-$C_4$-alkyl-, $C_1$-$C_4$-alkoxy-, $C_1$-$C_3$-haloalkyl- or $C_1$-$C_3$-haloalkoxy-substituted phenyl,
$R^2$ represents in each case optionally fluorine-substituted $C_1$-$C_{16}$-alkyl, $C_2$-$C_{16}$-alkenyl or $C_1$-$C_6$-alkoxy-$C_2$-$C_6$-alkyl,
represents optionally fluorine-, chlorine-, $C_1$-$C_4$-alkyl- or $C_1$-$C_4$-alkoxy-substituted $C_3$-$C_7$-cycloalkyl,
represents in each case optionally fluorine-, chlorine-, bromine-, cyano-, nitro-, $C_1$-$C_4$-alkyl- $C_1$-$C_3$-alkoxy-, $C_1$-$C_3$-haloalkyl- or $C_1$-$C_3$-haloalkoxy-substituted phenyl or benzyl,
$R^3$ represents optionally fluorine-substituted $C_1$-$C_6$-alkyl or represents optionally fluorine-, chlorine-, bromine-, $C_1$-$C_4$-alkyl-, $C_1$-$C_4$-alkoxy-, $C_1$-$C_3$-haloalkyl-, $C_1$-$C_3$-haloalkoxy-, cyano- or nitro-substituted phenyl,
$R^4$ represents $C_1$-$C_6$-alkyl, $C_1$-$C_6$-alkoxy, $C_1$-$C_6$-alkylamino, di-($C_1$-$C_6$-alkyl) amino, $C_1$-$C_6$-alkylthio, $C_3$-$C_4$-alkenylthio, $C_3$-$C_6$-cycloalkylthio or represents in each case optionally fluorine-, chlorine-, bromine-, nitro-, cyano-, $C_1$-$C_3$-alkoxy-, $C_1$-$C_3$-haloalkoxy-, $C_1$-$C_3$-alkylthio-, $C_1$-$C_3$-haloalkylthio-, $C_1$-$C_3$-alkyl- or $C_1$-$C_3$-haloalkyl-sub-

stituted phenyl, phenoxy or phenylthio,

$R^5$ represents $C_1$-$C_6$-alkoxy or $C_1$-$C_6$-alkylthio,

$R^6$ represents hydrogen, $C_1$-$C_6$-alkyl, $C_3$-$C_6$-cycloalkyl, $C_1$-$C_6$-alkoxy, $C_3$-$C_6$-alkenyl, $C_1$-$C_6$-alkoxy-$C_1$-$C_4$-alkyl, represents optionally fluorine-, chlorine-, bromine-, $C_1$-$C_3$-haloalkyl-, $C_1$-$C_4$-alkyl- or $C_1$-$C_4$-alkoxy-substituted phenyl, represents optionally fluorine-, chlorine-, bromine-, $C_1$-$C_4$-alkyl-, $C_1$-$C_3$-haloalkyl- or $C_1$-$C_4$-alkoxy-substituted benzyl,

$R^7$ represents $C_1$-$C_6$-alkyl, $C_3$-$C_6$-alkenyl or $C_1$-$C_6$-alkoxy-$C_1$-$C_4$-alkyl, or

$R^6$ and $R^7$ together represent an optionally methyl-or ethyl-substituted $C_4$-$C_5$-alkylene radical in which optionally one methylene group is replaced by oxygen or sulphur.

**4.** Use of a composition according to Claim 1 for controlling insects and/or arachnids, which composition comprises compounds of the formula (I) in which

W represents hydrogen, chlorine, bromine, methyl, ethyl or methoxy,

X represents chlorine, bromine, methyl, ethyl, methoxy, ethoxy or trifluoromethyl,

Y represents hydrogen, chlorine, bromine, methyl, ethyl, propyl or trifluoromethyl,

Z represents hydrogen, chlorine, bromine, methyl or represents the radical

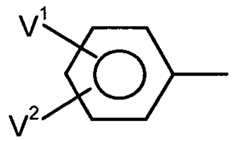 ,

$V^1$ represents hydrogen, fluorine, chlorine, methyl, ethyl, methoxy, trifluoromethyl or trifluoromethoxy,

$V^2$ represents hydrogen, fluorine, chlorine or methyl,

CKE represents one of the groups

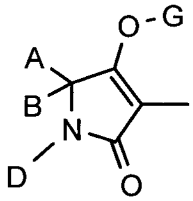 (1), 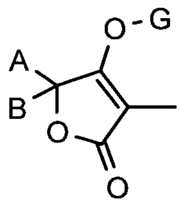 (2),

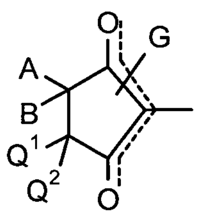 (5) or 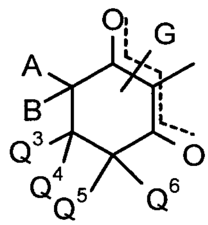 (6) ,

A represents hydrogen, in each case optionally fluorine-substituted $C_1$-$C_4$-alkyl, $C_1$-$C_2$-alkoxy-$C_1$-$C_2$-alkyl or $C_3$-$C_6$-cycloalkyl,

B represents hydrogen or methyl, or

A, B and the carbon atom to which they are attached represent saturated $C_5$-$C_6$-cycloalkyl in which optionally one ring member is replaced by oxygen or sulphur and which is optionally monosubstituted by methyl, ethyl, propyl, trifluoromethyl, methoxy, ethoxy, propoxy, butoxy or isobutoxy, or

A, B and the carbon atom to which they are attached represent $C_5$-$C_6$-cycloalkyl which is substituted by an alkylenedioxyl group which contains two not directly adjacent oxygen atoms and which, together with the carbon to which they are attached, form a further five-or six-membered ring,

D represents hydrogen, $C_1$-$C_4$-alkyl, $C_3$-$C_4$-alkenyl, $C_1$-$C_2$-alkoxy-$C_2$-$C_3$-alkyl or $C_3$-$C_6$-cycloalkyl,

or

A and D together represent optionally substituted $C_3$-$C_5$-alkanediyl in which optionally one carbon atom is replaced by oxygen or sulphur,

A and D (in the case of the compounds of the formula (I-1)) together with the atoms to which they are attached represent the group:

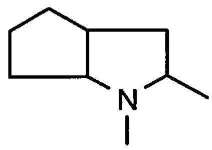

,

AD-1

A and $Q^1$ together represent $C_3$-$C_4$-alkanediyl which is optionally mono- or disubstituted by methyl or methoxy, or

$Q^1$ represents hydrogen,

$Q^2$ represents hydrogen,

$Q^4$, $Q^5$ and $Q^6$ independently of one another represent hydrogen or methyl,

$Q^3$ represents hydrogen, methyl, ethyl or $C_3$-$C_6$-cycloalkyl, or

$Q^3$ and $Q^4$ together with the carbon to which they are attached represent a saturated $C_5$-$C_6$-ring which is optionally substituted by methyl or methoxy and in which optionally one ring member is replaced by oxygen,

G represents hydrogen (a) or represents one of the groups

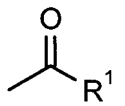 (b) or 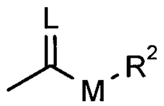 (c) ,

in which

E represents a metal ion equivalent or an ammonium ion,
L represents oxygen and
M represents oxygen or sulphur,

$R^1$ represents in each case optionally fluorine-or chlorine-substituted $C_1$-$C_{10}$-alkyl, $C_2$-$C_{10}$-alkenyl, $C_1$-$C_4$-alkoxy-$C_1$-$C_2$-alkyl, $C_1$-$C_4$-alkylthio-$C_1$-$C_2$-alkyl or optionally fluorine-, chlorine-, methyl-, ethyl- or methoxy-substituted $C_3$-$C_6$-cycloalkyl,

represents optionally fluorine-, chlorine-, bromine-, cyano-, nitro-, methyl-, methoxy-, trifluoromethyl- or trifluoromethoxy-substituted phenyl,

$R^2$ represents in each case optionally fluorine-substituted $C_1$-$C_{10}$-alkyl, $C_2$-$C_{10}$-alkenyl or $C_1$-$C_4$-alkoxy-$C_2$-$C_4$-alkyl or

represents $C_3$-$C_6$-cycloalkyl,

or represents in each case optionally fluorine-, chlorine-, cyano-, nitro-, methyl-, methoxy-, trifluoromethyl- or trifluoromethoxy- substituted phenyl or benzyl.

**5.** Use of a composition according to Claim 1 for controlling insects and/or arachnids, which composition comprises compounds of the formula (I), in which

W represents hydrogen, methyl, ethyl, chlorine or bromine,
X represents chlorine, bromine, methyl, ethyl or methoxy,
Y represents hydrogen, chlorine, bromine, methyl or ethyl,
Z represents hydrogen, chlorine, bromine, methyl, or represents the radical

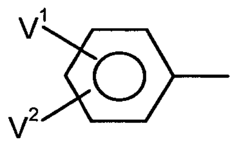

,

which is located in the para-position to the substituent X,
$V^1$ represents fluorine, chlorine, or trifluoromethyl,
$V^2$ represents hydrogen, fluorine or chlorine,
CKE represents one of the groups

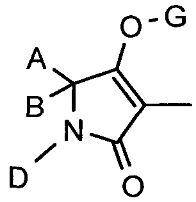

(1) or

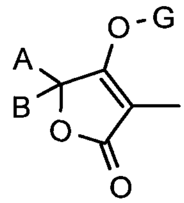

(2) ,

A, B and the carbon atom to which they are attached represent unsaturated $C_5$-$C_6$-cycloalkyl in which optionally one ring member is replaced by oxygen and which is optionally monosubstituted by methyl, methoxy, ethoxy, propoxy or trifluoromethyl,
D represents hydrogen,
G represents hydrogen (a) or represents one of the groups

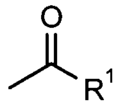

(b) or

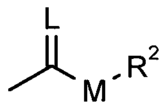

(c)

,

in which

L represents oxygen and
M represents oxygen or sulphur,

$R^1$ represents $C_1$-$C_6$-alkyl, $C_2$-$C_6$-alkenyl, $C_1$-$C_2$-alkoxy-$C_1$-alkyl, $C_1$-$C_2$-alkylthio-$C_1$-alkyl or represents cyclopropyl or cyclohexyl, each of which is optionally monosubstituted by fluorine, chlorine, methyl or methoxy, represents phenyl which is optionally monosubstituted by fluorine, chlorine, bromine, cyano, nitro, methyl, methoxy, trifluoromethyl or trifluoromethoxy,
$R^2$ represents phenyl or benzyl, $C_1$-$C_8$-alkyl, $C_2$-$C_6$-alkenyl or $C_1$-$C_4$-alkoxy-$C_2$-$C_3$-alkyl, each of which is optionally mono- to trisubstituted by fluorine.

**6.** Use of a composition according to Claim 1 for controlling insects and/or arachnids, which composition comprises compounds of the formula (I) in which

W represents hydrogen or methyl,
X represents chlorine, bromine, methyl or ethyl,
Y represents hydrogen, chlorine, bromine or methyl,
Z represents hydrogen, chlorine, bromine or methyl,
CKE represents the group

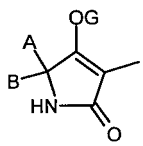

(1),

A, B and the carbon atom to which they are attached represent saturated $C_6$-cycloalkyl in which optionally one ring member is replaced by oxygen and which is optionally monosubstituted by methyl, trifluoromethyl, methoxy, ethoxy or propoxy,
G represents hydrogen (a) or represents one of the groups

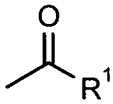 (b) or 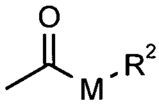 (c),

in which
M represents oxygen or sulphur,
$R^1$ represents $C_1$-$C_6$-alkyl, $C_2$-$C_4$-alkenyl, methoxymethyl, ethoxymethyl, ethylthiomethyl, cyclopropyl, cyclopentyl, cyclohexyl or
represents phenyl which is optionally monosubstituted by fluorine, chlorine, bromine, methyl, methoxy, trifluoromethyl, trifluoromethoxy, cyano or nitro,
$R^2$ represents $C_1$-$C_6$-alkyl, $C_2$-$C_4$-alkenyl, methoxyethyl, ethoxyethyl, phenyl or benzyl.

**7.** Use of a composition according to Claim 1 for controlling insects and/or arachnids, which composition comprises compounds of the formula (I-1'),

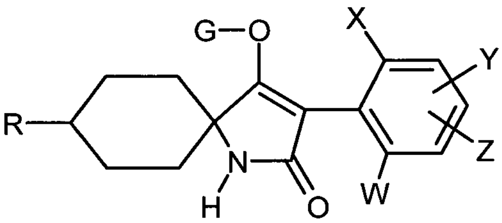 (I-1')

in which the radicals are as defined below:

| W | X | Y | Z | R | G |
|---|---|---|---|---|---|
| $CH_3$ | $C_2H_5$ | 4-Br | H | $OCH_3$ | H |
| H | Br | H | 5-$CH_3$ | $OCH_3$ | CO-i-$C_3H_7$ |
| H | Br | H | 5-$CH_3$ | $OCH_3$ | $CO_2$-$C_2H_5$ |
| H | $CH_3$ | H | 5-$CH_3$ | $OCH_3$ | H |
| H | $CH_3$ | H | 5-$CH_3$ | $OCH_3$ | $CO_2$-$C_2H_5$ |
| $CH_3$ | $CH_3$ | H | 3-Br | $OCH_3$ | H |
| $CH_3$ | $CH_3$ | H | 3-Cl | $OCH_3$ | H |
| H | Br | 4-$CH_3$ | 5-$CH_3$ | $OCH_3$ | CO-i-$C_3H_7$ |
| H | $CH_3$ | 4-Cl | 5-$CH_3$ | $OCH_3$ | $CO_2$-$C_2H_5$ |
| $CH_3$ | $CH_3$ | 4-$CH_3$ | 3-$CH_3$ | $OCH_3$ | H |
| $CH_3$ | $CH_3$ | H | 3-Br | $OC_2H_5$ | CO-i-$C_3H_7$ |
| H | $CH_3$ | 4-$CH_3$ | 5-$CH_3$ | $OC_2H_5$ | CO-n-$C_3H_7$ |
| H | $CH_3$ | 4-$CH_3$ | 5-$CH_3$ | $OC_2H_5$ | CO-i-$C_3H_7$ |
| H | $CH_3$ | 4-$CH_3$ | 5-$CH_3$ | $OC_2H_5$ | CO-c-$C_3H_5$ |

**8.** Use of a composition according to Claim 1 for controlling insects and/or arachnids, where the crop plant compatibility-improving compound is selected from the following group of compounds:

cloquintocet-mexyl, isoxadifen-ethyl, mefenpyr-diethyl, dichlormid, furilazole, fenclorim or the compound

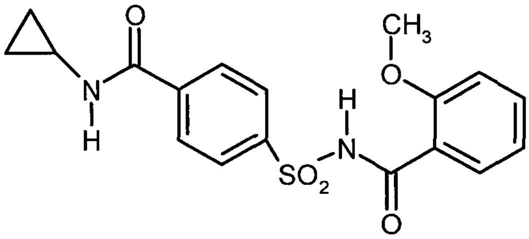

.

**9.** Method for controlling insects and/or acarids, **characterized in that** compositions as defined in Claim 1 are allowed to act on insects and/or arachnids and/or their habitat.

**10.** Compositions, comprising an effective amount of an active compound combination comprising

(a) at least one compound of the formula (I-1')

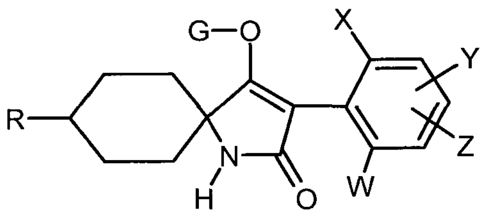

(I-1')

in which the substituents W, X, Y, Z, R and G are as defined below

| W | X | Y | Z | R | G |
|---|---|---|---|---|---|
| $CH_3$ | $C_2H_5$ | 4-Br | H | $OCH_3$ | H |
| H | Br | H | 5-$CH_3$ | $OCH_3$ | CO-i-$C_3H_7$ |
| H | Br | H | 5-$CH_3$ | $OCH_3$ | $CO_2$-$C_2H_5$ |
| H | $CH_3$ | H | 5-$CH_3$ | $OCH_3$ | H |
| H | $CH_3$ | H | 5-$CH_3$ | $OCH_3$ | $CO_2$-$C_2H_5$ |
| $CH_3$ | $CH_3$ | H | 3-Br | $OCH_3$ | H |
| $CH_3$ | $CH_3$ | H | 3-Cl | $OCH_3$ | H |
| H | Br | 4-$CH_3$ | 5-$CH_3$ | $OCH_3$ | CO-i-$C_3H_7$ |
| H | $CH_3$ | 4-Cl | 5-$CH_3$ | $OCH_3$ | $CO_2$-$C_2H_5$ |
| $CH_3$ | $CH_3$ | 4-$CH_3$ | 3-$CH_3$ | $OCH_3$ | H |
| $CH_3$ | $CH_3$ | H | 3-Br | $OC_2H_5$ | CO-i-$C_3H_7$ |
| H | $CH_3$ | 4-$CH_3$ | 5-$CH_3$ | $OC_2H_5$ | CO-n-$C_3H_7$ |
| H | $CH_3$ | 4-$CH_3$ | 5-$CH_3$ | $OC_2H_5$ | CO-i-$C_3H_7$ |
| H | $CH_3$ | 4-$CH_3$ | 5-$CH_3$ | $OC_2H_5$ | CO-c-$C_3H_5$ |

and
(b) at least one crop plant compatibility-improving compound according to Claim 1.

**11.** Composition according to Claim 10, which comprises the compound of the formula (I-1'-5)

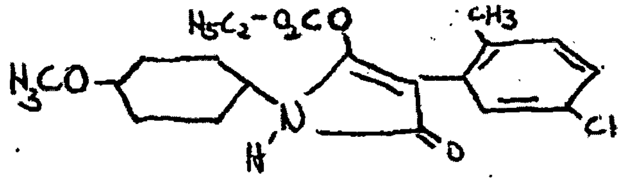

(I-1'-5).

## Revendications

**1.** Utilisation d'un agent contenant une teneur active en une combinaison de substances actives comprenant

(a) au moins un cétoénol cyclique, substitué, de formule (I)

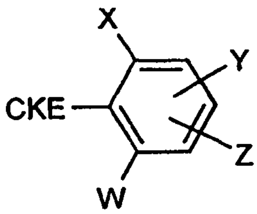

(I)

dans laquelle

X représente halogène, alkyle, alcényle, alcynyle, alcoxy, alcényloxy, alkylthio, alkylsulfinyle, alkylsulfonyle, halogénoalkyle, halogénoalcoxy, halogénoalcényloxy, nitro ou cyano,
Z représente hydrogène, alkyle, halogène, alcényle, alcynyle ; aryle ou hétéroaryle à chaque fois le cas échéant substitué,
W et Y représentent, indépendamment l'un de l'autre, hydrogène, halogène, alkyle, alcoxy, alcényloxy, halogénoalkyle, halogénoalcoxy, halogénoalcényloxy, nitro ou cyano,
CKE représente un des groupes

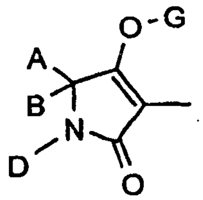

(1),

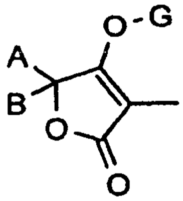

(2),

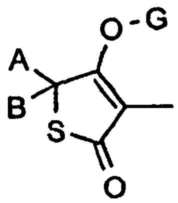

(3),

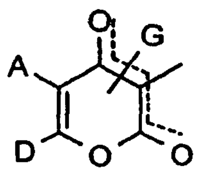

(4)

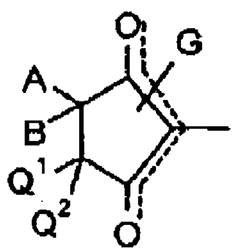

(5) où

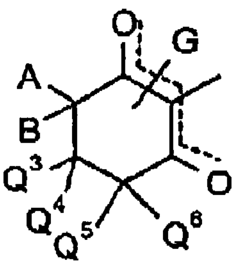

(6)

A représente hydrogène ; alkyle, alcényle, alcoxyalkyle, alkylthioalkyle à chaque fois le cas échéant substitué par halogène ; ou cycloalkyle saturé ou insaturé, le cas échéant substitué, dans lequel le cas échéant au moins un atome de cycle est remplacé par un hétéroatome ; ou aryle, arylalkyle ou hétaryle à chaque fois le cas échéant substitué par halogène, alkyle, halogénoalkyle, alcoxy, halogénoalcoxy, cyano ou nitro,
B représente hydrogène, alkyle ou alcoxyalkyle, ou
A et B représentent, ensemble avec l'atome de carbone auquel ils sont liés, un cycle saturé ou insaturé, non substitué ou substitué, contenant le cas échéant au moins un hétéroatome,
D représente hydrogène ou un radical le cas échéant substitué de la série alkyle, alcényle, alcynyle, alcoxyalkyle ; cycloalkyle saturé ou insaturé, dans lequel le cas échéant un ou plusieurs chaînons de cycle sont remplacés par des hétéroatomes, arylalkyle, aryle, hétarylalkyle ou hétaryle ou
A et D représentent, ensemble avec les atomes auxquels ils sont liés, un cycle saturé ou insaturé et contenant le cas échéant au moins un hétéroatome, non substitué ou substitué dans la partie A,D, ou
A et $Q^1$ représentent ensemble alcanediyle ou alcènediyle, le cas échéant substitué par hydroxy ; à chaque fois le cas échéant substitué par alkyle, alcoxy, alkylthio, cycloalkyle, benzyloxy ou aryle, ou
$Q^1$ représente hydrogène ou alkyle,
$Q^2$, $Q^4$, $Q^5$ et $Q^6$ représentent, indépendamment les uns des autres, hydrogène ou alkyle,
$Q^3$ représente hydrogène, alkyle, alcoxyalkyle, alkylthioalkyle ; cycloalkyle le cas échéant substitué (dans lequel le cas échéant un groupe méthylène est remplacé par oxygène ou soufre) ou phényle le cas échéant substitué, ou
$Q^3$ et $Q^4$ représentent, ensemble avec l'atome de carbone auquel ils sont liés, un cycle saturé ou insaturé, non substitué ou substitué, contenant le cas échéant un hétéroatome,
G représente hydrogène (a) ou un des groupes

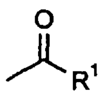 (b), 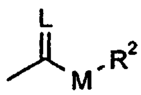 (c), 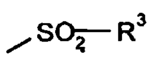 (d), 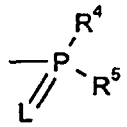 (e),

**E (f)** où

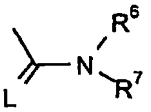 (g),

E représente un équivalent d'ion métallique ou un ion d'ammonium,
L représente oxygène ou soufre,
M représente oxygène ou soufre,
$R^1$ représente alkyle, alcényle, alcoxyalkyle, alkylthioalkyle, polyalcoxyalkyle à chaque fois le cas échéant substitué par halogène ; ou cycloalkyle le cas échéant substitué par halogène, alkyle ou alcoxy, qui peut être interrompu par au moins un hétéroatome ; phényle, phénylalkyle, hétaryle, phénoxyalkyle ou hétaryloxyalkyle à chaque fois le cas échéant substitué,
$R^2$ représente alkyle, alcényle, alcoxyalkyle, polyalcoxyalkyle à chaque fois le cas échéant substitué par halogène ; ou cycloalkyle, phényle ou benzyle à chaque fois le cas échéant substitué,
$R^3$, $R^4$ et $R^5$ représentent, indépendamment les uns des autres, alkyle, alcoxy, alkylamino, dialkylamino, alkylthio, alcénylthio, cycloalkylthio à chaque fois le cas échéant substitué par halogène ; et phényle, benzyle, phénoxy ou phénylthio à chaque fois le cas échéant substitué, et
$R^6$ et $R^7$ représentent, indépendamment l'un de l'autre, hydrogène ; alkyle, cycloalkyle, alcényle, alcoxy, alcoxyalkyle à chaque fois le cas échéant substitué par halogène ; phényle le cas échéant substitué ; benzyle le cas échéant substitué ; ou ensemble avec l'atome de N auquel ils sont liés, un cycle le cas échéant interrompu par oxygène ou soufre,
- y compris toutes les formes tautomères possibles des composés de formule générale (1) et les sels ou produits d'addition d'acide ou de base possibles des composés de formule générale (I) - et

(b) au moins un composé améliorant la tolérance des plantes de culture du groupe suivant de composés :

4-dichloroacétyl-1-oxa-4-azaspiro[4,5]-décane (AD-67, MON-4660), 1-dichloroacétylhexahydro-3,3,8a-triméthylpyrrolo[1,2-a]-pyrimidin-6(2H)-one (Dicyclonon, BAS-145138), 4-dichloroacétyl-3,4-dihydro-3-méthyl-2H-1,4-benzoxazine (Benoxacor), ester 1-méthylhexylique de l'acide 5-chloroquinoléin-8-oxyacétique (Cloquintocetmexyl), 3-(2-chlorobenzyl)-1-(1-méthyl-1-phényléthyl)-urée (Cumyluron), α-(cyanométhoximino)-phénylacétonitrile (Cyometrinil), acide 2,4-dichlorophénoxyacétique (2,4-D), acide 4-(2,4-dichlorophénoxy)-butyrique (2,4-DB), 1-(1-méthyl-1-phényléthyl)-3-(4-méthylphényl)-urée (Daimuron, Dymron), acide 3,6-dichloro-2-méthoxybenzoïque (Dicamba), ester S-1-méthyl-1-phényléthylique de l'acide pipéridine-1-thiocarboxylique (Dimepiperate), 2,2-dichloro-N-(2-oxo-2-(2-propénylamino)-éthyl)-N-(2-propényl)-acétamide (DKA-24), 2,2-dichloro-N,N-di-2-propénylacétamide (Dichlormid), 4,6-dichloro-2-phénylpyrimidine (Fenclorim), ester éthylique de l'acide 1-(2,4-dichlorophényl)-5-trichlorométhyl-1H-1,2,4-triazole-3-carboxylique (Fenchlorazoléthyl), ester phénylméthylique de l'acide 2-chloro-4-trifluorométhylthiazole-5-carboxylique (Flurazole), 4-chloro-N-(1,3-dioxolan-2-ylméthoxy)-a-trifluoroacétophénonoxime (Fluxofenim), 3-dichloroacétyl-5-(2-furannyl)-2,2-diméthyloxazolidine (Furilazole, MON-13900), 4,5-dihydro-5,5-diphényl-3-isoxazole-carboxylate d'éthyle (Isoxadifen-éthyl), 3,6-dichloro-2-méthoxybenzoate de 1-(éthoxycarbonyl)-éthyle (Lactidichlor), acide (4-chloro-o-toluyloxy)-acétique (MCPA), acide 2-(4-chloro-o-toluyloxy)-propionique (Mecoprop), 1-(2,4-dichlorophényl)-4,5-dihydro-5-méthyl-1H-pyrazole-3,5-dicarboxylate de diéthyle (Mefenpyrdiéthyl), 2-dichlorométhyl-2-méthyl-1,3-dioxolane (MG-191), 1-oxa-4-azaspiro[4,5] décane-4-carbodithioate de 2-propényle (MG-838), anhydride de l'acide 1,8-naphtalénique, α-(1,3-dioxolan-2-ylméthoximino)-phénylacétonitrile (Oxabetrinil), 2,2-dichloro-N-(1,3-dioxolan-2-ylméthyl)-N-(2-propényl)-acétamide (PPG-1292), 3-dichloroacétyl-2,2-diméthyloxazolidine (R-28725), 3-dichloroacétyl-2,2,5-triméthyloxazolidine (R-29148), acide 4-(4-chloro-o-toluyl)-butyrique, acide 4-(4-chlorophénoxy)-butyrique, acide diphénylméthoxyacétique, ester méthylique de l'acide diphénylméthoxyacétique, ester éthylique de l'acide diphénylméthoxyacétique, ester méthylique de l'acide 1-(2-chlorophényl)-5-phényl-1H-pyrazole-3-carboxylique, ester éthylique de l'acide 1-(2,4-dichlorophényl)-5-méthyl-1H-pyrazole-3-carboxylique, ester éthylique de l'acide 1-(2,4-dichlorophényl)-5-isopropyl-1H-pyrazole-3-carboxylique, ester éthylique de l'acide 1-(2,4-dichlorophényl)-5-(1,1-diméthyléthyl)-1H-pyrazole-3-carboxylique, ester éthylique de l'acide 1-(2,4-dichlorophényl)-5-phényl-1H-pyrazole-3-carboxylique, ester éthylique de l'acide 5-(2,4-dichlorobenzyl)-2-isoxazoline-3-carboxylique, ester éthylique de l'acide 5-phényl-2-isoxazoline-3-carboxylique, ester éthylique de l'acide 5-(4-fluorophényl)-5-phényl-2-isoxazoline-3-carboxylique, ester 1,3-diméthylbut-1-ylique de l'acide 5-chloroquinoléin-8-oxyacétique, ester 4-allyloxybutylique de l'acide 5-chloroquinoléin-8-oxyacétique, ester 1-allyloxyprop-2-ylique de l'acide 5-chloroquinoléin-8-oxyacétique, ester méthylique de l'acide 5-chloroquinoxalin-8-oxyacétique, ester éthylique de l'acide 5-chloroquinoléin-8-oxyacétique, ester allylique de l'acide 5-chloroquinoxalin-8-oxyacétique, ester 2-oxoprop-1-ylique de l'acide 5-chloroquinoléin-8-oxyacétique, ester diéthylique de l'acide 5-chloroquinoléin-8-oxymalonique, ester diallylique de l'acide 5-chloroquinoxalin-8-oxymalonique, ester diéthylique de l'acide 5-chloroquinoléin-8-oxymalonique, acide 4-carboxychroman-4-ylacétique (AC-304415), acide 4-chlorophénoxyacétique, 3,3'-diméthyl-4-méthoxybenzophénone, 1-bromo-4-chlorométhylsulfonylbenzène, 1-[4-(N-2-méthoxybenzoylsulfamoyl)-phényl]-3-méthylurée (alias N-(2-méthoxybenzoyl)-4-[(méthylaminocarbonyl)-amino]-benzènesulfonamide), 1-[4-(N-2-méthoxybenzoylsulfamoyl)-phényl]-3,3-diméthylurée, 1-[4-(N-4,5-diméthylbenzoylsulfamoyl)-phényl]-3-méthylurée, 1-[4-(N-naphtylsulfamoyl)-phényl]-3,3-diméthylurée, N-(2-méthoxy-5-méthylbenzoyl)-4-(cyclopropylaminocarbonyl)-benzènesulfonamide, et/ou un des composés suivants, définis par des formules générales, de formule générale (IIa)

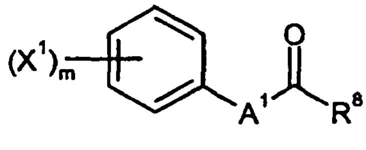

(IIa)

ou de formule générale (IIb)

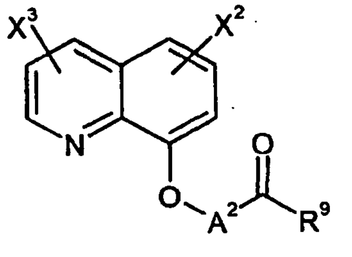

(IIb)

ou de formule (IIc)

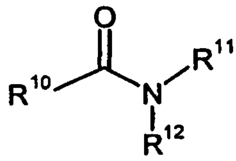

(IIc)

où

m représente le nombre 0, 1, 2, 3, 4 ou 5,

$A^1$ représente un des groupes hétérocycliques divalents esquissés ci-après,

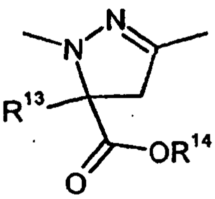
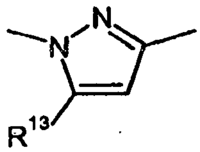
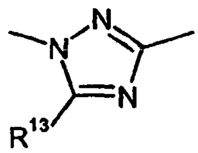
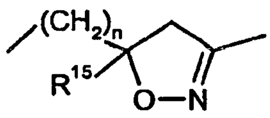

n représente le nombre 0, 1, 2, 3, 4 ou 5,

$A^2$ représente alcanediyle, comprenant 1 ou 2 atomes de carbone, le cas échéant substitué par $C_1$-$C_4$-alkyle et/ou $C_1$-$C_4$-alcoxycarbonyle et/ou $C_1$-$C_4$-alcényloxycarbonyle,

$R^8$ représente hydroxy, mercapto, amino, $C_1$-$C_6$-alcoxy, $C_1$-$C_6$-alkylthio, $C_1$-$C_6$-alkylamino ou di-($C_1$-$C_4$-alkyl)-amino,

$R^9$ représente hydroxy, mercapto, amino, $C_1$-$C_7$-alcoxy, $C_1$-$C_6$-alcényloxy, $C_1$-$C_6$-alcényloxy-$C_1$-$C_6$-alcoxy, $C_1$-$C_6$-alkylthio, $C_1$-$C_6$-alkylamino ou di-($C_1$-$C_4$-alkyl)-amino,

$R^{10}$ représente $C_1$-$C_4$-alkyle le cas échéant substitué par fluor, chlore et/ou brome,

$R^{11}$ représente hydrogène ; $C_1$-$C_6$-alkyle, $C_2$-$C_6$-alcényle ou $C_2$-$C_6$-alcynyle à chaque fois le cas échéant substitué par fluor, chlore et/ou brome ; $C_1$-$C_4$-alcoxy-$C_1$-$C_4$-alkyle, dioxolanyl-$C_1$-$C_4$-alkyle, furyle, furyl-$C_1$-$C_4$-alkyle, thiényle, thiazolyle, pipéridinyle ; ou phényle le cas échéant substitué par fluor, chlore et/ou brome ou par $C_1$-$C_4$-alkyle,

$R^{12}$ représente hydrogène ; $C_1$-$C_6$-alkyle, $C_2$-$C_6$-alcényle ou $C_2$-$C_6$-alcynyle à chaque fois le cas échéant substitué par fluor, chlore et/ou brome ; $C_1$-$C_4$-alcoxy-$C_1$-$C_4$-alkyle, dioxolanyl-$C_1$-$C_4$-alkyle, furyle, furyl-$C_1$-$C_4$-alkyle, thiényle, thiazolyle, pipéridinyle ; ou phényle le cas échéant substitué par fluor, chlore et/ou brome ou par $C_1$-$C_4$-alkyle, ou

$R^{11}$ et $R^{12}$ représentent également, ensemble, $C_3$-$C_6$-alcanediyle ou $C_2$-$C_5$-oxaalcanediyle à chaque fois le cas échéant substitué par $C_1$-$C_4$-alkyle, phényle, furyle, un cycle benzène annelé ou par deux substituants, qui forment, ensemble avec l'atome de carbone auquel ils sont liés, un carbocycle de 5 ou 6 chaînons,

$R^{13}$ représente hydrogène, cyano, halogène ; ou $C_1$-$C_4$-alkyle, $C_3$-$C_6$-cycloalkyle ou phényle à chaque fois le cas échéant substitué par fluor, chlore et/ou brome,

$R^{14}$ représente hydrogène ; $C_1$-$C_6$-alkyle, $C_3$-$C_6$-cycloalkyle ou tri-($C_1$-$C_4$-alkyl)-silyle le cas échéant substitué par hydroxy, cyano, halogène ou $C_1$-$C_4$-alcoxy,

$R^{15}$ représente hydrogène, cyano, halogène ; ou $C_1$-$C_4$-alkyle, $C_3$-$C_6$-cycloalkyle ou phényle à chaque fois le cas échéant substitué par fluor, chlore et/ou brome,

$X^1$ représente nitro, cyano, halogène, $C_1$-$C_4$-alkyle, $C_1$-$C_4$-halogénoalkyle, $C_1$-$C_4$-alcoxy ou $C_1$-$C_4$-halogénoalcoxy,

$X^2$ représente hydrogène, cyano, nitro, halogène, $C_1$-$C_4$-alkyle, $C_1$-$C_4$-halogénoalkyle, $C_1$-$C_4$-alcoxy ou $C_1$-$C_4$-halogénoalcoxy,

$X^3$ représente hydrogène, cyano, nitro, halogène, $C_1$-$C_4$-alkyle, $C_1$-$C_4$-halogénoalkyle, $C_1$-$C_4$-alcoxy ou $C_1$-$C_4$-halogénoalcoxy,

et/ou les composés suivants, définis par des formules générales, de formule générale (IId)

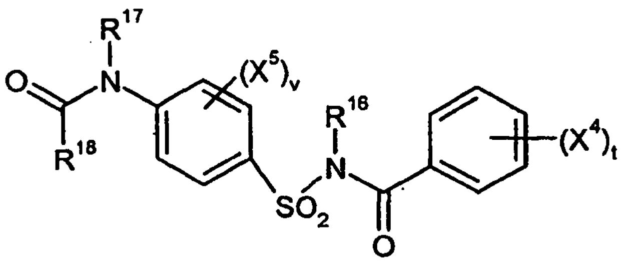

(IId)

ou de formule générale (IIe)

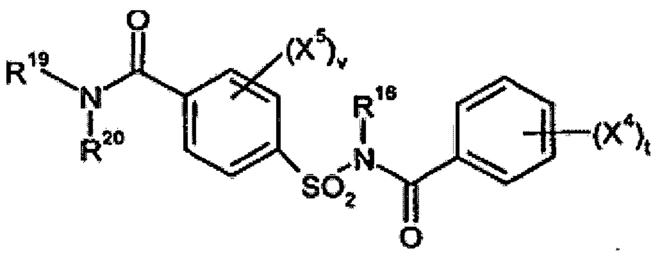

(IIe)

où

t représente le nombre 0, 1, 2, 3, 4 ou 5,
v représente le nombre 0, 1, 2, 3, 4 ou 5,
$R^{16}$ représente hydrogène ou $C_1$-$C_4$-alkyle,
$R^{17}$ représente hydrogène ou $C_1$-$C_4$-alkyle,
$R^{18}$ représente hydrogène ; $C_1$-$C_6$-alkyle, $C_1$-$C_6$-alcoxy, $C_1$-$C_6$-alkylthio, $C_1$-$C_6$-alkylamino ou di-($C_1$-$C_4$-alkyl)-amino à chaque fois le cas échéant substitué par cyano, halogène ou $C_1$-$C_4$-alcoxy ; ou $C_3$-$C_6$-cycloalkyle, $C_3$-$C_6$-cycloalkyloxy, $C_3$-$C_6$-cycloalkylthio ou $C_3$-$C_6$-cycloalkylamino à chaque fois le cas échéant substitué par cyano, halogène ou $C_1$-$C_4$-alkyle,
$R^{19}$ représente hydrogène ; $C_1$-$C_6$-alkyle le cas échéant substitué par cyano, hydroxy, halogène ou $C_1$-$C_4$-alcoxy ; $C_3$-$C_6$-alcényle ou $C_3$-$C_6$-alcynyle à chaque fois le cas échéant substitué par cyano ou halogène ; ou $C_3$-$C_6$-cycloalkyle le cas échéant substitué par cyano, halogène ou $C_1$-$C_4$-alkyle,
$R^{20}$ représente hydrogène ; $C_1$-$C_6$-alkyle le cas échéant substitué par cyano, hydroxy, halogène ou $C_1$-$C_4$-alcoxy ; $C_3$-$C_6$-alcényle ou $C_3$-$C_6$-alcynyle à chaque fois le cas échéant substitué par cyano ou halogène ; $C_3$-$C_6$-cycloalkyle le cas échéant substitué par cyano, halogène ou $C_1$-$C_4$-alkyle ; ou phényle le cas échéant substitué par nitro, cyano, halogène, $C_1$-$C_4$-alkyle, $C_1$-$C_4$-halogénoalkyle, $C_1$-$C_4$-alcoxy ou $C_1$-$C_4$-halogénoalcoxy ; ou, ensemble avec $R^{19}$, $C_2$-$C_6$-alcanediyle ou $C_2$-$C_5$-oxaalcanediyle à chaque fois le cas échéant substitué par $C_1$-$C_4$-alkyle,
$X^4$ représente nitro, cyano, carboxy, carbamoyle, formyle, sulfamoyle, hydroxy, amino, halogène, $C_1$-$C_4$-alkyle, $C_1$-$C_4$-halogénoalkyle, $C_1$-$C_4$-alcoxy ou $C_1$-$C_4$-halogénoalcoxy, et
$X^5$ représente nitro, cyano, carboxy, carbamoyle, formyle, sulfamoyle, hydroxy, amino, halogène, $C_1$-$C_4$-alkyle, $C_1$-$C_4$-halogénoalkyle, $C_1$-$C_4$-alcoxy ou $C_1$-$C_4$-halogénoalcoxy,

pour lutter contre les insectes et/ou les arachnides.

**2.** Utilisation d'un agent selon la revendication 1 pour lutter contre les insectes et/ou les arachnides, contenant des composés de formule (I) dans laquelle

X représente halogène, $C_1$-$C_6$-alkyle, $C_2$-$C_6$-alcényle, $C_2$-$C_6$-alcynyle, $C_1$-$C_6$-halogénoalkyle, $C_1$-$C_6$-alcoxy, $C_3$-$C_6$-alcényloxy, $C_1$-$C_6$-halogénoalcoxy, $C_3$-$C_6$-halogénoalcényloxy, nitro ou cyano,
Z représente hydrogène, halogène, $C_1$-$C_6$-alkyle, $C_2$-$C_6$-alcényle, $C_2$-$C_6$-alcynyle ou un des radicaux

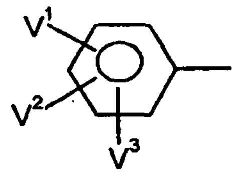 , 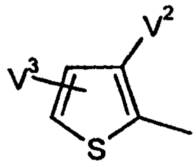 ,

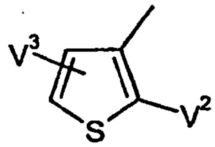

où

$V^1$ représente hydrogène, halogène, $C_1$-$C_{12}$-alkyle, $C_1$-$C_6$-alcoxy, $C_1$-$C_6$-alkylthio, $C_1$-$C_6$-alkylsulfinyle, $C_1$-$C_6$-alkylsulfonyle, $C_1$-$C_4$-halogénoalkyle, $C_1$-$C_4$-halogénoalcoxy, nitro ou cyano,

$V^2$ et $V^3$ représentent, indépendamment l'un de l'autre, hydrogène, halogène, $C_1$-$C_6$-alkyle, $C_1$-$C_6$-alcoxy, $C_1$-$C_4$-halogénoalkyle ou $C_1$-$C_4$-halogénoalcoxy,

W et Y représentent, indépendamment l'un de l'autre, hydrogène, halogène, $C_1$-$C_6$-alkyle, $C_1$-$C_6$-halogénoalkyle, $C_1$-$C_6$-alcoxy, $C_1$-$C_6$-halogénoalcoxy, nitro ou cyano,

CKE représente un des groupes

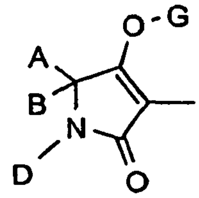 (1), 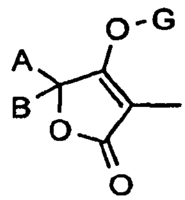 (2),

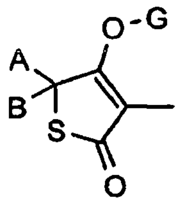 (3), 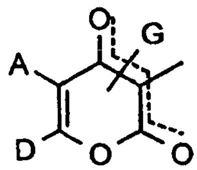 (4),

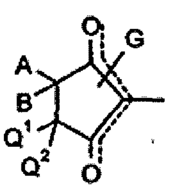 (5) ou 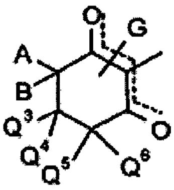 (6)

A représente hydrogène ; ou $C_1$-$C_{12}$-alkyle, $C_3$-$C_8$-alcényle, $C_1$-$C_{10}$-alcoxy-$C_1$-$C_8$-alkyle, $C_1$-$C_{10}$-alkylthio-$C_1$-$C_6$-alkyle à chaque fois le cas échéant substitué par halogène ; $C_3$-$C_8$-cycloalkyle le cas échéant substitué par halogène, $C_1$-$C_6$-alkyle ou $C_1$-$C_6$-alcoxy, dans lequel le cas échéant un ou deux chaînons de cycle non directement adjacents sont remplacés par oxygène et/ou soufre ; ou représente phényle ou phényl-$C_1$-$C_6$-alkyle à chaque fois le cas échéant substitué par halogène, $C_1$-$C_6$-alkyle, $C_1$-$C_6$-halogénoalkyle, $C_1$-$C_6$-alcoxy, $C_1$-$C_6$-halogénoalcoxy, cyano ou nitro,

B représente hydrogène, $C_1$-$C_{12}$-alkyle ou $C_1$-$C_8$-alcoxy-$C_1$-$C_6$-alkyle, ou

A, B et l'atome de carbone auquel ils sont liés représentent $C_3$-$C_{10}$-cycloalkyle saturé ou $C_5$-$C_{10}$-cycloalkyle insaturé, dans lesquels le cas échéant un chaînon de cycle est remplacé par oxygène ou soufre et qui sont le cas échéant monosubstitués ou disubstitués par $C_1$-$C_8$-alkyle, $C_3$-$C_{10}$-cycloalkyle, $C_1$-$C_8$-halogénoalkyle, $C_1$-$C_8$-alcoxy, $C_1$-$C_8$-alkylthio, halogène ou phényle, ou

A, B et l'atome de carbone auquel ils sont liés représentent $C_5$-$C_6$-cycloalkyle, qui est substitué par un groupe

alkylènediyle contenant le cas échéant un ou deux atomes d'oxygène et/ou de soufre non directement adjacents, le cas échéant substitué par $C_1$-$C_4$-alkyle ou par un groupe alkylènedioxyle ou par un groupe alkylènedithioyle, qui forme avec l'atome de carbone auquel il est lié un autre cycle de cinq à huit chaînons, ou

A, B et l'atome de carbone auquel ils sont liés représentent $C_3$-$C_8$-cycloalkyle ou $C_5$-$C_8$-cycloalcényle, dans lesquels deux substituants, ensemble avec les atomes de carbone auxquels ils sont liés, représentent $C_2$-$C_6$-alcanediyle, $C_2$-$C_6$-alcènediyle ou $C_4$-$C_6$-alcanediènediyle à chaque fois le cas échéant substitué par $C_1$-$C_6$-alkyle, $C_1$-$C_6$-alcoxy ou halogène, dans lesquels le cas échéant un groupe méthylène est remplacé par oxygène ou soufre,

D représente hydrogène ; $C_1$-$C_{12}$-alkyle, $C_3$-$C_8$-alcényle, $C_3$-$C_8$-alcynyle, $C_1$-$C_{10}$-alcoxy-$C_2$-$C_8$-alkyle à chaque fois le cas échéant substitué par halogène ; $C_3$-$C_8$-cycloalkyle le cas échéant substitué par halogène, $C_1$-$C_4$-alkyle, $C_1$-$C_4$-alcoxy ou $C_1$-$C_4$-halogénoalkyle, dans lequel le cas échéant un chaînon de cycle est remplacé par oxygène ou soufre ; ou phényle ou phényl-$C_1$-$C_6$-alkyle à chaque fois le cas échéant substitué par halogène, $C_1$-$C_6$-alkyle, $C_1$-$C_6$-halogénoalkyle, $C_1$-$C_6$-alcoxy, $C_1$-$C_6$-halogénoalcoxy, cyano ou nitro,

A et D représentent ensemble $C_3$-$C_6$-alcanediyle ou $C_3$-$C_6$-alcènediyle à chaque fois le cas échéant substitué, dans lesquels le cas échéant un groupe méthylène est remplacé par un groupe carbonyle, oxygène ou soufre et où les substituants qui entrent en considération sont :

halogène, hydroxy, mercapto ; ou $C_1$-$C_{10}$-alkyle ou $C_1$-$C_6$-alcoxy à chaque fois le cas échéant substitué par halogène ; ou un autre groupe $C_3$-$C_6$-alcanediyle, $C_3$-$C_6$-alcènediyle ou butadiényle, qui est le cas échéant substitué par $C_1$-$C_6$-alkyle ou dans lequel le cas échéant deux substituants adjacents, avec les atomes de carbone auxquels ils sont liés, forment un autre cycle saturé ou insaturé, comprenant 5 ou 6 atomes de cycle (dans le cas du composé de formule (I-1), A et D représentent alors ensemble avec les atomes auxquels ils sont liés par exemple les autres groupes mentionnés ci-dessous AD-1 à AD-10), qui peut contenir oxygène ou soufre,

A et $Q^1$ représentent ensemble $C_3$-$C_6$-alcanediyle ou $C_4$-$C_6$-alcènediyle, à chaque fois le cas échéant monosubstitué ou disubstitué, de manière identique ou différente par halogène, par $C_1$-$C_{10}$-alkyle, $C_1$-$C_6$-alcoxy, $C_1$-$C_6$-alkylthio, $C_3$-$C_7$-cycloalkyle à chaque fois le cas échéant monosubstitué à trisubstitué, de manière identique ou différente par halogène ou par benzyloxy ou phényle à chaque fois monosubstitué ou trisubstitué, de manière identique ou différente par halogène, $C_1$-$C_6$-alkyle ou $C_1$-$C_6$-alcoxy, qui est en outre ponté par un groupe $C_1$-$C_2$-alcanediyle ou par un atome d'oxygène ou

$Q^1$ représente hydrogène ou $C_1$-$C_4$-alkyle,

$Q^2$, $Q^4$, $Q^5$ et $Q^6$ représentent, indépendamment les uns des autres, hydrogène ou $C_1$-$C_4$-alkyle,

$Q^3$ représente hydrogène, $C_1$-$C_6$-alkyle, $C_1$-$C_6$-alcoxy-$C_1$-$C_2$-alkyle, $C_1$-$C_6$-alkylthio-$C_1$-$C_2$-alkyle; $C_3$-$C_8$-cycloalkyle le cas échéant substitué par halogène, $C_1$-$C_4$-alkyle ou $C_1$-$C_4$-alcoxy, dans lequel le cas échéant un groupe méthylène est remplacé par oxygène ou soufre ; ou phényle le cas échéant substitué par halogène, $C_1$-$C_4$-alkyle, $C_1$-$C_4$-alcoxy, $C_1$-$C_2$-halogénoalkyle, $C_1$-$C_2$-halogénoalcoxy, cyano ou nitro, ou

$Q^3$ et $Q^4$ représentent, ensemble avec l'atome de carbone auquel ils sont liés, un cycle en $C_3$-$C_7$ le cas échéant substitué par $C_1$-$C_4$-alkyle, $C_1$-$C_4$-alcoxy ou $C_1$-$C_2$-halogénoalkyle, dans lequel le cas échéant un chaînon de cycle est remplacé par oxygène ou soufre,

G représente hydrogène (a) ou un des groupes

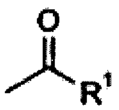 (b), 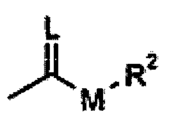 (c), 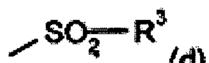 (d), 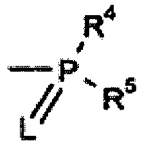 (e),

E **(f) ou**

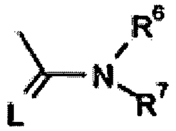 (g),

dans lesquels

E représente un équivalent d'ion métallique ou un ion d'ammonium,

L représente oxygène ou soufre, et

M représente oxygène ou soufre,

$R^1$ représente $C_1$-$C_{20}$-alkyle, $C_2$-$C_{20}$-alcényle, $C_1$-$C_8$-alcoxy-$C_1$-$C_8$-alkyle, $C_1$-$C_8$-alkylthio-$C_1$-$C_8$-alkyle, poly-$C_1$-$C_8$-alcoxy-$C_1$-$C_8$-alkyle à chaque fois le cas échéant substitué par halogène ; ou $C_3$-$C_8$-cycloalkyle le cas échéant substitué par halogène, $C_1$-$C_6$-alkyle ou $C_1$-$C_6$-alcoxy, dans lequel le cas échéant un ou plusieurs chaînons de cycle non directement adjacents sont remplacés par oxygène et/ou soufre,
représente phényle, le cas échéant substitué par halogène, cyano, nitro, $C_1$-$C_6$-alkyle, $C_1$-$C_6$-alcoxy, $C_1$-$C_6$-halogénoalkyle, $C_1$-$C_6$-halogénoalcoxy, $C_1$-$C_6$-alkylthio ou $C_1$-$C_6$-alkylsulfonyle, représente phényl-$C_1$-$C_6$-alkyle le cas échéant substitué par halogène, nitro, cyano, $C_1$-$C_6$-alkyle, $C_1$-$C_6$-alcoxy, $C_1$-$C_6$-halogénoalkyle ou $C_1$-$C_6$-halogénoalcoxy,
représente hétaryle de 5 ou 6 chaînons, le cas échéant substitué par halogène ou $C_1$-$C_6$-alkyle, représente phénoxy-$C_1$-$C_6$-alkyle le cas échéant substitué par halogène ou $C_1$-$C_6$-alkyle, ou représente hétaryloxy-$C_1$-$C_6$-alkyle de 5 ou 6 chaînons, le cas échéant substitué par halogène, amino ou $C_1$-$C_6$-alkyle,
$R^2$ représente $C_1$-$C_{20}$-alkyle, $C_2$-$C_{20}$-alcényle, $C_1$-$C_8$-alcoxy-$C_2$-$C_8$-alkyle, poly-$C_1$-$C_8$-alcoxy-$C_2$-$C_8$-alkyle à chaque fois le cas échéant substitué par halogène,
représente $C_3$-$C_8$-cycloalkyle le cas échéant substitué par halogène, $C_1$-$C_6$-alkyle ou $C_1$-$C_6$-alcoxy ou
représente phényle ou benzyle à chaque fois le cas échéant substitué par halogène, cyano, nitro, $C_1$-$C_6$-alkyle, $C_1$-$C_6$-alcoxy, $C_1$-$C_6$-halogénoalkyle ou $C_1$-$C_6$-halogénoalcoxy,
$R^3$ représente $C_1$-$C_8$-alkyle le cas échéant substitué par halogène ; ou phényle ou benzyle à chaque fois le cas échéant substitué par halogène, $C_1$-$C_6$-alkyle, $C_1$-$C_6$-alcoxy, $C_1$-$C_4$-halogénoalkyle, $C_1$-$C_4$-halogénoalcoxy, cyano ou nitro,
$R^4$ et $R^5$ représentent, indépendamment l'un de l'autre, $C_1$-$C_8$-alkyle, $C_1$-$C_8$-alcoxy, $C_1$-$C_8$-alkylamino, di-($C_1$-$C_8$-alkyl) amino, $C_1$-$C_8$-alkylthio, $C_2$-$C_8$-alcénylthio, $C_3$-$C_7$-cycloalkylthio le cas échéant à chaque fois substitué par halogène ; ou phényle, phénoxy ou phénylthio le cas échéant à chaque fois substitué par halogène, nitro, cyano, $C_1$-$C_4$-alcoxy, $C_1$-$C_4$-halogénoalcoxy, $C_1$-$C_4$-alkylthio, $C_1$-$C_4$-halogénoalkylthio, $C_1$-$C_4$-alkyle ou $C_1$-$C_4$-halogénoalkyle,
$R^6$ et $R^7$ représentent, indépendamment l'un de l'autre, hydrogène ; $C_1$-$C_8$-alkyle, $C_3$-$C_8$-cycloalkyle, $C_1$-$C_8$-alcoxy, $C_3$-$C_8$-alcényle, $C_1$-$C_8$-alcoxy-$C_1$-$C_8$-alkyle à chaque fois le cas échéant substitué par halogène ; phényle le cas échéant substitué par halogène, $C_1$-$C_8$-halogénoalkyle, $C_1$-$C_8$-alkyle ou $C_1$-$C_8$-alcoxy ; benzyle le cas échéant substitué par halogène, $C_1$-$C_8$-alkyle, $C_1$-$C_8$-halogénoalkyle ou $C_1$-$C_8$-alcoxy ; ou ensemble un radical $C_3$-$C_6$-alkylène le cas échéant substitué par $C_1$-$C_4$-alkyle, dans lequel le cas échéant un atome de carbone est remplacé par oxygène ou soufre.

3. Utilisation d'un agent selon la revendication 1 pour lutter contre les insectes ou les arachnides, contenant des composés de formule (I), dans laquelle

X représente fluor, chlore, brome, $C_1$-$C_4$-alkyle, $C_2$-$C_4$-alcényle, $C_2$-$C_4$-alcynyle, $C_1$-$C_4$-alcoxy, $C_1$-$C_4$-halogénoalkyle, $C_1$-$C_4$-halogénoalcoxy ou cyano,
Z représente hydrogène, fluor, chlore, brome, $C_1$-$C_4$-alkyle, $C_2$-$C_4$-alcényle, $C_2$-$C_4$-alcynyle ou le radical

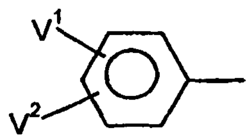

$V^1$ représente hydrogène, fluor, chlore, brome, $C_1$-$C_6$-alkyle, $C_1$-$C_4$-alcoxy, $C_1$-$C_2$-halogénoalkyle, $C_1$-$C_2$-halogénoalcoxy, nitro ou cyano,
$V^2$ représente hydrogène, fluor, chlore, brome, $C_1$-$C_4$-alkyle, $C_1$-$C_4$-alcoxy, $C_1$-$C_2$-halogénoalkyle ou $C_1$-$C_2$-halogénoalcoxy,
W et Y représentent, indépendamment l'un de l'autre, hydrogène, fluor, chlore, brome, $C_1$-$C_4$-alkyle, $C_1$-$C_4$-halogénoalkyle, $C_1$-$C_4$-alcoxy ou $C_1$-$C_4$-halogénoalcoxy,
CKE représente un des groupes

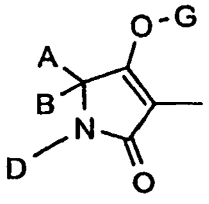 (1), 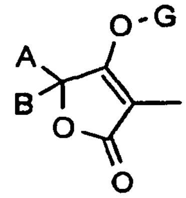 (2),

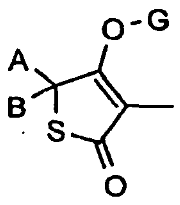 (3), 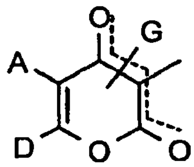 (4),

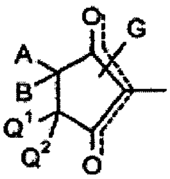 (5) ou 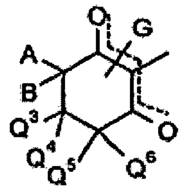 (6)

A représente hydrogène ; $C_1$-$C_6$-alkyle, $C_1$-$C_4$-alcoxy-$C_1$-$C_4$-alkyle à chaque fois le cas échéant substitué par fluor ou chlore ; ou $C_3$-$C_7$-cycloalkyle le cas échéant substitué par fluor, chlore, $C_1$-$C_4$-alkyle ou $C_1$-$C_4$-alcoxy,

B représente hydrogène ou $C_1$-$C_6$-alkyle, ou

A, B et l'atome de carbone auquel ils sont liés représentent $C_3$-$C_7$-cycloalkyle saturé ou $C_5$-$C_7$-cycloalkyle insaturé, dans lequel le cas échéant un chaînon de cycle est remplacé par oxygène ou soufre et qui est le cas échéant monosubstitué par $C_1$-$C_6$-alkyle, $C_1$-$C_3$-halogénoalkyle ou $C_1$-$C_6$-alcoxy, ou

A, B et l'atome de carbone, auquel ils sont liés, représentent $C_5$-$C_6$-cycloalkyle, qui est substitué par un groupe alkylènediyle, contenant le cas échéant un ou deux atomes d'oxygène ou de soufre non directement adjacents, le cas échéant substitué par méthyle ou éthyle ; ou par un groupe alkylènedioxyle ou alkylènedithiol, qui forme, avec l'atome de carbone auquel il est lié, un autre cycle de cinq ou six chaînons,

D représente hydrogène ; $C_1$-$C_6$-alkyle, $C_3$-$C_6$-alcényle, $C_1$-$C_4$-alcoxy-$C_2$-$C_3$-alkyle à chaque fois le cas échéant substitué par fluor ou chlore ; $C_3$-$C_7$-cycloalkyle le cas échéant substitué par $C_1$-$C_4$-alkyle, $C_1$-$C_4$-alcoxy ou $C_1$-$C_2$-halogénoalkyle, ou

A et D représentent ensemble $C_3$-$C_5$-alcanediyle le cas échéant substitué, dans lequel un groupe méthylène peut être remplacé par oxygène ou soufre et où $C_1$-$C_4$-alkyle entre en considération comme substituants,

A et D (dans le cas des composés de formule (I-1)) ensemble avec les atomes, auxquels ils sont liés, représentent un des groupes AD-1 à AD-10 :

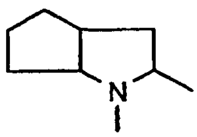 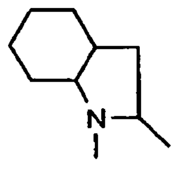 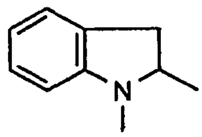

AD-1 AD-2 AD-3

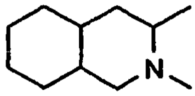 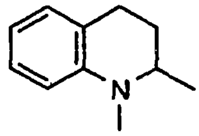 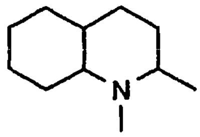

AD-4 AD-5 AD-6

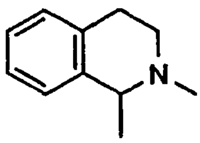 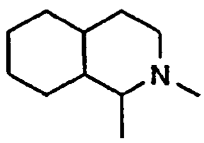 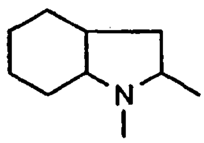

AD-7 AD-8 AD-9

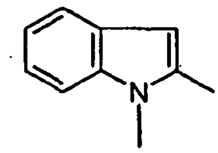

AD-10

A et $Q^1$ représentent, ensemble, $C_3$-$C_4$-alcanediyle ou $C_3$-$C_4$-alcènediyle à chaque fois le cas échéant monosubstitué ou disubstitué, de manière identique ou différente, par $C_1$-$C_4$-alkyle ou $C_1$-$C_4$-alcoxy, ou
$Q^1$ représente hydrogène,
$Q^2$ représente hydrogène,
$Q^4$, $Q^5$ et $Q^6$ représentent, indépendamment les uns des autres, hydrogène ou $C_1$-$C_2$-alkyle,
$Q^3$ représente hydrogène, $C_1$-$C_4$-alkyle, $C_1$-$C_4$-alcoxy-$C_1$-$C_2$-alkyle, $C_1$-$C_4$-alkylthio-$C_1$-$C_2$-alkyle ; ou $C_3$-$C_6$-cycloalkyle le cas échéant substitué par méthyle ou méthoxy, dans lequel le cas échéant un groupe méthylène est remplacé par oxygène ou soufre, ou
$Q^3$ et $Q^4$ représentent, ensemble avec l'atome de carbone auquel ils sont liés, un cycle en $C_5$-$C_6$ saturé, le cas échéant substitué par $C_1$-$C_4$-alkyle ou $C_1$-$C_4$-alcoxy, dans lequel le cas échéant un chaînon de cycle est remplacé par oxygène ou soufre,
G représente hydrogène (a) ou un des groupes

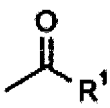 (b), 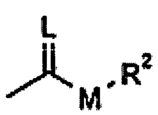 (c), 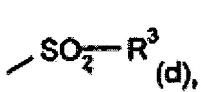 (d), 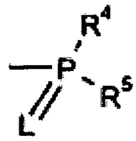 (e),

E (f) ou

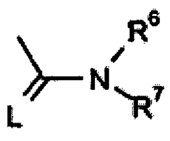 (g)

dans lesquels

E représente un équivalent d'ion métallique ou un ion d'ammonium,
L représente oxygène ou soufre, et
M représente oxygène ou soufre,

$R^1$ représente $C_1$-$C_{16}$-alkyle, $C_2$-$C_{16}$-alcényle, $C_1$-$C_6$-alcoxy-$C_1$-$C_4$-alkyle, $C_1$-$C_6$-alkylthio-$C_1$-$C_6$-alkyle à chaque fois le cas échéant substitué par fluor ou chlore ; ou $C_3$-$C_7$-cycloalkyle le cas échéant substitué par fluor, chlore, $C_1$-$C_4$-alkyle ou $C_1$-$C_4$-alcoxy, dans lequel le cas échéant un ou deux chaînons de cycle non directement adjacents sont remplacés par oxygène et/ou soufre, représente phényle le cas échéant substitué par fluor, chlore, brome, cyano, nitro, $C_1$-$C_4$-alkyle, $C_1$-$C_4$-alcoxy, $C_1$-$C_3$-halogénoalkyle ou $C_1$-$C_3$-halogénoalcoxy,
$R^2$ représente $C_1$-$C_{16}$-alkyle, $C_2$-$C_{16}$-alcényle ou $C_1$-$C_6$-alcoxy-$C_2$-$C_6$-alkyle à chaque fois le cas échéant substitué par fluor, représente $C_3$-$C_7$-cycloalkyle le cas échéant substitué par fluor, chlore, $C_1$-$C_4$-alkyle ou $C_1$-$C_4$-alcoxy,
représente phényle ou benzyle, à chaque fois le cas échéant substitué par fluor, chlore, brome, cyano, nitro, $C_1$-$C_4$-alkyle, $C_1$-$C_3$-alcoxy, $C_1$-$C_3$-halogénoalkyle ou $C_1$-$C_3$-halogénoalcoxy,
$R^3$ représente $C_1$-$C_6$-alkyle le cas échéant substitué par fluor ; ou phényle à chaque fois le cas échéant substitué par fluor, chlore, brome, $C_1$-$C_4$-alkyle, $C_1$-$C_4$-alcoxy, $C_1$-$C_3$-halogénoalkyle, $C_1$-$C_3$-halogénoalcoxy, cyano ou nitro,
$R^4$ représente $C_1$-$C_6$-alkyle, $C_1$-$C_6$-alcoxy, $C_1$-$C_6$-alkylamino, di- ($C_1$-$C_6$-alkyl) amino, $C_1$-$C_6$-alkylthio, $C_3$-$C_4$-alcénylthio, $C_3$-$C_6$-cycloalkylthio ; ou phényle, phénoxy ou phénylthio à chaque fois le cas échéant substitué par fluor, chlore, brome, nitro, cyano, $C_1$-$C_3$-alcoxy, $C_1$-$C_3$-halogénoalcoxy, $C_1$-$C_3$-alkylthio, $C_1$-$C_3$-halogénoalkylthio, $C_1$-$C_3$-alkyle ou $C_1$-$C_3$-halogénoalkyle,
$R^5$ représente $C_1$-$C_6$-alcoxy ou $C_1$-$C_6$-alkylthio,
$R^6$ représente hydrogène, $C_1$-$C_6$-alkyle, $C_3$-$C_6$-cycloalkyle, $C_1$-$C_6$-alcoxy, $C_3$-$C_6$-alcényle, $C_1$-$C_6$-alcoxy-$C_1$-$C_4$-alkyle ; phényle le cas échéant substitué par fluor, chlore, brome, $C_1$-$C_3$-halogénoalkyle, $C_1$-$C_4$-alkyle ou $C_1$-$C_4$-alcoxy ; benzyle le cas échéant substitué par fluor, chlore, brome, $C_1$-$C_4$-alkyle, $C_1$-$C_3$-halogénoalkyle, ou $C_1$-$C_4$-alcoxy,
$R^7$ représente $C_1$-$C_6$-alkyle, $C_3$-$C_6$-alcényle ou $C_1$-$C_6$-alcoxy-$C_1$-$C_4$-alkyle, ou
$R^6$ et $R^7$ représentent ensemble un radical $C_4$-$C_5$-alkylène le cas échéant substitué par méthyle ou éthyle, dans lequel le cas échéant un groupe méthylène est remplacé par oxygène ou soufre.

**4.** Utilisation d'un agent selon la revendication 1 pour lutter contre les insectes et/ou les arachnides, contenant des composés de formule (I) dans laquelle

W représente hydrogène, chlore, brome, méthyle, éthyle ou méthoxy,
X représente chlore, brome, méthyle, éthyle, méthoxy, éthoxy ou trifluorométhyle,
Y représente hydrogène, chlore, brome, méthyle, éthyle, propyle ou trifluorométhyle,
Z représente hydrogène, chlore, brome, méthyle ou le radical

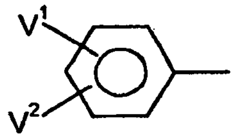

$V^1$ représente hydrogène, fluor, chlore, méthyle, éthyle, méthoxy, trifluorométhyle ou trifluorométhoxy,
$V^2$ représente hydrogène, fluor, chlore ou méthyle,
CKE représente un des groupes

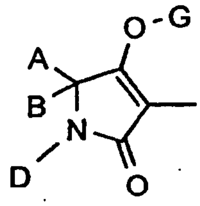 (1), 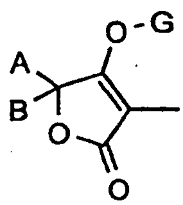 (2),

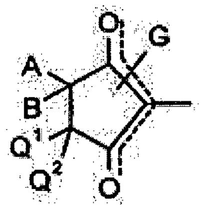 (5) ou 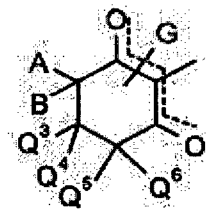 (6)

A représente hydrogène ; $C_1$-$C_4$-alkyle, $C_1$-$C_2$-alcoxy-$C_1$-$C_2$-alkyle ou $C_3$-$C_6$-cycloalkyle à chaque fois le cas échéant substitué par fluor,
B représente hydrogène ou méthyle, ou
A, B et l'atome de carbone auquel ils sont liés représentent $C_5$-$C_6$-cycloalkyle saturé, dans lequel le cas échéant un chaînon de cycle est remplacé par oxygène ou soufre et qui est le cas échéant monosubstitué par méthyle, éthyle, propyle, trifluorométhyle, méthoxy, éthoxy, propoxy, butoxy ou isobutoxy, ou
A, B et l'atome de carbone auquel ils sont liés représentent $C_5$-$C_6$-cycloalkyle, qui est substitué par un groupe alkylènedioxyle contenant deux atomes d'oxygène non directement adjacents, qui forment avec l'atome de carbone auquel ils sont liés, un autre cycle de cinq ou six chaînons,
D représente hydrogène, $C_1$-$C_4$-alkyle, $C_3$-$C_4$-alcényle, $C_1$-$C_2$-alcoxy-$C_2$-$C_3$-alkyle ou $C_3$-$C_6$-cycloalkyle, ou
A et D représentent ensemble $C_3$-$C_5$-alcanediyle le cas échéant substitué, dans lequel le cas échéant un atome de carbone est remplacé par oxygène ou soufre,
A et D (dans le cas des composés de formule (I-1)) représentent, ensemble avec les atomes auxquels ils sont liés, le groupe :

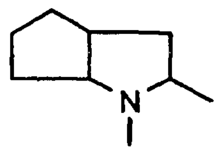

**AD-1**

A et $Q^1$ représentent, ensemble, $C_3$-$C_4$-alcanediyle le cas échéant monosubstitué ou disubstitué par méthyle ou méthoxy, ou
$Q^1$ représente hydrogène,
$Q^2$ représente hydrogène,
$Q^4$, $Q^5$ et $Q^6$ représentent, indépendamment les uns des autres, hydrogène ou méthyle,
$Q^3$ représente hydrogène, méthyle, éthyle ou $C_3$-$C_6$-cycloalkyle, ou
$Q^3$ et $Q^4$ représentent, ensemble avec l'atome de carbone auquel ils sont liés, un cycle en $C_5$-$C_6$ saturé, le cas échéant substitué par méthyle ou méthoxy, dans lequel le cas échéant un chaînon de cycle est remplacé par oxygène,
G représente hydrogène (a) ou un des groupes

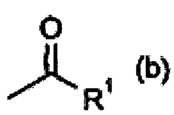 (b) ou 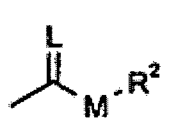 (c)

dans lesquels

E représente un équivalent d'ion métallique ou un ion d'ammonium,
L représente oxygène et
M représente oxygène ou soufre,

$R^1$ représente $C_1$-$C_{10}$-alkyle, $C_2$-$C_{10}$-alcényle, $C_1$-$C_4$-alcoxy-$C_1$-$C_2$-alkyle, $C_1$-$C_4$-alkylthio-$C_1$-$C_2$-alkyle à chaque fois le cas échéant substitué par fluor ou chlore ; ou $C_3$-$C_6$-cycloalkyle le cas échéant substitué par fluor, chlore, méthyle, éthyle ou méthoxy,
représente phényle le cas échéant substitué par fluor, chlore, brome, cyano, nitro, méthyle, méthoxy, trifluorométhyle ou trifluorométhoxy,

$R^2$ représente $C_1$-$C_{10}$-alkyle, $C_2$-$C_{10}$-alcényle ou $C_1$-$C_4$-alcoxy-$C_2$-$C_4$-alkyle à chaque fois le cas échéant substitué par fluor ou représente $C_3$-$C_6$-cycloalkyle, ou représente phényle ou benzyle à chaque fois le cas échéant substitué par fluor, chlore, cyano, nitro, méthyle, méthoxy, trifluorométhyle ou trifluorométhoxy.

**5.** Utilisation d'un agent selon la revendication 1 pour lutter contre les insectes et/ou les arachnides, contenant des composés de formule (I) dans laquelle

W représente hydrogène, méthyle, éthyle, chlore ou brome,
X représente chlore, brome, méthyle, éthyle ou méthoxy,
Y représente hydrogène, chlore, brome, méthyle ou éthyle,
Z représente hydrogène, chlore, brome, méthyle, ou le radical

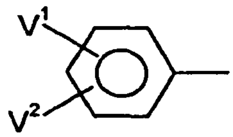

qui se trouve en position para par rapport au substituant X,

$V^1$ représente fluor, chlore ou trifluorométhyle,
$V^2$ représente hydrogène, fluor ou chlore,
CKE représente un des groupes

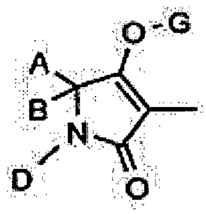 (1) ou 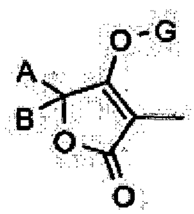 (2)

A, B et l'atome de carbone auquel ils sont liés représentent $C_5$-$C_6$-cycloalkyle insaturé, dans lequel le cas échéant un chaînon de cycle est remplacé par oxygène et qui est le cas échéant monosubstitué par méthyle, méthoxy, éthoxy, propoxy ou trifluorométhyle,
D représente hydrogène,
G représente hydrogène (a) ou un des groupes

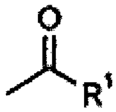 (b) ou 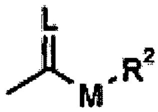 (c)

dans lesquels

L représente oxygène et
M représente oxygène ou soufre,

$R^1$ représente $C_1$-$C_6$-alkyle, $C_2$-$C_6$-alcényle, $C_1$-$C_2$-alcoxy-$C_1$-alkyle, $C_1$-$C_2$-alkylthio-$C_1$-alkyle ; ou cyclopropyle ou cyclohexyle le cas échéant monosubstitué par fluor, chlore, méthyle ou méthoxy, représente phényle le cas échéant monosubstitué par fluor, chlore, brome, cyano, nitro, méthyle, méthoxy, trifluorométhyle ou trifluorométhoxy,
$R^2$ représente $C_1$-$C_8$-alkyle, $C_2$-$C_6$-alcényle ou $C_1$-$C_4$-alcoxy-$C_2$-$C_3$-alkyle à chaque fois le cas échéant monosubstitué à trisubstitué par fluor ; phényle ou benzyle.

**6.** Utilisation d'un agent selon la revendication 1 pour lutter contre les insectes et/ou les arachnides, contenant des composés de formule (I) dans laquelle

W représente hydrogène ou méthyle,
X représente chlore, brome, méthyle ou éthyle,
Y représente hydrogène, chlore, brome ou méthyle,
Z représente hydrogène, chlore, brome ou méthyle,
CKE représente le groupe

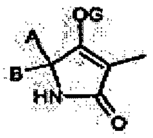 (1)

A, B et l'atome de carbone auquel ils sont liés représentent $C_6$-cycloalkyle saturé, dans lequel le cas échéant un chaînon de cycle est remplacé par oxygène et qui est le cas échéant monosubstitué par méthyle, trifluorométhyle, méthoxy, éthoxy ou propoxy,
G représente hydrogène (a) ou un des groupes

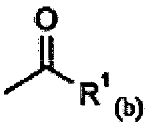 (b) ou 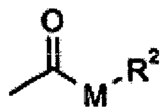 (c)

dans lesquels
M représente oxygène ou soufre,
$R^1$ représente $C_1$-$C_6$-alkyle, $C_2$-$C_4$-alcényle, méthoxyméthyle, éthoxyméthyle, éthylthiométhyle, cyclopropyle, cyclopentyle, cyclohexyle ou représente phényle le cas échéant monosubstitué par fluor, chlore, brome, méthyle, méthoxy, trifluorométhyle, trifluorométhoxy, cyano ou nitro,
$R^2$ représente $C_1$-$C_6$-alkyle, $C_2$-$C_4$-alcényle, méthoxyéthyle, éthoxyéthyle, phényle ou benzyle.

7. Utilisation d'un agent selon la revendication 1 pour lutter contre les insectes et/ou les arachnides, contenant des composés de formule (I-1')

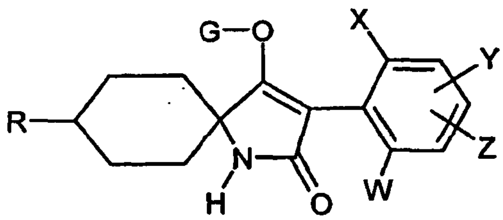 (I-1')

dans laquelle les radicaux présentent la signification suivante :

| W | X | Y | Z | R | G |
|---|---|---|---|---|---|
| $CH_3$ | $C_2H_5$ | 4-Br | H | $OCH_3$ | H |
| H | Br | H | 5-$CH_3$ | $OCH_3$ | CO-i-$C_3H_7$ |
| H | Br | H | 5-$CH_3$ | $OCH_3$ | $CO_2$-$C_2H_5$ |
| H | $CH_3$ | H | 5-$CH_3$ | $OCH_3$ | H |
| H | $CH_3$ | H | 5-$CH_3$ | $OCH_3$ | $CO_2$-$C_2H_5$ |
| $CH_3$ | $CH_3$ | H | 3-Br | $OCH_3$ | H |
| $CH_3$ | $CH_3$ | H | 3-Cl | $OCH_3$ | H |
| H | Br | 4-$CH_3$ | 5-$CH_3$ | $OCH_3$ | CO-i-$C_3H_7$ |

(suite)

| W | X | Y | Z | R | G |
|---|---|---|---|---|---|
| H | $CH_3$ | 4-Cl | 5-$CH_3$ | $OCH_3$ | $CO_2$-$C_2H_5$ |
| $CH_3$ | $CH_3$ | 4-$CH_3$ | 3-$CH_3$ | $OCH_3$ | H |
| $CH_3$ | $CH_3$ | H | 3-Br | $OC_2H_5$ | CO-i-$C_3H_7$ |
| H | $CH_3$ | 4-$CH_3$ | 5-$CH_3$ | $OC_2H_5$ | CO-n-$C_3H_7$ |
| H | $CH_3$ | 4-$CH_3$ | 5-$CH_3$ | $OC_2H_5$ | CO-i-$C_3H_7$ |
| H | $CH_3$ | 4-$CH_3$ | 5-$CH_3$ | $OC_2H_5$ | CO-c-$C_3H_5$ |

**8.** Utilisation d'un agent selon la revendication 1 pour lutter contre les insectes et/ou les arachnides, dans lequel le composé améliorant la tolérance des plantes de culture est choisi dans le groupe suivant de composés :

cloquintocet-mexyl, isoxadifen-éthyl, mefenpyrdiéthyl, dichlormide, furilazole, fenclorim ou le composé

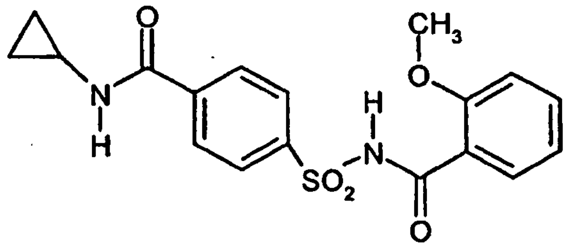

**9.** Procédé pour lutter contre les insectes et/ou les acariens, **caractérisé en ce qu'**on laisse agir un agent tel que défini dans la revendication 1 sur les insectes et/ou les arachnides et/ou leur espace de vie.

**10.** Agent contenant une teneur active en une combinaison de substances actives comprenant

(a) au moins un composé de formule (I-1')

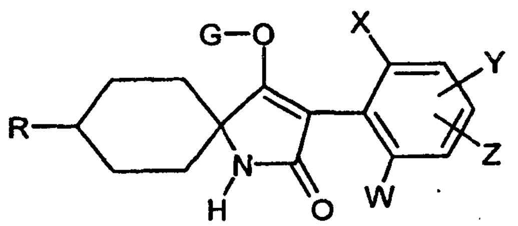

(I-1')

dans laquelle les substituants W, X, Y, Z, R et G présentent les significations indiquées ci-dessous

| W | X | Y | Z | R | G |
|---|---|---|---|---|---|
| $CH_3$ | $C_2H_5$ | 4-Br | H | $OCH_3$ | H |
| H | Br | H | 5-$CH_3$ | $OCH_3$ | CO-i-$C_3H_7$ |
| H | Br | H | 5-$CH_3$ | $OCH_3$ | $CO_2$-$C_2H_5$ |
| H | $CH_3$ | H | 5-$CH_3$ | $OCH_3$ | H |
| H | $CH_3$ | H | 5-$CH_3$ | $OCH_3$ | $CO_2$-$C_2H_5$ |
| $CH_3$ | $CH_3$ | H | 3-Br | $OCH_3$ | H |
| $CH_3$ | $CH_3$ | H | 3-Cl | $OCH_3$ | H |
| H | Br | 4-$CH_3$ | 5-$CH_3$ | $OCH_3$ | CO-i-$C_3H_7$ |

(suite)

| W | X | Y | Z | R | G |
|---|---|---|---|---|---|
| H | $CH_3$ | 4-Cl | 5-$CH_3$ | $OCH_3$ | $CO_2$-$C_2H_5$ |
| $CH_3$ | $CH_3$ | 4-$CH_3$ | 3-$CH_3$ | $OCH_3$ | H |
| $CH_3$ | $CH_3$ | H | 3-Br | $OC_2H_5$ | CO-i-$C_3H_7$ |
| H | $CH_3$ | 4-$CH_3$ | 5-$CH_3$ | $OC_2H_5$ | CO-n-$C_3H_7$ |
| H | $CH_3$ | 4-$CH_3$ | 5-$CH_3$ | $OC_2H_5$ | CO-i-$C_3H_7$ |
| H | $CH_3$ | 4-$CH_3$ | 5-$CH_3$ | $OC_2H_5$ | CO-c-$C_3H_5$ |

et

(b) au moins un composé améliorant la tolérance des plantes de culture selon la revendication 1.

**11.** Agent selon la revendication 10 contenant le composé de formule (I-1'-5).

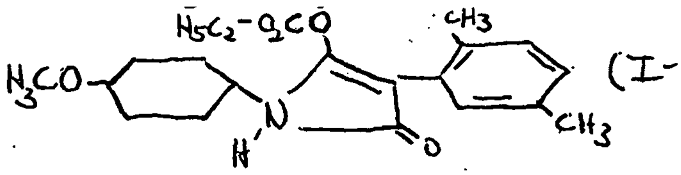

(I-1'-5).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0262399 A
- GB 2266888 A
- EP 355599 A
- EP 415211 A
- JP 12053670 B
- EP 377893 A
- EP 442077 A
- EP 442073 A
- EP 456063 A
- EP 521334 A
- EP 596298 A
- EP 613884 A
- EP 613885 A
- WO 9401997 A
- WO 9526954 A
- WO 9520572 A
- EP 0668267 A
- WO 9625395 A
- WO 9635664 A
- WO 9701535 A
- WO 9702243 A
- WO 9736868 A
- WO 9743275 A
- WO 9805638 A
- WO 9806721 A
- WO 9825928 A
- WO 9916748 A
- WO 9924437 A
- WO 9943649 A
- WO 9948869 A
- WO 9955673 A
- WO 0117972 A
- WO 0123354 A
- WO 0174770 A
- WO 03062244 A
- WO 04007448 A
- WO 04024688 A
- WO 04080962 A
- WO 04065366 A
- WO 04111042 A
- DE 10351646 A
- DE 10354628 A
- DE 10354629 A
- DE 10351647 A
- DE 4014420 A
- EP 528156 A
- EP 0647637 A
- WO 9526345 A
- WO 9620196 A
- EP 588137 A
- WO 9716436 A
- WO 9719941 A
- WO 9414785 A
- WO 9623595 A
- WO O117972 A
- US 4283348 A
- US 4338122 A
- US 4436666 A
- US 4526723 A
- US 4551547 A
- US 4632698 A
- WO 9601798 A
- WO 9603366 A
- WO 9714667 A
- WO 9839281 A
- DE 2361084 A
- US 4175135 A
- US 4256657 A
- US 4256658 A
- US 4256659 A
- US 4257858 A
- US 4303669 A
- US 4351666 A
- US 4409153 A
- US 4613617 A
- US 4659372 A
- DE 2813341 A
- WO 9216510 A
- EP 508126 A
- WO 9611574 A
- WO 9621652 A
- WO 9947525 A
- WO 0117351 A
- WO 0117352 A
- WO 0117353 A
- WO 0117973 A
- WO 03028466 A
- WO 03013249 A
- EP 86750 A
- EP 94349 A

- EP 191736 A
- EP 492366 A
- EP 174562 A
- EP 346620 A
- WO 9507897 A
- WO 9107874 A
- EP 269806 A
- EP 333131 A
- WO 9108202 A
- EP 582198 A
- EP 613618 A
- WO 0189300 A
- DE 2218097 A
- DE 2350547 A
- DE 19621522 A
- US 6235680 A
- WO 9966795 A
- US 6251827 A


**In der Beschreibung aufgeführte Nicht-Patentliteratur**


- **S. SUZUKI et al.** *Chem. Pharm. Bull.,* 1967, vol. 15, 1120
- *Liebigs Ann. Chem.,* 1985, 1095
- **CAMPBELL et al.** *J. Chem. Soc., Perkin Trans.,* 1985, vol. 1 (8), 1567-76
- **A.M. CHIRAZI ; T. KAPPE ; E. ZIEGLER.** *Arch. Pharm.,* 1976, vol. 309, 558
- **K.-H. BOLTZE ; K. HEIDENBLUTH.** *Chem. Ber.,* vol. 91, 2849
- **E. ZIEGLER ; E. STEINER.** *Monatsh.,* 1964, vol. 95, 147
- **R. KETCHAM ; T. KAPPE ; E. ZIEGLER.** *J. Heterocycl. Chem.,* 1973, vol. 10, 223
- **MICKLEFIELD et al.** *Tetrahedron,* 1992, 7519-26
- **EDWARDS et al.** *J. Chem. Soc. S,* 1967, 405-9
- *J. Economic Entomology,* 1973, vol. 66, 584
- **WHEELER, T.N.** *J. Org. Chem.,* 1979, vol. 44, 4906
- **COLBY, S.R.** Calculating Synergistic and Antagonistic Responses of Herbicide Combinations. *Weeds,* 1967, vol. 15, 20-22